# EUROPEAN PATENT SPECIFICATION

(11) **EP 3 869 841 B1**
(45) Date of publication and mention of the grant of the patent: **23.07.2025**
(21) Application number: 19887172.5
(22) Date of filing: 04.09.2019
(51) Int. Cl.: H04W 4/40, H04L 9/40

(54) **METHOD FOR DETECTING ABNORMAL BEHAVIOR IN A VEHICLE-TO-EVERYTHING NETWORK, DEVICE, AND SYSTEM**
VERFAHREN ZUR ERKENNUNG EINES ANORMALEN VERHALTENS IN EINEM FAHRZEUG-ZU-ALLEM-NETZWERK, VORRICHTUNG UND SYSTEM
PROCÉDÉ DE DÉTECTION DE COMPORTEMENT ANORMAL DANS UN RÉSEAU DE VÉHICULE À TOUT, DISPOSITIF, ET SYSTÈME

(30) Priority: 20.11.2018 CN 201811386066
(43) Date of publication of application: 25.08.2021
(73) Proprietor: Huawei Cloud Computing Technologies Co., Ltd., Guizhou 550025 (CN)
(72) Inventor: ZHU, Jintao, Shenzhen, Guangdong 518129 (CN); LI, Fei, Shenzhen, Guangdong 518129 (CN); HE, Chengdong, Shenzhen, Guangdong 518129 (CN)
(74) Representative: Pfenning, Meinig & Partner mbB
(86) International application number: PCT/CN2019/104319
(87) International publication number: WO 2020/103524

(56) References cited:
- EP-A1- 2 892 199
- EP-A1- 3 310 079
- WO-A1-2018/000084
- WO-A1-2018/105321
- WO-A1-2018/105321
- CN-A- 102 202 321
- CN-A- 102 202 321
- CN-A- 105 976 609
- CN-A- 107 454 117
- US-A1- 2016 140 842
- ETRI: "TR 22.885 Clean-up: Explicit Use of V2/I/P/N Instead of V2X", 3GPP TSG-SA WG1 MEETING #72 S1-154415, 19 November 2015 (2015-11-19), XP051012744, DOI: 20191108152928A

## Description

This application claims priority to Chinese Patent Application No. 201811386066.3, filed with the China National Intellectual Property Administration, November 20, 2018 and entitled "VEHICLE-TO-EVERYTHING ABNORMAL BEHAVIOR DETECTION METHOD, APPARATUS, AND SYSTEM.

### TECHNICAL FIELD

This application relates to the field of vehicle-to-everything technologies, and in particular, to a vehicle-to-everything abnormal behavior detection method, an apparatus, and a system.

### BACKGROUND

Currently, a vehicle-to-everything (V2X) technology has become a hot spot for development of new automobile technologies, is an important development direction of the automobile industry at present, and is also one of main directions for a related vendor to invest in a value chain of the industry. The V2X technology is one of key auxiliary technologies for a vehicle to implement autonomous driving. Standards organizations in and outside China are actively participating in construction of the vehicle-to-everything technology.

Vigorous development of vehicle-to-everything is conducive to promoting innovation and development of the automobile industry, building a new model and form of automobile and transportation services, promoting innovation and application of an autonomous driving technology, improving transportation efficiency, and reducing resources, pollution, and an accident rate.

A V2X communications system may include a plurality of V2X terminals and a V2X server. A V2X terminal sends a V2X message in a broadcast manner, and another V2X terminal receives the V2X message. Then, the V2X message may be uploaded to the V2X server for subsequent processing. A V2X terminal (such as a vehicle or a roadside station) serving as a receiver comprehensively determines and decides a next behavior based on a received V2X message. For example, for an autonomous vehicle, an accurate and reliable V2X message sent by a surrounding traffic participant is one of important references for determining an autonomous driving behavior of the autonomous vehicle. Therefore, security assurance needs to be provided for authenticity and validity of the message of the surrounding traffic participant.

However, in a current V2V communications system, a hacker may send a malicious V2X message, to interfere with an autonomous driving behavior of another valid vehicle. The malicious V2X message consumes computing resources of the valid vehicle, and further affects subsequent determining and a subsequent operation of the valid vehicle. The malicious V2X messages may also cause traffic chaos, endangering security of a driver and a passenger.

However, in the prior art, the malicious V2X message cannot be detected and determined, and a subsequent operation cannot be performed based on a related detection result.

The problem of improving security in V2X networks is also addressed in patent document US 2016/140842 A1.

### SUMMARY

Embodiments of this application provides a vehicle-to-everything abnormal behavior detection method, an apparatus, and a system, to detect abnormal behaviors of a vehicle-to-everything sending terminal and a vehicle-to-everything receiving terminal, so as to ensure security of a vehicle communications system.

To resolve the foregoing problem, the embodiments of this application provide the following technical solutions.

According to a first aspect, an embodiment of this application provides a vehicle-to-everything abnormal behavior detection method. The method is applied to a vehicle communications system. The vehicle communications system includes a vehicle-to-everything sending terminal, a vehicle-to-everything receiving terminal, and a vehicle-to-everything server. The method includes: The vehicle-to-everything receiving terminal receives a first vehicle-to-everything message sent by the vehicle-to-everything sending terminal. The vehicle-to-everything receiving terminal determines, according to a first abnormal behavior detection policy, that the first vehicle-to-everything message is an abnormal message. The vehicle-to-everything receiving terminal sends a report message to the vehicle-to-everything server. The report message includes the first vehicle-to-everything message.

In this embodiment of this application, the vehicle-to-everything receiving terminal first receives the first vehicle-to-everything message sent by the vehicle-to-everything sending terminal, and then determines, according to the first abnormal behavior detection policy, that the first vehicle-to-everything message is an abnormal message. The vehicle-to-everything receiving terminal sends the report message to the vehicle-to-everything server. The report message includes the first vehicle-to-everything message. After receiving the report message, the vehicle-to-everything server may determine, according to a second abnormal behavior detection policy and the report message, whether the vehicle-to-everything receiving terminal has an abnormal behavior, and may further determine, according to a third abnormal behavior detection policy and the first vehicle-to-everything message, whether the vehicle-to-everything sending terminal has an abnormal behavior. In this embodiment of this application, when detecting an abnormal message, the vehicle-to-everything receiving terminal reports the abnormal message to the vehicle-to-everything server, so that the vehicle-to-everything server may separately determine, according to different abnormal behavior detection policies, whether the vehicle-to-everything receiving terminal and the vehicle-to-everything sending terminal have abnormal behaviors. In this way, the vehicle-to-everything server may detect abnormal behaviors of the vehicle-to-everything sending terminal and the vehicle-to-everything receiving terminal, to ensure security of the vehicle communications system.

In a possible implementation of the first aspect, that the vehicle-to-everything receiving terminal determines, according to a first abnormal behavior detection policy, that the first vehicle-to-everything message is an abnormal message includes: The vehicle-to-everything receiving terminal detects the first vehicle-to-everything message according to the first abnormal behavior detection policy, to obtain an abnormal behavior feature. The vehicle-to-everything receiving terminal determines, based on the abnormal behavior feature, that the first vehicle-to-everything message is an abnormal message. In this embodiment of this application, the first abnormal behavior detection policy includes an abnormal behavior feature extraction manner. The abnormal behavior feature is extracted from the first vehicle-to-everything message in the abnormal behavior feature extraction manner. For example, an abnormal behavior feature in aspects such as a certificate, a speed, a position, or reported event content of the vehicle-to-everything sending terminal may be extracted. The first vehicle-to-everything message is determined as an abnormal message based on the abnormal behavior feature. The abnormal behavior feature extraction manner in the first abnormal behavior detection policy may be determined based on a specific implementation scenario. If no abnormal behavior feature is extracted, the first vehicle-to-everything message is determined as a normal message. If the abnormal behavior feature is extracted from the first vehicle-to-everything message, the first vehicle-to-everything message is determined as an abnormal message.

In a possible implementation of the first aspect, the abnormal behavior feature includes at least one of the following features: an abnormal permission behavior feature, an abnormal position behavior feature, an abnormal speed behavior feature, or an abnormal event behavior feature. The abnormal permission behavior feature refers to a feature that a terminal permission is abnormal. The abnormal position behavior feature refers to a feature that a vehicle position of the vehicle-to-everything sending terminal is abnormal. The abnormal speed behavior feature refers to a feature that a running speed of the vehicle-to-everything sending terminal is abnormal. The abnormal event behavior feature refers to a feature that event content sent by the vehicle-to-everything sending terminal is abnormal. In actual application, a specific feature extraction manner may be set for the abnormal permission behavior feature, the abnormal position behavior feature, the abnormal speed behavior feature, or the abnormal event behavior feature according to an abnormal behavior detection policy.

In a possible implementation of the first aspect, the abnormal permission behavior feature includes: An application identifier AID in the certificate of the vehicle-to-everything sending terminal does not include a sending permission corresponding to a type of the first vehicle-to-everything message, and/or a service specific permission SSP in the certificate of the vehicle-to-everything sending terminal does not include a terminal type in the first vehicle-to-everything message. In this embodiment of this application, the certificate of the vehicle-to-everything sending terminal carries the application identifier. If the application identifier does not include the sending permission corresponding to the type of the first vehicle-to-everything message, it is determined that there is an abnormal behavior feature. The certificate of the vehicle-to-everything sending terminal carries the service specific permission. If the service specific permission does not include the terminal type carried in the first vehicle-to-everything message, it is determined that there is an abnormal behavior feature. For example, a terminal permission for sending the first vehicle-to-everything message does not meet a permission specified in the certificate of the vehicle-to-everything sending terminal. To be specific, the first vehicle-to-everything message carries a sender certificate, and the sender certificate may specify types of messages that can be sent by a sender. If a type of message exceeds a specified range, it may be determined that there is an abnormal behavior feature.

In a possible implementation of the first aspect, the abnormal position behavior feature includes: A position difference between a vehicle position included in the first vehicle-to-everything message and a vehicle position of the vehicle-to-everything receiving terminal is greater than a geographical position spoofing threshold; and/or when the first vehicle-to-everything message is a message sent by the vehicle-to-everything sending terminal for a first time, the difference between the vehicle position included in the first vehicle-to-everything message and the vehicle position of the vehicle-to-everything receiving terminal is less than a first message position threshold. The vehicle-to-everything sending terminal and the vehicle-to-everything receiving terminal each may send a periodic report message, where the periodic report message may be a CAM. The periodic report message includes a position of a vehicle-to-everything communications terminal. Therefore, it may be determined whether a position difference between a current position of the vehicle-to-everything sending terminal and a current position of the vehicle-to-everything receiving terminal is greater than the geographical position spoofing threshold. For example, the abnormal position behavior feature includes determining of geographical position spoofing, and comparing a position difference between a position in a position field in a CAM message of the sender and a position of a receiver with the geographical position spoofing threshold. If the position difference is greater than the geographical position spoofing threshold, it is determined, based on the first vehicle-to-everything message, that there is an abnormal position behavior feature. In addition, the abnormal position behavior feature may further include a feature of first message position validity check. A message sent by the vehicle-to-everything sending terminal for a first time means that the vehicle-to-everything sending terminal communicates with the vehicle-to-everything receiving terminal for a first time. For a message sent by a vehicle for a first time, if a distance between a position of the vehicle and a receiver vehicle is less than a specified threshold, it is determined that the abnormal position behavior feature is extracted from the first vehicle-to-everything message.

In a possible implementation of the first aspect, the abnormal speed behavior feature includes: A speed difference between a vehicle speed corresponding to event content included in the first vehicle-to-everything message and a vehicle speed reported by the vehicle-to-everything sending terminal is greater than a first speed threshold; and/or speed differences between a vehicle speed included in the first vehicle-to-everything message and vehicle speeds reported by a plurality of vehicle-to-everything sending terminals located in a same position area are greater than a second speed threshold; and/or a speed value obtained by dividing a position difference between a first historical position of the vehicle-to-everything sending terminal and a current vehicle position reported by the vehicle-to-everything sending terminal by a time difference is greater than a third speed threshold. The time difference is a difference between a time stamp corresponding to the first historical position and a time stamp corresponding to the current vehicle position of the vehicle-to-everything sending terminal.

In this embodiment of this application, if the speed difference between the vehicle speed corresponding to the event content included in the first vehicle-to-everything message and the vehicle speed reported by the vehicle-to-everything sending terminal is greater than the first speed threshold, it is determined, based on the first vehicle-to-everything message, that there is an abnormal speed behavior feature. The first speed threshold may be set based on a specific scenario. For example, the vehicle-to-everything sending terminal may send a periodic report message, where the periodic report message may be a CAM. The vehicle-to-everything sending terminal may send a trigger report message, where the trigger report message may be a DENM. It may be determined, based on the periodic report message and the trigger report message, whether the abnormal speed behavior feature is met. If the speed differences between the vehicle speed included in the first vehicle-to-everything message and the vehicle speeds reported by the plurality of vehicle-to-everything sending terminals in the same position area are greater than the second speed threshold, it is determined, based on the first vehicle-to-everything message, that there is an abnormal speed behavior feature. The second speed threshold may be set based on a specific scenario. The vehicle-to-everything sending terminal first reports a historical position and a corresponding time stamp, and then reports the current position and the corresponding time stamp. In this way, the vehicle-to-everything receiving terminal may receive a plurality of positions and corresponding time stamps reported by the vehicle-to-everything sending terminal. It may be determined, based on received periodic report messages and a preset third speed threshold, whether the abnormal speed behavior feature is met. The third speed threshold may be set based on a specific scenario.

In a possible implementation of the first aspect, the abnormal event behavior feature includes: The event content included in the first vehicle-to-everything message is different from event content separately included in a plurality of vehicle-to-everything messages received by the vehicle-to-everything receiving terminal from a same position area; and/or information collected by a vehicle sensor of the vehicle-to-everything receiving terminal does not match the event content included in the first vehicle-to-everything message. In this embodiment of this application, the vehicle-to-everything sending terminal may send a trigger report message, where the trigger report message may be a DENM. For example, the first vehicle-to-everything message may be a trigger report message sent by the vehicle-to-everything sending terminal. In this case, the vehicle-to-everything receiving terminal may receive the trigger report message reported by the vehicle-to-everything sending terminal, and determine, based on the trigger report message, whether the behavior is isolated event spoofing. In addition, whether parameter security is abnormal may further be determined based on the information collected by the vehicle sensor of the vehicle-to-everything receiving terminal. The abnormal event behavior feature may include that the information collected by the vehicle sensor of the vehicle-to-everything receiving terminal does not match the event content included in the first vehicle-to-everything message. For example, the vehicle sensor of the vehicle-to-everything receiving terminal indicates, based on map software, that the receiver vehicle runs on a straight road, and roads in a front and rear range in which a V2X message can be received are straight. However, if a corner message sent by a nearby sender vehicle is received, it may be considered that a first vehicle-to-everything message sent by the sender vehicle has an abnormal behavior feature.

In a possible implementation of the first aspect, after the vehicle-to-everything receiving terminal determines, based on the abnormal behavior feature, that the first vehicle-to-everything message is an abnormal message, the method further includes: The vehicle-to-everything receiving terminal obtains a quantity of occurrences of the abnormal behavior feature of the vehicle-to-everything sending terminal in a first time period. The vehicle-to-everything receiving terminal obtains a total quantity of occurrences of the abnormal behavior feature in a second time period. The second time period is greater than the first time period. When the quantity of occurrences of the abnormal behavior feature in the first time period is greater than a first abnormal behavior threshold, and/or the total quantity of occurrences of the abnormal behavior feature in the second time period is greater than a second abnormal behavior threshold, the vehicle-to-everything receiving terminal determines that the vehicle-to-everything sending terminal has an abnormal behavior. In this embodiment of this application, statistical analysis may further be collected on the abnormal behavior feature, to determine whether the vehicle-to-everything sending terminal has a malicious behavior. For example, the quantity of occurrences of the abnormal behavior feature of the vehicle-to-everything sending terminal in the first time period is extracted, and the total quantity of occurrences of the abnormal behavior feature in the second time period is extracted. The first time period may be a preset unit time. The second time period may be a certificate validity period or half of the certificate validity period of the vehicle-to-everything sending terminal. An abnormal behavior detection algorithm includes the first abnormal behavior threshold and the second abnormal behavior threshold. It may be determined that the vehicle-to-everything sending terminal has an abnormal behavior provided that at least one of the following two conditions is met. The two conditions are: The quantity of occurrences of the abnormal behavior feature in the first time period is greater than the first abnormal behavior threshold, and the total quantity of occurrences of the abnormal behavior feature in the second time period is greater than the second abnormal behavior threshold.

In a possible implementation of the first aspect, after the vehicle-to-everything receiving terminal determines that the vehicle-to-everything sending terminal has an abnormal behavior, the method further includes: The vehicle-to-everything receiving terminal adds the vehicle-to-everything sending terminal to a blacklist. The blacklist is used to intercept a vehicle-to-everything message received by the vehicle-to-everything receiving terminal. If the vehicle-to-everything sending terminal has an abnormal behavior, the vehicle-to-everything receiving terminal may add the certificate of the vehicle-to-everything sending terminal to a local blacklist, to implement an operation of discarding a subsequent message of the vehicle-to-everything sending terminal, because the vehicle-to-everything sending terminal may continue to send a message. In this case, through interception of the blacklist, the subsequent message of the vehicle-to-everything sending terminal may be processed in time, to avoid interference of an abnormal behavior of the vehicle-to-everything sending terminal to the vehicle-to-everything receiving terminal.

In a possible implementation of the first aspect, before the vehicle-to-everything receiving terminal receives the first vehicle-to-everything message sent by the vehicle-to-everything sending terminal, the method further includes: The vehicle-to-everything receiving terminal obtains the first abnormal behavior detection policy sent by the vehicle-to-everything server. In this embodiment of this application, the vehicle-to-everything receiving terminal may send a policy obtaining request to the vehicle-to-everything server. For example, the policy obtaining request carries a vehicle ID of the vehicle-to-everything receiving terminal, to request to deliver an abnormal behavior detection policy. After receiving the policy obtaining request, the vehicle-to-everything server obtains, based on an identifier of the vehicle-to-everything receiving terminal, the first abnormal behavior detection policy corresponding to the vehicle-to-everything receiving terminal. In addition, the vehicle-to-everything server may alternatively actively push policy data to the vehicle-to-everything receiving terminal. For example, after a communication connection is established between the vehicle-to-everything server and the vehicle-to-everything receiving terminal, the vehicle-to-everything server may push the first abnormal behavior detection policy, and the vehicle-to-everything receiving terminal receives the first abnormal behavior detection policy sent by the vehicle-to-everything server.

In a possible implementation of the first aspect, after the vehicle-to-everything receiving terminal sends the report message to the vehicle-to-everything server, the method further includes: The vehicle-to-everything receiving terminal receives a report message response sent by the vehicle-to-everything server. The vehicle-to-everything receiving terminal determines, based on the report message response, whether the vehicle-to-everything sending terminal has an abnormal behavior. After the vehicle-to-everything server determines whether the vehicle-to-everything sending terminal has an abnormal behavior, the vehicle-to-everything server may further generate the report message response. The report message response may include an arbitration result of the vehicle-to-everything server to the vehicle-to-everything sending terminal. Then, the report message response is sent to the vehicle-to-everything receiving terminal. The vehicle-to-everything receiving terminal receives the report message response sent by the vehicle-to-everything server, and determines, based on to the report message response, whether the vehicle-to-everything sending terminal has an abnormal behavior. For example, the vehicle-to-everything receiving terminal may determine a subsequent message processing manner for the first vehicle-to-everything message based on the arbitration result of the vehicle-to-everything server to the vehicle-to-everything sending terminal.

In a possible implementation of the first aspect, after the vehicle-to-everything receiving terminal determines, based on the report message response, whether the vehicle-to-everything sending terminal has an abnormal behavior, the method further includes: When the vehicle-to-everything sending terminal has an abnormal behavior, the vehicle-to-everything receiving terminal adds the vehicle-to-everything sending terminal to a blacklist. The blacklist is used to intercept a vehicle-to-everything message received by the vehicle-to-everything receiving terminal. If the vehicle-to-everything sending terminal has an abnormal behavior, the vehicle-to-everything receiving terminal may add the certificate of the vehicle-to-everything sending terminal to a local blacklist, to implement an operation of discarding a subsequent message of the vehicle-to-everything sending terminal, because the vehicle-to-everything sending terminal may continue to send a message. In this case, through interception of the blacklist, the subsequent message of the vehicle-to-everything sending terminal may be processed in time, to avoid interference of an abnormal behavior of the vehicle-to-everything sending terminal to the vehicle-to-everything receiving terminal.

According to a second aspect, an embodiment of this application further provides a vehicle-to-everything abnormal behavior detection method. The method is applied to a vehicle communications system. The vehicle communications system includes a vehicle-to-everything sending terminal, a vehicle-to-everything receiving terminal, and a vehicle-to-everything server. The method includes: The vehicle-to-everything server receives a report message sent by the vehicle-to-everything receiving terminal. The report message includes a first vehicle-to-everything message sent by the vehicle-to-everything sending terminal. The vehicle-to-everything server determines, according to a second abnormal behavior detection policy and the report message, whether the vehicle-to-everything receiving terminal has an abnormal behavior. The vehicle-to-everything server determines, according to a third abnormal behavior detection policy and the first vehicle-to-everything message, whether the vehicle-to-everything sending terminal has an abnormal behavior.

In this embodiment of this application, the vehicle-to-everything receiving terminal first receives the first vehicle-to-everything message sent by the vehicle-to-everything sending terminal, and then determines, according to a first abnormal behavior detection policy, that the first vehicle-to-everything message is an abnormal message. The vehicle-to-everything receiving terminal sends the report message to the vehicle-to-everything server. The report message includes the first vehicle-to-everything message. After receiving the report message, the vehicle-to-everything server may determine, according to the second abnormal behavior detection policy and the report message, whether the vehicle-to-everything receiving terminal has an abnormal behavior, and may further determine, according to the third abnormal behavior detection policy and the first vehicle-to-everything message, whether the vehicle-to-everything sending terminal has an abnormal behavior. In this embodiment of this application, when detecting an abnormal message, the vehicle-to-everything receiving terminal reports the abnormal message to the vehicle-to-everything server, so that the vehicle-to-everything server may separately determine, according to different abnormal behavior detection policies, whether the vehicle-to-everything receiving terminal and the vehicle-to-everything sending terminal have abnormal behaviors. In this way, the vehicle-to-everything server may detect abnormal behaviors of the vehicle-to-everything sending terminal and the vehicle-to-everything receiving terminal, to ensure security of the vehicle communications system.

In a possible implementation of the second aspect, the vehicle communications system further includes a plurality of certificate authorities. The report message includes a certificate of the vehicle-to-everything receiving terminal. That the vehicle-to-everything server determines, according to a second abnormal behavior detection policy and the report message, whether the vehicle-to-everything receiving terminal has an abnormal behavior includes: The vehicle-to-everything server obtains a plurality of certificates of the vehicle-to-everything receiving terminal from a first certificate authority. The first certificate authority is configured to issue a plurality of certificates to the vehicle-to-everything receiving terminal. The vehicle-to-everything server determines a total quantity of reports of the vehicle-to-everything receiving terminal based on the plurality of certificates of the vehicle-to-everything receiving terminal. The vehicle-to-everything server determines, based on the total quantity of reports, whether the vehicle-to-everything receiving terminal has an abnormal behavior. In this embodiment of this application, the report message sent by the vehicle-to-everything receiving terminal may include the certificate of the vehicle-to-everything receiving terminal. The vehicle-to-everything server determines the first certificate authority based on the certificate of the vehicle-to-everything receiving terminal. The first certificate authority is one of the plurality of certificate authorities. Then, the vehicle-to-everything server sends a first certificate query request to the first certificate authority. The first certificate query request includes the certificate of the vehicle-to-everything receiving terminal. The first certificate authority determines the plurality of certificates of the vehicle-to-everything receiving terminal based on one certificate carried in the first certificate query request, and then sends the plurality of certificates of the vehicle-to-everything receiving terminal to the vehicle-to-everything server. After the vehicle-to-everything server receives the plurality of certificates of the vehicle-to-everything receiving terminal, the vehicle-to-everything server determines the total quantity of reports of the vehicle-to-everything receiving terminal based on the plurality of certificates of the vehicle-to-everything receiving terminal. For example, a total quantity of reports initiated by the vehicle-to-everything receiving terminal in a period of time is counted, and it is determined, based on a preset report quantity threshold, whether the total quantity of reports exceeds the threshold. If the total quantity of reports of the vehicle-to-everything receiving terminal exceeds the threshold, it is determined that the vehicle-to-everything receiving terminal has an abnormal behavior. If the threshold is not exceeded, it is determined that the vehicle-to-everything receiving terminal does not have an abnormal behavior.

In a possible implementation of the second aspect, the vehicle communications system includes a plurality of vehicle-to-everything receiving terminals, and the vehicle communications system further includes a plurality of certificate authorities. That the vehicle-to-everything server determines, according to a third abnormal behavior detection policy and the first vehicle-to-everything message, whether the vehicle-to-everything sending terminal has an abnormal behavior includes: The vehicle-to-everything server obtains a plurality of certificates of the vehicle-to-everything sending terminal from a second certificate authority. The second certificate authority is configured to issue a plurality of certificates to the vehicle-to-everything sending terminal. The vehicle-to-everything server determines, based on the plurality of certificates of the vehicle-to-everything sending terminal and the first vehicle-to-everything message, a first total quantity of reports of the plurality of vehicle-to-everything receiving terminals. The first total quantity of reports is a total quantity of reports of the plurality of vehicle-to-everything receiving terminals for the vehicle-to-everything sending terminal or for the first vehicle-to-everything message. The vehicle-to-everything server determines, based on the first total quantity of reports of the plurality of vehicle-to-everything receiving terminals, whether the vehicle-to-everything sending terminal has an abnormal behavior.

In this embodiment of this application, the first vehicle-to-everything message sent by the vehicle-to-everything sending terminal may include a certificate of the vehicle-to-everything sending terminal, and the vehicle-to-everything server determines the second certificate authority based on the certificate of the vehicle-to-everything sending terminal. Then, the vehicle-to-everything server sends a second certificate query request to the second certificate authority. The second certificate query request includes the certificate of the vehicle-to-everything sending terminal. The second certificate authority determines the plurality of certificates of the vehicle-to-everything sending terminal based on one certificate carried in the second certificate query request, and then sends the plurality of certificates of the vehicle-to-everything sending terminal to the vehicle-to-everything server. The vehicle-to-everything server determines, based on the plurality of certificates of the vehicle-to-everything sending terminal and the first vehicle-to-everything message, a first total quantity of reports of the plurality of vehicle-to-everything receiving terminals, and determines, based on a preset report quantity threshold, whether the first total quantity of reports exceeds the threshold. If the first total quantity of reports exceeds the threshold, it is determined that the vehicle-to-everything sending terminal has an abnormal behavior. If the threshold is not exceeded, it is determined that the vehicle-to-everything sending terminal does not have an abnormal behavior.

In a possible implementation of the second aspect, the vehicle communications system includes a plurality of vehicle-to-everything receiving terminals. That the vehicle-to-everything server determines, according to a third abnormal behavior detection policy and the first vehicle-to-everything message, whether the vehicle-to-everything sending terminal has an abnormal behavior includes: The vehicle-to-everything server receives report messages separately sent by the plurality of vehicle-to-everything receiving terminals. The vehicle-to-everything server detects, according to the third abnormal behavior detection policy, vehicle-to-everything messages separately carried in the plurality of report messages, to obtain a plurality of abnormal behavior features. The vehicle-to-everything server collects statistical analysis on the plurality of abnormal behavior features to obtain whether the vehicle-to-everything sending terminal has an abnormal behavior. In addition to determining, based on a quantity of reports, whether the vehicle-to-everything sending terminal has an abnormal behavior, the vehicle-to-everything server may alternatively determine, by using a global feature detection method, whether the vehicle-to-everything sending terminal has an abnormal behavior. For example, the vehicle-to-everything server receives report messages from the plurality of vehicle-to-everything receiving terminals, and the vehicle-to-everything server performs, according to the third abnormal behavior detection policy, abnormal behavior feature extraction on vehicle-to-everything messages separately carried in the plurality of report messages, to obtain a plurality of abnormal behavior features. The vehicle-to-everything server detects the plurality of abnormal behavior features according to an abnormal behavior detection algorithm in the third abnormal behavior detection policy, to obtain whether the vehicle-to-everything sending terminal has an abnormal behavior.

In a possible implementation of the second aspect, the abnormal behavior feature includes at least one of the following features: an abnormal permission behavior feature, an abnormal position behavior feature, an abnormal speed behavior feature, or an abnormal event behavior feature. The abnormal permission behavior feature refers to a feature that a terminal permission is abnormal. The abnormal position behavior feature refers to a feature that a vehicle position of the vehicle-to-everything sending terminal is abnormal. The abnormal speed behavior feature refers to a feature that a running speed of the vehicle-to-everything sending terminal is abnormal. The abnormal event behavior feature refers to a feature that event content sent by the vehicle-to-everything sending terminal is abnormal. In actual application, a specific feature extraction manner may be set for the abnormal permission behavior feature, the abnormal position behavior feature, the abnormal speed behavior feature, or the abnormal event behavior feature according to an abnormal behavior detection policy.

In a possible implementation of the second aspect, the abnormal permission behavior feature includes: An application identifier AID in a certificate of the vehicle-to-everything sending terminal does not include a sending permission corresponding to a type of the first vehicle-to-everything message, and/or a service specific permission SSP in the certificate of the vehicle-to-everything sending terminal does not include a terminal type in the first vehicle-to-everything message. In this embodiment of this application, the certificate of the vehicle-to-everything sending terminal carries the application identifier. If the application identifier does not include the sending permission corresponding to the type of the first vehicle-to-everything message, it is determined that there is an abnormal behavior feature. The certificate of the vehicle-to-everything sending terminal carries the service specific permission. If the service specific permission does not include the terminal type carried in the first vehicle-to-everything message, it is determined that there is an abnormal behavior feature. For example, a terminal permission for sending the first vehicle-to-everything message does not meet a permission specified in the certificate of the vehicle-to-everything sending terminal. To be specific, the first vehicle-to-everything message carries a sender certificate, and the sender certificate may specify types of messages that can be sent by a sender. If a type of message exceeds a specified range, it may be determined that there is an abnormal behavior feature.

In a possible implementation of the second aspect, the abnormal position behavior feature includes: A position difference between a vehicle position included in the first vehicle-to-everything message and a vehicle position of the vehicle-to-everything receiving terminal is greater than a geographical position spoofing threshold; and/or when the first vehicle-to-everything message is a message sent by the vehicle-to-everything sending terminal for a first time, the difference between the vehicle position included in the first vehicle-to-everything message and the vehicle position of the vehicle-to-everything receiving terminal is less than a first message position threshold. The vehicle-to-everything sending terminal and the vehicle-to-everything receiving terminal each may send a periodic report message, where the periodic report message may be a CAM. The periodic report message includes a position of a vehicle-to-everything communications terminal. Therefore, it may be determined whether a position difference between a current position of the vehicle-to-everything sending terminal and a current position of the vehicle-to-everything receiving terminal is greater than the geographical position spoofing threshold. For example, the abnormal position behavior feature includes determining of geographical position spoofing, and comparing a position difference between a position in a position field in a CAM message of the sender and a position of a receiver with the geographical position spoofing threshold. If the position difference is greater than the geographical position spoofing threshold, it is determined, based on the first vehicle-to-everything message, that there is an abnormal position behavior feature. In addition, the abnormal position behavior feature may further include a feature of first message position validity check. A message sent by the vehicle-to-everything sending terminal for a first time means that the vehicle-to-everything sending terminal communicates with the vehicle-to-everything receiving terminal for a first time. For a message sent by a vehicle for a first time, if a distance between a position of the vehicle and a receiver vehicle is less than a specified threshold, it is determined that the abnormal position behavior feature is extracted from the first vehicle-to-everything message.

In a possible implementation of the second aspect, the abnormal speed behavior feature includes: A speed difference between a vehicle speed corresponding to event content included in the first vehicle-to-everything message and a vehicle speed reported by the vehicle-to-everything sending terminal is greater than a first speed threshold; and/or speed differences between a vehicle speed included in the first vehicle-to-everything message and vehicle speeds reported by a plurality of vehicle-to-everything sending terminals located in a same position area are greater than a second speed threshold; and/or a speed value obtained by dividing a position difference between a first historical position of the vehicle-to-everything sending terminal and a current vehicle position reported by the vehicle-to-everything sending terminal by a time difference is greater than a third speed threshold. The time difference is a difference between a time stamp corresponding to the first historical position and a time stamp corresponding to the current vehicle position of the vehicle-to-everything sending terminal.

In this embodiment of this application, if the speed difference between the vehicle speed corresponding to the event content included in the first vehicle-to-everything message and the vehicle speed reported by the vehicle-to-everything sending terminal is greater than the first speed threshold, it is determined, based on the first vehicle-to-everything message, that there is an abnormal speed behavior feature. The first speed threshold may be set based on a specific scenario. For example, the vehicle-to-everything sending terminal may send a periodic report message, where the periodic report message may be a CAM. The vehicle-to-everything sending terminal may send a trigger report message, where the trigger report message may be a DENM. It may be determined, based on the periodic report message and the trigger report message, whether the abnormal speed behavior feature is met. If the speed differences between the vehicle speed included in the first vehicle-to-everything message and the vehicle speeds reported by the plurality of vehicle-to-everything sending terminals in the same position area are greater than the second speed threshold, it is determined, based on the first vehicle-to-everything message, that there is an abnormal speed behavior feature. The second speed threshold may be set based on a specific scenario. The vehicle-to-everything sending terminal first reports a historical position and a corresponding time stamp, and then reports the current position and the corresponding time stamp. In this way, the vehicle-to-everything receiving terminal may receive a plurality of positions and corresponding time stamps reported by the vehicle-to-everything sending terminal. It may be determined, based on received periodic report messages and a preset third speed threshold, whether the abnormal speed behavior feature is met. The third speed threshold may be set based on a specific scenario.

In a possible implementation of the second aspect, the abnormal event behavior feature includes: The event content included in the first vehicle-to-everything message is different from event content separately included in a plurality of vehicle-to-everything messages received by the vehicle-to-everything receiving terminal from a same position area; and/or information collected by a vehicle sensor of the vehicle-to-everything receiving terminal does not match the event content included in the first vehicle-to-everything message. In this embodiment of this application, the vehicle-to-everything sending terminal may send a trigger report message, where the trigger report message may be a DENM. For example, the first vehicle-to-everything message may be a trigger report message sent by the vehicle-to-everything sending terminal. In this case, the vehicle-to-everything receiving terminal may receive the trigger report message reported by the vehicle-to-everything sending terminal, and determine, based on the trigger report message, whether the behavior is isolated event spoofing. In addition, whether parameter security is abnormal may further be determined based on the information collected by the vehicle sensor of the vehicle-to-everything receiving terminal. The abnormal event behavior feature may include that the information collected by the vehicle sensor of the vehicle-to-everything receiving terminal does not match the event content included in the first vehicle-to-everything message. For example, the vehicle sensor of the vehicle-to-everything receiving terminal indicates, based on map software, that the receiver vehicle runs on a straight road, and roads in a front and rear range in which a V2X message can be received are straight. However, if a corner message sent by a nearby sender vehicle is received, it may be considered that a first vehicle-to-everything message sent by the sender vehicle has an abnormal behavior feature.

In a possible implementation of the second aspect, that the vehicle-to-everything server collects statistical analysis on the plurality of abnormal behavior features to obtain whether the vehicle-to-everything sending terminal has an abnormal behavior includes: The vehicle-to-everything server obtains a quantity of occurrences of the plurality of abnormal behavior features of the vehicle-to-everything sending terminal in a first time period. The vehicle-to-everything server obtains a total quantity of occurrences of the plurality of abnormal behavior features in a second time period. The second time period is greater than the first time period. When the quantity of occurrences of the plurality of abnormal behavior features in the first time period is greater than a first abnormal behavior threshold, and/or the total quantity of occurrences of the plurality of abnormal behavior features in the second time period is greater than a second abnormal behavior threshold, the vehicle-to-everything server determines that the vehicle-to-everything sending terminal has an abnormal behavior. In this embodiment of this application, an abnormal behavior detection algorithm may include an abnormal behavior feature extraction manner. For example, the quantity of occurrences of the plurality of abnormal behavior features of the vehicle-to-everything sending terminal in the first time period is extracted, and the total quantity of occurrences of the plurality of abnormal behavior features in the second time period is extracted. The first time period may be a preset unit time. The second time period may be a certificate validity period or half of the certificate validity period of the vehicle-to-everything sending terminal. The abnormal behavior detection algorithm includes the first abnormal behavior threshold and the second abnormal behavior threshold. It may be determined that the vehicle-to-everything sending terminal has an abnormal behavior provided that at least one of the following two conditions is met. The two conditions are: The quantity of occurrences of the plurality of abnormal behavior features in the first time period is greater than the first abnormal behavior threshold, and the total quantity of occurrences of the plurality of abnormal behavior features in the second time period is greater than the second abnormal behavior threshold.

In a possible implementation of the second aspect, the vehicle communications system further includes a plurality of certificate authorities and a certificate revocation server. The method further includes: The vehicle-to-everything server sends a first certificate revocation request to a third certificate authority. The first certificate revocation request includes a certificate of an abnormal vehicle-to-everything terminal. The third certificate authority is configured to request the certificate revocation server to revoke the certificate of the abnormal vehicle-to-everything terminal. The abnormal vehicle-to-everything terminal is the vehicle-to-everything sending terminal having an abnormal behavior and/or the vehicle-to-everything receiving terminal having an abnormal behavior. The vehicle-to-everything server receives a response, sent by the third certificate authority, that the certificate of the abnormal vehicle-to-everything terminal is revoked. The vehicle-to-everything server first determines the third certificate authority that sends the certificate to the abnormal vehicle-to-everything terminal, and then requests the third certificate authority to revoke the certificate of the abnormal vehicle-to-everything terminal. The third certificate authority requests the certificate revocation server to revoke the certificate of the abnormal vehicle-to-everything terminal. The certificate revocation server has a revocation function. After completing revocation, the certificate revocation server notifies the third certificate authority, and the third certificate authority sends a first certificate revocation response. The vehicle-to-everything server determines, based on the certificate revocation response, that the certificate of the abnormal vehicle-to-everything terminal is revoked. This resolves a problem of certificate revocation of the abnormal vehicle-to-everything terminal, and avoids interference caused by the abnormal vehicle-to-everything terminal to another vehicle-to-everything communications terminal.

In a possible implementation of the second aspect, the vehicle communications system further includes a plurality of certificate authorities and a certificate revocation server. The method further includes: The vehicle-to-everything server sends a second certificate revocation request to a third certificate authority. The second certificate revocation request includes a certificate of an abnormal vehicle-to-everything terminal. The abnormal vehicle-to-everything terminal is the vehicle-to-everything sending terminal having an abnormal behavior and/or the vehicle-to-everything receiving terminal having an abnormal behavior. The vehicle-to-everything server receives a response sent by the third certificate authority after the third certificate authority adds at least one certificate of the abnormal vehicle-to-everything terminal to a blacklist, and sends a third certificate revocation request to the certificate revocation server. The vehicle-to-everything server receives a response, sent by the certificate revocation server, that the certificate of the abnormal vehicle-to-everything terminal is revoked. The vehicle-to-everything server may separately communicate with the third certificate authority and the certificate revocation server. In this embodiment, the third certificate authority adds the at least one certificate of the abnormal vehicle-to-everything terminal to the blacklist, and the third certificate authority sends the response after adding the at least one certificate to the blacklist. The vehicle-to-everything server sends the third certificate revocation request to the certificate revocation server. The certificate revocation server revokes the certificate of the abnormal vehicle-to-everything terminal. The vehicle-to-everything server determines, based on a received certificate revocation response, that the certificate of the abnormal vehicle-to-everything terminal is revoked. This resolves a problem of certificate revocation of the abnormal vehicle-to-everything terminal, and avoids interference caused by the abnormal vehicle-to-everything terminal to another vehicle-to-everything communications terminal.

In a possible implementation of the second aspect, the vehicle communications system further includes a certificate revocation server. The method further includes: The vehicle-to-everything server sends a fourth certificate revocation request to the certificate revocation server. The fourth certificate revocation request includes a certificate of an abnormal vehicle-to-everything terminal. The abnormal vehicle-to-everything terminal is the vehicle-to-everything sending terminal having an abnormal behavior and/or the vehicle-to-everything receiving terminal having an abnormal behavior. The vehicle-to-everything server receives a response, sent by the certificate revocation server, that the certificate of the abnormal vehicle-to-everything terminal is revoked. The vehicle-to-everything server may establish a communication connection to the certificate revocation server. The vehicle-to-everything server sends the fourth certificate revocation request to the certificate revocation server, to request the certificate revocation server to revoke the certificate of the abnormal vehicle-to-everything terminal. The certificate revocation server has a revocation function. After completing revocation, the certificate revocation server sends a certificate revocation response. The vehicle-to-everything server determines, based on the certificate revocation response, that the certificate of the abnormal vehicle-to-everything terminal is revoked. This resolves a problem of certificate revocation of the abnormal vehicle-to-everything terminal, and avoids interference caused by the abnormal vehicle-to-everything terminal to another vehicle-to-everything communications terminal.

In a possible implementation of the second aspect, the plurality of certificate authorities include a plurality of enrollment authorities and a plurality of authorization authorities. That the vehicle-to-everything server determines, based on the certificate of the abnormal vehicle-to-everything terminal, the third certificate authority that sends the certificate to the abnormal vehicle-to-everything terminal includes: The vehicle-to-everything server classifies an abnormal behavior of the abnormal vehicle-to-everything terminal to obtain an abnormality level. When the abnormality level is a first abnormality level, the vehicle-to-everything server separately determines the third certificate authority from the plurality of enrollment authorities and the plurality of authorization authorities. Alternatively, when the abnormality level is a second abnormality level, the vehicle-to-everything server determines the third certificate authority from the plurality of authorization authorities. The vehicle-to-everything server may classify the abnormal behavior according to a local policy. For example, abnormal behaviors are classified into at least two levels based on a collision level and a hazard level: the first abnormality level and the second abnormality level. The first abnormality level is higher than the second abnormality level. A policy for classifying the abnormal behavior depends on an application scenario. When the abnormal behavior of the abnormal vehicle-to-everything terminal corresponds to the first abnormality level, both a long-term certificate and a short-term certificate of the abnormal vehicle-to-everything terminal need to be revoked. When the abnormal behavior of the abnormal vehicle-to-everything terminal corresponds to the second abnormality level, only the short-term certificate needs to be revoked. In this way, an abnormal behavior of the vehicle-to-everything communications terminal may be classified and processed.

In a possible implementation of the second aspect, after the vehicle-to-everything server determines the third certificate authority, the method further includes: The vehicle-to-everything server generates revocation reason information based on the abnormal behavior of the abnormal vehicle-to-everything terminal. The vehicle-to-everything server sends the revocation reason information and the abnormality level to the third certificate authority.

In a possible implementation of the second aspect, after the vehicle-to-everything server determines, according to the third abnormal behavior detection policy and the first vehicle-to-everything message, whether the vehicle-to-everything sending terminal has an abnormal behavior, the method further includes: The vehicle-to-everything server generates a report message response. The report message response is used to indicate whether the vehicle-to-everything sending terminal has an abnormal behavior. The vehicle-to-everything server sends the report message response to the vehicle-to-everything receiving terminal.

In a possible implementation of the second aspect, before the vehicle-to-everything server receives the report message sent by the vehicle-to-everything receiving terminal, the method further includes: The vehicle-to-everything server sends the first abnormal behavior detection policy to the vehicle-to-everything receiving terminal. The vehicle-to-everything server generates revocation reason information based on an abnormal behavior of the vehicle-to-everything sending terminal. The revocation reason information includes a reason why the certificate of the vehicle-to-everything sending terminal is revoked. The vehicle-to-everything server sends the revocation reason information and an abnormality level to the third certificate authority. In this way, the third certificate authority may obtain a revocation reason and an abnormality level of the vehicle-to-everything sending terminal, to manage the certificate of the vehicle-to-everything sending terminal.

In a possible implementation of the second aspect, that the vehicle-to-everything server determines, according to a third abnormal behavior detection policy and the first vehicle-to-everything message, whether the vehicle-to-everything sending terminal has an abnormal behavior includes: When the vehicle-to-everything receiving terminal has no abnormal behavior, the vehicle-to-everything server determines, according to the third abnormal behavior detection policy and the first vehicle-to-everything message, whether the vehicle-to-everything sending terminal has an abnormal behavior.

According to a third aspect, an embodiment of this application provides a vehicle communications system. The vehicle communications system includes a vehicle-to-everything receiving terminal, a vehicle-to-everything sending terminal, and a vehicle-to-everything server. The vehicle-to-everything sending terminal is configured to send a first vehicle-to-everything message to the vehicle-to-everything receiving terminal. The vehicle-to-everything receiving terminal is configured to perform the method according to any one of the possible implementations of the first aspect. The vehicle-to-everything server is configured to perform the method according to any one of the possible implementations of the second aspect.

According to a fourth aspect, an embodiment of this application provides a computer-readable storage medium. The computer-readable storage medium stores an instruction. When the instruction is run on a computer, the computer is enabled to perform the method according to the first aspect.

According to a fifth aspect, an embodiment of this application provides a computer-readable storage medium. The computer-readable storage medium stores an instruction. When the instruction is run on a computer, the computer is enabled to perform the method according to the second aspect.

According to a sixth aspect, an embodiment of this application provides a computer program product including an instruction. When the computer program product runs on a computer, the computer is enabled to perform the method according to the first aspect.

According to a seventh aspect, an embodiment of this application provides a computer program product including an instruction. When the computer program product runs on a computer, the computer is enabled to perform the method according to the second aspect.

According to an eighth aspect, an embodiment of this application provides a vehicle-to-everything receiving apparatus. The vehicle-to-everything receiving apparatus includes a processor and a memory. The memory is configured to store an instruction. The processor is configured to execute the instruction in the memory, and the vehicle-to-everything receiving apparatus is enabled to perform the method according to any one of the possible implementations of the first aspect.

According to a ninth aspect, an embodiment of this application provides a vehicle-to-everything processing apparatus. The vehicle-to-everything processing apparatus includes a processor and a memory. The memory is configured to store an instruction. The processor is configured to execute the instruction in the memory, and the vehicle-to-everything processing apparatus is enabled to perform the method according to any one of the possible implementations of the second aspect.

According to a tenth aspect, this application provides a chip system. The chip system includes a processor, configured to support a vehicle-to-everything receiving apparatus or a vehicle-to-everything processing apparatus to implement functions in the foregoing aspects, for example, sending or processing data and/or information in the foregoing methods. In a possible design, the chip system further includes a memory. The memory is configured to store a program instruction and data that are necessary for the vehicle-to-everything receiving apparatus or the vehicle-to-everything processing apparatus. The chip system may include a chip, or may include a chip and another discrete component.

### BRIEF DESCRIPTION OF DRAWINGS

FIG. 1 is a schematic diagram of an architecture of a vehicle communications system according to an embodiment of this application;
FIG. 2 is a schematic diagram of an architecture of another vehicle communications system according to an embodiment of this application;
FIG. 3 is a schematic diagram of an architecture of another vehicle communications system according to an embodiment of this application;
FIG. 4 is a schematic diagram in which group communication is used in a vehicle communications system according to an embodiment of this application;
FIG. 5 is a schematic flowchart of interaction between a vehicle-to-everything sending terminal, a vehicle-to-everything receiving terminal, and a vehicle-to-everything server according to an embodiment of this application;
FIG. 6 is a schematic flowchart of interaction between a sender vehicle, a receiver vehicle, a V2X server, and a certificate authority in a vehicle-to-everything abnormal behavior detection method according to an embodiment of this application;
FIG. 7 is a schematic flowchart of configuring and updating an abnormal behavior detection policy according to an embodiment of this application;
FIG. 8 is a schematic flowchart of local abnormal behavior detection according to an embodiment of this application;
FIG. 9 is a schematic flowchart of global abnormal behavior detection according to an embodiment of this application;
FIG. 10 is a schematic flowchart of hierarchical revocation according to an embodiment of this application;
FIG. 11 is a schematic diagram of a composition structure of a vehicle-to-everything communications apparatus according to an embodiment of this application;
FIG. 12 is a schematic diagram of a structure of a vehicle-to-everything processing apparatus according to an embodiment of this application;
FIG. 13 is a schematic diagram of a composition structure of another vehicle-to-everything communications apparatus according to an embodiment of this application; and
FIG. 14 is a schematic diagram of a composition structure of another vehicle-to-everything processing apparatus according to an embodiment of this application.

### DESCRIPTION OF EMBODIMENTS

Embodiments of this application provides a vehicle-to-everything abnormal behavior detection method, an apparatus, and a system, to detect abnormal behaviors of a vehicle-to-everything sending terminal and a vehicle-to-everything receiving terminal, so as to ensure security of a vehicle communications system.

In the specification, claims, and accompanying drawings of this application, the terms "first", "second", and so on are intended to distinguish between similar objects but do not necessarily indicate a specific order or sequence. It should be understood that the terms used in such a way are interchangeable in proper circumstances, which is merely a discrimination manner that is used when objects having a same attribute are described in the embodiments of this application. In addition, the terms "include", "have" and any other variants mean to cover a non-exclusive inclusion, so that a process, method, system, product, or device that includes a series of units is not necessarily limited to those units, but may include another unit not clearly listed or inherent to such a process, method, system, product, or device.

A communication procedure between vehicle-to-everything communications terminals, in the vehicle-to-everything field, that are provided in the embodiments of this application is first described. In a vehicle communications system, two vehicle-to-everything communications terminals communicate with each other through a vehicle-to-everything message. For example, a vehicle-to-everything communications terminal may send a vehicle-to-everything message to another vehicle-to-everything communications terminal. The terminal sending the message may be referred to as a vehicle-to-everything sending terminal. The terminal receiving the message may be referred to as a vehicle-to-everything receiving terminal. In the embodiments of this application, a manner of sending a message between the vehicle-to-everything communications terminals may include a broadcast manner, a unicast manner, a multicast manner, or the like. In a subsequent embodiment, a V2V broadcast manner is used as an example for description.

In the embodiments of this application, the vehicle-to-everything communications terminal may be specifically an on-board unit (on-board unit, OBU), or a road side unit (road side unit, RSU). When the vehicle-to-everything sending terminal is an OBU, the vehicle-to-everything receiving terminal may be an RSU. Alternatively, when the vehicle-to-everything sending terminal is an RSU, the vehicle-to-everything receiving terminal may be an OBU. Alternatively, when the vehicle-to-everything sending terminal is an OBU 1, the vehicle-to-everything receiving terminal may be an OBU 2. Alternatively, when the vehicle-to-everything sending terminal is an RSU 1, the vehicle-to-everything receiving terminal may be an RSU 2. Alternatively, the vehicle-to-everything communications terminal may be an intelligent transport system-station (intelligent transport system-station, ITS-S). When the vehicle-to-everything sending terminal communicates with the vehicle-to-everything receiving terminal, either the vehicle-to-everything sending terminal or the vehicle-to-everything receiving terminal may have an abnormal behavior. When the vehicle-to-everything receiving terminal determines, according to an abnormal behavior detection policy, an abnormal behavior feature from a vehicle-to-everything message (for example, a first vehicle-to-everything message) sent by the vehicle-to-everything sending terminal, the vehicle-to-everything receiving terminal determines that the first vehicle-to-everything message is an abnormal message. In this case, the vehicle-to-everything receiving terminal sends a report message to a vehicle-to-everything server.

In the embodiments of this application, the vehicle-to-everything server may generate an abnormal behavior detection policy. The abnormal behavior detection policy is used to detect, based on vehicle data collected from the vehicle-to-everything communications terminal, whether the vehicle-to-everything communications terminal has an abnormal behavior. The abnormal behavior is a behavior that a vehicle-to-everything communications terminal sends an abnormal message to interfere with normal traffic participation of another vehicle-to-everything communications terminal, and the abnormal behavior may also be referred to as a malicious behavior. For the abnormal behavior, it may be determined, according to a preset abnormal behavior detection algorithm, whether the vehicle-to-everything communications terminal has an abnormal behavior. The abnormal behavior detection algorithm may be a detection algorithm determined based on event content of a vehicle-to-everything message sent by the vehicle-to-everything communications terminal and a certificate of the vehicle-to-everything communications terminal. For example, when the vehicle-to-everything message sent by the vehicle-to-everything sending terminal is detected according to the abnormal behavior detection policy, a threshold of a quantity of sending times of a type of abnormal message may be set to 5. If an attacker sends this type of vehicle-to-everything message, the vehicle-to-everything message is determined as an abnormal message. If a quantity of times of sending this type of vehicle-to-everything message by the attacker is 5, it is determined that the attacker has an abnormal behavior. If a quantity of times of sending this type of vehicle-to-everything message by the vehicle-to-everything communications terminal is 0, the vehicle-to-everything message is determined as a normal message. In a subsequent embodiment, the abnormal behavior detection policy generated by the vehicle-to-everything server is described in detail.

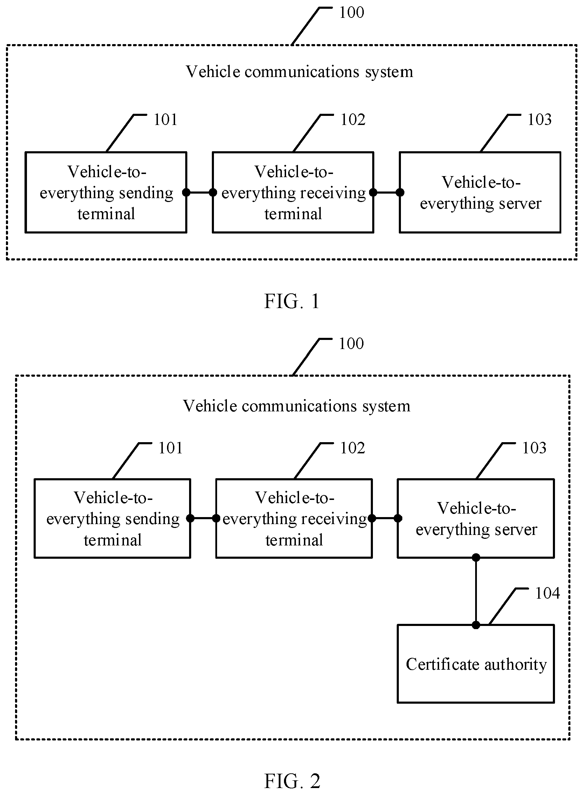

The following describes an architecture of a vehicle communications system provided in an embodiment of this application. As shown in FIG. 1, a vehicle communications system 100 includes a vehicle-to-everything sending terminal 101, a vehicle-to-everything receiving terminal 102, and a vehicle-to-everything server 103. The vehicle-to-everything sending terminal 101 sends a first vehicle-to-everything message, and the vehicle-to-everything receiving terminal 102 receives the first vehicle-to-everything message. When the vehicle-to-everything receiving terminal 102 detects that the first vehicle-to-everything message is an abnormal message, the vehicle-to-everything receiving terminal 102 sends a report message to the vehicle-to-everything server 103. In this way, the vehicle-to-everything server 103 may detect whether the vehicle-to-everything receiving terminal 102 has an abnormal behavior, and may also detect whether the vehicle-to-everything sending terminal 101 has an abnormal behavior. For example, the vehicle-to-everything server 103 may first detect whether the vehicle-to-everything receiving terminal 102 has an abnormal behavior, and further detect whether the vehicle-to-everything sending terminal 101 has an abnormal behavior when a report of the vehicle-to-everything receiving terminal 102 is not malicious. Further, the vehicle-to-everything server 103 may send a report message response. The report message response includes a detection result for the vehicle-to-everything sending terminal 101. The vehicle-to-everything receiving terminal 102 may receive the detection result, and then determine, based on the detection result, whether the vehicle-to-everything sending terminal 101 has an abnormal behavior. When the vehicle-to-everything sending terminal 101 has an abnormal behavior, the vehicle-to-everything receiving terminal 102 discards the received first vehicle-to-everything message. When the vehicle-to-everything sending terminal 101 has no abnormal behavior, the vehicle-to-everything receiving terminal 102 may communicate with the vehicle-to-everything sending terminal 101.

It should be noted that in some embodiments of this application, there may be one or more vehicle-to-everything receiving terminals in a vehicle-to-everything communications system. Therefore, after receiving a vehicle-to-everything message, each vehicle-to-everything receiving terminal may detect, according to an abnormal behavior detection policy, whether the received vehicle-to-everything message is an abnormal message.

In some embodiments of this application, as shown in FIG. 2, the vehicle communications system 100 may further include a certificate authority 104. The certificate authority 104 is configured to issue a certificate to a vehicle-to-everything communications terminal, and manage the issued certificate. For example, there may be a plurality of certificate authorities in the vehicle communications system. The certificate authorities are configured to issue certificates to a vehicle-to-everything sending terminal and a vehicle-to-everything receiving terminal, and manage the issued certificates. The certificate may be a long-term certificate or a short-term certificate. In a specific implementation scenario, the certificate authority may be an enrollment authority, or an authorization authority. The enrollment authority may also be referred to as an enrollment issuing authority, and the authorization authority may also be referred to as an authorization issuing authority. In addition, there may be one or more certificate authorities in the vehicle-to-everything communications system. If there are a plurality of certificate authorities, a vehicle-to-everything server may determine, for the vehicle-to-everything receiving terminal, a certificate authority that issues a certificate to the vehicle-to-everything receiving terminal, and the vehicle-to-everything server may determine, for the vehicle-to-everything sending terminal, a certificate authority that issues a certificate to the vehicle-to-everything sending terminal. The certificate authority in the vehicle-to-everything communications system in FIG. 2 is an example for description.

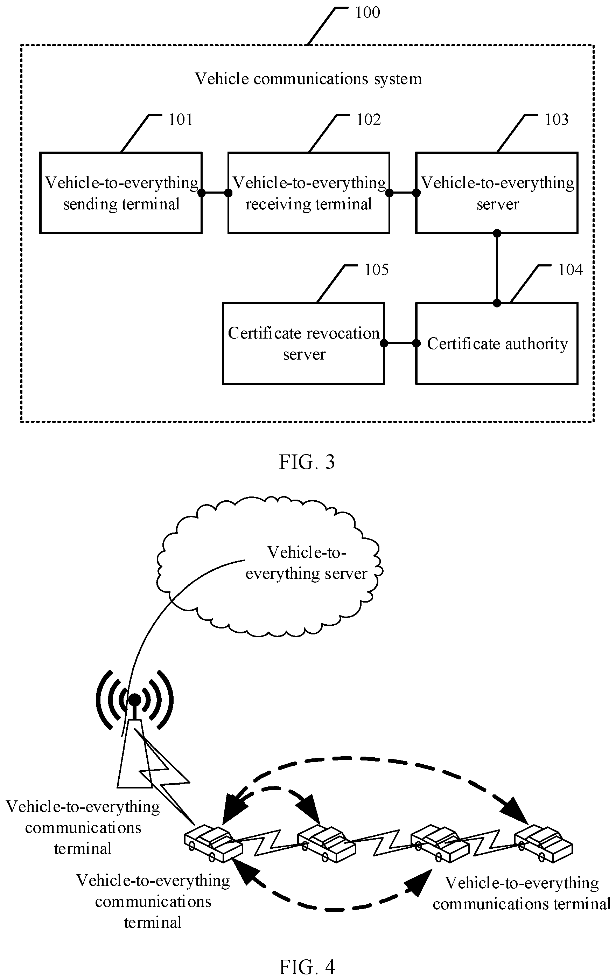

In some embodiments of this application, as shown in FIG. 3, compared with FIG. 2, the vehicle communications system 100 may further include a certificate revocation server 105. The certificate revocation server may revoke the certificate issued to the vehicle-to-everything communications terminal. For example, the certificate revocation server may be a certificate revocation list (CRL) server.

A vehicle-to-everything abnormal behavior detection method provided in an embodiment of this application is applied to a vehicle communications system. The vehicle communications system includes a vehicle-to-everything sending terminal, a vehicle-to-everything receiving terminal, and a vehicle-to-everything server. The following describes a communication process of the vehicle communications system in this embodiment of this application with an example. FIG. 4 is a schematic diagram in which group communication is used in the vehicle communications system in this embodiment of this application. The vehicle-to-everything (V2X) server communicates with a base station (eNodeB) or a road side unit (RSU) over an evolved packet core (EPC). The base station or the road side unit communicates with a vehicle-to-everything communications terminal through vehicle-to-vehicle (V2V) communication or a Uu interface. The V2V may include a fifth ProSe communication interface (ProSe communication 5, PC5) and a dedicated short-range communication (DSRC) interface. A terminal sending a message may be referred to as a vehicle-to-everything sending terminal. A terminal receiving a message may be referred to as a vehicle-to-everything receiving terminal. The terminals may communicate with each other in a V2V manner, for example, in a PC5 manner. The PC5 is a reference point between the terminals, which is also referred to as a Sidelink at a physical layer, and is configured to complete signaling and data transmission, neighbor service discovery, and direct communication that are of a control plane and a user plane, and a network access relay function for the terminals. The Uu interface refers to an interface between user equipment (UE) and a universal terrestrial radio access network (UMTS Terrestrial Radio Access Network, UTRAN), and is an air interface of a universal mobile telecommunications system (UMTS). A 802.11p-based DSRC technology is a wireless technology for short-distance data transmission between a road side unit and a mobile wireless unit, between mobile units, and between a portable unit and a mobile unit. The portable unit is a handheld device such as a mobile phone, and the mobile unit is, for example, a vehicle-mounted device.

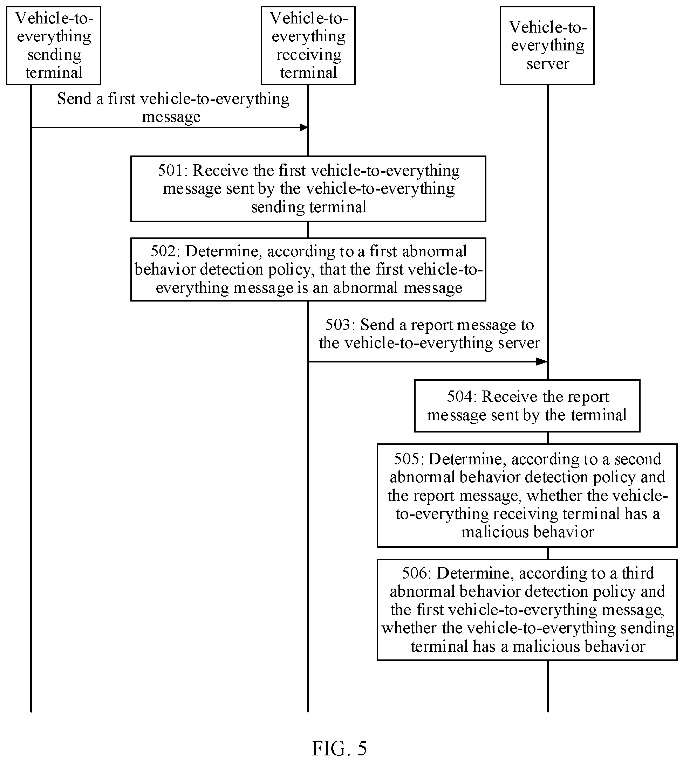

Refer to FIG. 5. A procedure of interaction between a vehicle-to-everything sending terminal, a vehicle-to-everything receiving terminal, and a vehicle-to-everything server in an embodiment of this application is first described. A vehicle-to-everything abnormal behavior detection method provided in this embodiment of this application mainly includes the following procedure.

501: The vehicle-to-everything receiving terminal receives a first vehicle-to-everything message sent by the vehicle-to-everything sending terminal.

In this embodiment of this application, the vehicle-to-everything receiving terminal may communicate with the vehicle-to-everything sending terminal. For example, if the vehicle-to-everything sending terminal sends the first vehicle-to-everything message, the vehicle-to-everything receiving terminal may receive the first vehicle-to-everything message. For example, one or more vehicle-to-everything receiving terminals may receive the first vehicle-to-everything message. The first vehicle-to-everything message may specifically be a periodic report message. For example, the periodic report message includes a cooperative awareness message (CAM). Alternatively, the first vehicle-to-everything message may be a trigger report message, where the trigger report message includes a decentralized environmental notification message (DENM).

502: The vehicle-to-everything receiving terminal determines, according to a first abnormal behavior detection policy, that the first vehicle-to-everything message is an abnormal message.

In this embodiment of this application, the vehicle-to-everything receiving terminal may pre-store the first abnormal behavior detection policy. The first abnormal behavior detection policy is used to detect whether a vehicle-to-everything message is an abnormal message. The first abnormal behavior detection policy may further include an abnormal behavior detection algorithm. The abnormal behavior detection algorithm is used to detect, based on vehicle data collected from a vehicle-to-everything communications terminal, whether the vehicle-to-everything communications terminal has an abnormal behavior.

In this embodiment of this application, after the vehicle-to-everything receiving terminal receives the first vehicle-to-everything message, the vehicle-to-everything receiving terminal first detects, according to the first abnormal behavior detection policy, whether the first vehicle-to-everything message is an abnormal message, and performs subsequent step 503 when determining that the first vehicle-to-everything message is an abnormal message.

In some embodiments of this application, before step 501 in which the vehicle-to-everything receiving terminal receives the first vehicle-to-everything message sent by the vehicle-to-everything sending terminal, the vehicle-to-everything abnormal behavior detection method provided in this embodiment of this application further includes the following step.

The vehicle-to-everything receiving terminal obtains the first abnormal behavior detection policy sent by the vehicle-to-everything server.

The vehicle-to-everything receiving terminal may send a policy obtaining request to the vehicle-to-everything server. For example, the policy obtaining request carries a vehicle ID of the vehicle-to-everything receiving terminal, to request to deliver an abnormal behavior detection policy. After receiving the policy obtaining request, the vehicle-to-everything server obtains, based on an identifier of the vehicle-to-everything receiving terminal, the first abnormal behavior detection policy corresponding to the vehicle-to-everything receiving terminal. For example, the first abnormal behavior detection policy may be a security policy list, and the security policy list includes a policy for determining that a vehicle-to-everything message is an abnormal message. The vehicle-to-everything server sends the first abnormal behavior detection policy, and the vehicle-to-everything receiving terminal receives the first abnormal behavior detection policy sent by the vehicle-to-everything server. The vehicle-to-everything receiving terminal may further store the first abnormal behavior detection policy. When receiving the first vehicle-to-everything message, the vehicle-to-everything receiving terminal obtains the stored first abnormal behavior detection policy, and detects, according to the first abnormal behavior detection policy, whether the received first vehicle-to-everything message is an abnormal message.

The first abnormal behavior detection policy includes: an abnormal behavior feature extraction manner and the abnormal behavior detection algorithm. For example, the abnormal behavior detection algorithm is a specific execution manner of the policy. For example, it is assumed that a broadcast range of a CAM message is 500 meters (m), an abnormal behavior feature may be that a geographical position in a CAM message of a vehicle is abnormal, and the abnormal behavior detection algorithm may be detecting whether a distance between the geographical position in the CAM message of the vehicle and the vehicle-to-everything receiving terminal exceeds 500 meters. If the distance between the vehicle position carried in the vehicle-to-everything message and the vehicle-to-everything receiving terminal exceeds 500 m, the CAM message may be considered as an abnormal message.

In some other embodiments of this application, the vehicle-to-everything server may alternatively actively push policy data to the vehicle-to-everything receiving terminal. For example, after a communication connection is established between the vehicle-to-everything server and the vehicle-to-everything receiving terminal, the vehicle-to-everything server may push the first abnormal behavior detection policy, and the vehicle-to-everything receiving terminal receives the first abnormal behavior detection policy sent by the vehicle-to-everything server. In addition, the vehicle-to-everything receiving terminal may further store the first abnormal behavior detection policy. When receiving the first vehicle-to-everything message, the vehicle-to-everything receiving terminal obtains the stored first abnormal behavior detection policy, and detects, according to the first abnormal behavior detection policy, whether the received first vehicle-to-everything message is an abnormal message.

In some embodiments of this application, step 502 in which the vehicle-to-everything receiving terminal determines, according to the first abnormal behavior detection policy, that the first vehicle-to-everything message is an abnormal message includes the following steps.

The vehicle-to-everything receiving terminal detects the first vehicle-to-everything message according to the first abnormal behavior detection policy, to obtain an abnormal behavior feature.

The vehicle-to-everything receiving terminal determines, based on the abnormal behavior feature, that the first vehicle-to-everything message is an abnormal message.

The first abnormal behavior detection policy includes the abnormal behavior feature extraction manner. The abnormal behavior feature is extracted from the first vehicle-to-everything message in the abnormal behavior feature extraction manner. For example, an abnormal behavior feature in aspects such as a certificate, a speed, a position, or reported event content of the vehicle-to-everything sending terminal may be extracted. The first vehicle-to-everything message is determined as am abnormal message based on the abnormal behavior feature. The abnormal behavior feature extraction manner in the first abnormal behavior detection policy may be determined based on a specific implementation scenario. For details, refer to an example description in the following embodiment. If no abnormal behavior feature is extracted, the first vehicle-to-everything message is determined as a normal message. If the abnormal behavior feature is extracted from the first vehicle-to-everything message, the first vehicle-to-everything message is determined as an abnormal message. The following describes the abnormal behavior feature in detail.

In some embodiments of this application, the abnormal behavior feature includes at least one of the following features: an abnormal permission behavior feature, an abnormal position behavior feature, an abnormal speed behavior feature, or an abnormal event behavior feature.

The abnormal permission behavior feature refers to a feature that a terminal permission is abnormal. The abnormal position behavior feature refers to a feature that a vehicle position of the vehicle-to-everything sending terminal is abnormal. The abnormal speed behavior feature refers to a feature that a running speed of the vehicle-to-everything sending terminal is abnormal. The abnormal event behavior feature refers to a feature that event content sent by the vehicle-to-everything sending terminal is abnormal. In actual application, a specific feature extraction manner may be set for the abnormal permission behavior feature, the abnormal position behavior feature, the abnormal speed behavior feature, or the abnormal event behavior feature according to an abnormal behavior detection policy.

In some embodiments of this application, the abnormal permission behavior feature includes: An application identifier (Application ID, AID) in a certificate of the vehicle-to-everything sending terminal does not include a sending permission corresponding to a type of the first vehicle-to-everything message, and/or a service specific permission (SSP) in the certificate of the vehicle-to-everything sending terminal does not include a terminal type in the first vehicle-to-everything message.

In this embodiment of this application, the certificate of the vehicle-to-everything sending terminal carries the application identifier. If the application identifier does not include the sending permission corresponding to the type of the first vehicle-to-everything message, it is determined that there is an abnormal behavior feature. The certificate of the vehicle-to-everything sending terminal carries the service specific permission. If the service specific permission does not include the terminal type carried in the first vehicle-to-everything message, it is determined that there is an abnormal behavior feature. For example, a terminal permission for sending the first vehicle-to-everything message does not meet a permission specified in the certificate of the vehicle-to-everything sending terminal. To be specific, the first vehicle-to-everything message carries a sender certificate, and the sender certificate may specify types of messages that can be sent by a sender. If a type of message exceeds a specified range, it may be determined that there is an abnormal behavior feature.

In some embodiments of this application, the abnormal position behavior feature includes:

A position difference between a vehicle position included in the first vehicle-to-everything message and a vehicle position of the vehicle-to-everything receiving terminal is greater than a geographical position spoofing threshold; and/or
when the first vehicle-to-everything message is a message sent by the vehicle-to-everything sending terminal for a first time, the difference between the vehicle position included in the first vehicle-to-everything message and the vehicle position of the vehicle-to-everything receiving terminal is less than a first message position threshold.

The vehicle-to-everything sending terminal and the vehicle-to-everything receiving terminal each may send a periodic report message, where the periodic report message may be a CAM. The periodic report message includes a position of the vehicle-to-everything communications terminal. Therefore, it may be determined whether a position difference between a current position of the vehicle-to-everything sending terminal and a current position of the vehicle-to-everything receiving terminal is greater than the geographical position spoofing threshold. For example, the abnormal position behavior feature includes determining of geographical position spoofing, and comparing a position difference between a position in a relative position (referencePosition) field in a CAM message of a sender and a position of a receiver with the geographical position spoofing threshold. If the position difference is greater than the geographical position spoofing threshold (T_MaxDis), it is determined, based on the first vehicle-to-everything message, that there is an abnormal position behavior feature.

The abnormal position behavior feature may further include a feature of first message position validity check. A message sent by the vehicle-to-everything sending terminal for a first time means that the vehicle-to-everything sending terminal communicates with the vehicle-to-everything receiving terminal for a first time. For a message sent by a vehicle for a first time, if a distance between a position of the vehicle and a receiver vehicle is less than a specified threshold T_FirMesDis, it is determined that the abnormal position behavior feature is extracted from the first vehicle-to-everything message. For example, it is impossible that a sender vehicle suddenly appears around the receiver vehicle. A running process of the sender vehicle needs to be a process from far to near. If the sender vehicle suddenly appears in a very small range of an area in which the receiver vehicle is located, it may be considered that the sender vehicle forges a position, because the two vehicles cannot physically overlap to share a same point.

In some embodiments of this application, the abnormal speed behavior feature includes:

A speed difference between a vehicle speed corresponding to event content included in the first vehicle-to-everything message and a vehicle speed reported by the vehicle-to-everything sending terminal is greater than a first speed threshold; and/or
speed differences between a vehicle speed included in the first vehicle-to-everything message and vehicle speeds reported by a plurality of vehicle-to-everything sending terminals located in a same position area are greater than a second speed threshold; and/or
a speed value obtained by dividing a position difference between a first historical position of the vehicle-to-everything sending terminal and a current vehicle position reported by the vehicle-to-everything sending terminal by a time difference is greater than a third speed threshold, where the time difference is a difference between a time stamp corresponding to the first historical position and a time stamp corresponding to the current vehicle position of the vehicle-to-everything sending terminal.

If the speed difference between the vehicle speed corresponding to the event content included in the first vehicle-to-everything message and the vehicle speed reported by the vehicle-to-everything sending terminal is greater than the first speed threshold, it is determined, based on the first vehicle-to-everything message, that there is an abnormal speed behavior feature. The first speed threshold may be set based on a specific scenario. For example, the vehicle-to-everything sending terminal may send a periodic report message, where the periodic report message may be a CAM. The vehicle-to-everything sending terminal may send a trigger report message, where the trigger report message may be a DENM. It may be determined, based on the periodic report message and the trigger report message, whether the abnormal speed behavior feature is met. For example, the periodic report message includes a traffic congestion event, but the trigger report message includes a current vehicle speed of the vehicle-to-everything sending terminal. If the vehicle speed exceeds the first speed threshold, the vehicle speed conflicts with the traffic congestion event. In this case, it is determined, based on the first vehicle-to-everything message, that there is an abnormal speed behavior feature.

If the speed differences between the vehicle speed included in the first vehicle-to-everything message and the vehicle speeds reported by the plurality of vehicle-to-everything sending terminals in the same position area are greater than the second speed threshold, it is determined, based on the first vehicle-to-everything message, that there is an abnormal speed behavior feature. The second speed threshold may be set based on a specific scenario. For example, for the plurality of vehicle-to-everything sending terminals located in the same position area, each vehicle-to-everything sending terminal may report a vehicle speed of the terminal. If a speed difference between the vehicle speed included in the first vehicle-to-everything message and a vehicle speed reported by another terminal in a same position is greater than the second speed threshold, it is determined, based on the first vehicle-to-everything message, that there is an abnormal speed behavior feature.

The vehicle-to-everything sending terminal first reports a historical position and a corresponding time stamp, and then reports the current position and the corresponding time stamp. In this way, the vehicle-to-everything receiving terminal may receive a plurality of positions and corresponding time stamps reported by the vehicle-to-everything sending terminal. It may be determined, based on received periodic report messages and a preset third speed threshold, whether the abnormal speed behavior feature is met. The third speed threshold may be set based on a specific scenario. The vehicle-to-everything sending terminal reports the first historical position and the corresponding time stamp. For example, the first historical position is a last reported vehicle position before the vehicle-to-everything sending terminal reports the current vehicle position. For example, a periodic report message parameter check policy includes a speed validity check method. A position difference between a historical path in a historical path (pathHistory) field of the sender and a position in a current referencePosition field of the sender is compared. If the position difference divided by the time difference is greater than a maximum speed (MaxSpeed), it is determined, based on the first vehicle-to-everything message, that there is an abnormal speed behavior feature.

In some embodiments of this application, the abnormal event behavior feature includes:

The event content included in the first vehicle-to-everything message is different from event content separately included in a plurality of vehicle-to-everything messages received by the vehicle-to-everything receiving terminal from a same position area; and/or
information collected by a vehicle sensor of the vehicle-to-everything receiving terminal does not match the event content included in the first vehicle-to-everything message.

The vehicle-to-everything sending terminal may send a trigger report message, where the trigger report message may be a DENM. For example, the first vehicle-to-everything message may be a trigger report message sent by the vehicle-to-everything sending terminal. In this case, the vehicle-to-everything receiving terminal may receive the trigger report message reported by the vehicle-to-everything sending terminal, and determine, based on the trigger report message, whether the behavior is isolated event spoofing. For example, if being near an event occurrence position (EventPostition) indicated in a received DENM, only a vehicle sends the DENM (including discovering the event or canceling the event), it is determined that the abnormal event behavior feature is extracted from the first vehicle-to-everything message.

In addition, whether parameter security is abnormal may further be determined based on the information collected by the vehicle sensor of the vehicle-to-everything receiving terminal. The abnormal event behavior feature may include that the information collected by the vehicle sensor of the vehicle-to-everything receiving terminal does not match the event content included in the first vehicle-to-everything message. For example, the vehicle sensor (for example, a global positioning system) of the vehicle-to-everything receiving terminal indicates, based on map software, that the receiver vehicle runs on a straight road, and roads in a front and rear range in which a V2X message can be received are straight. However, if a corner message sent by a nearby sender vehicle is received, it may be considered that a first vehicle-to-everything message sent by the sender vehicle has an abnormal behavior feature.

In some embodiments of this application, the first abnormal behavior detection policy includes at least one of the following policies: a certificate information security check policy, the periodic report message parameter check policy, a trigger report message parameter check policy, a comprehensive check policy for a periodic report message parameter or a trigger report message parameter, and a vehicle parameter check policy based on the vehicle-to-everything receiving terminal.

The certificate information security check policy is a check policy for verifying whether a parameter is secure through a certificate of the vehicle-to-everything communications terminal. The periodic report message parameter check policy is a check policy set for the periodic report message parameter. The trigger report message check policy is a check policy set for the trigger report message parameter. The comprehensive check policy for the periodic report message parameter and the trigger report message parameter is a check policy set for the periodic report message parameter and the trigger report message parameter. The vehicle parameter check policy is a check policy set based on a vehicle parameter of the vehicle-to-everything communications terminal, for example, a check policy set based on data collected by a sensor of the vehicle-to-everything communications terminal and data provided by a data source. For example, the data source may be a map data source, or a vehicle delivery data source.

For example, the certificate information security check policy may specifically include a V2X certificate information security check type, for example, a message checking permission, to check whether an AID and an SSP that are carried in a V2X message are in a list of an authorization certificate. The periodic report message parameter check policy may specifically include a CAM parameter check type, for example, geographical position spoofing. The difference between the relevant position (referencePosition) field in the CAM message of the sender and the position of the receiver is compared. If the difference is greater than T_MaxDis, the behavior is determined as geographical position spoofing. The trigger report message parameter check policy may include a DENM parameter check type, for example, isolated event spoofing. If being near the event occurrence position (EventPostition) indicated in the received DENM message, only a vehicle sends the DENM message (including discovering the event or canceling the event), the behavior is determined as isolated event spoofing. For example, the event is a traffic accident. The comprehensive check policy for the periodic report message parameter and the trigger report message parameter may specifically include a comprehensive check type for CAM and DENM parameters. For example, a traffic condition (Traffic condition) includes a case in which a quantity of vehicles increases, the quantity of vehicles slowly increases, the quantity of vehicles decreases, or the like. For example, a vehicle M reports a DENM message indicating that traffic congestion increases on a road section. A speed field in a CAM message sent by any vehicle on the congested road section is checked. If a speed is higher than a threshold T_TrafficUpSpeed, traffic congestion information reported by the vehicle M is considered to be abnormal. The vehicle parameter check policy based on the vehicle-to-everything receiving terminal may specifically include a check type based on a sensor of the vehicle-to-everything receiving terminal and another data source. For example, a vehicle may determine a message based on sensor information of the vehicle or map information. If the message is inconsistent with perception of a sensor of the vehicle, the message is considered as an abnormal message.

Further, in some embodiments of this application, that the vehicle-to-everything receiving terminal detects the abnormal behavior feature according to the abnormal behavior detection algorithm in the first abnormal behavior detection policy, and determines that the vehicle-to-everything sending terminal has an abnormal behavior includes the following steps.

The vehicle-to-everything receiving terminal obtains a quantity of occurrences of the abnormal behavior feature of the vehicle-to-everything sending terminal in a first time period.

The vehicle-to-everything receiving terminal obtains a total quantity of occurrences of the abnormal behavior feature in a second time period, where the second time period is greater than the first time period.

When the quantity of occurrences of the abnormal behavior feature in the first time period is greater than a first abnormal behavior threshold, and/or the total quantity of occurrences of the abnormal behavior feature in the second time period is greater than a second abnormal behavior threshold, the vehicle-to-everything receiving terminal determines that the vehicle-to-everything sending terminal has an abnormal behavior.

After extracting the abnormal behavior feature from the first vehicle-to-everything message, the vehicle-to-everything receiving terminal detects the abnormal behavior feature according to the abnormal behavior detection algorithm. For example, when the first vehicle-to-everything message sent by the vehicle-to-everything sending terminal is determined according to the first abnormal behavior detection policy, the abnormal behavior detection algorithm may be set to that a threshold of a quantity of sending times of a type of abnormal message may be 5. If a quantity of times of sending this type of vehicle-to-everything message by an attacker is 5, it is determined that the vehicle-to-everything sending terminal has an abnormal behavior. When it is detected that the vehicle-to-everything sending terminal has an abnormal behavior, the report message sent by the vehicle-to-everything receiving terminal to the vehicle-to-everything server may include that the vehicle-to-everything sending terminal has an abnormal behavior. Therefore, the vehicle-to-everything server may determine, based on the received report message including that the vehicle-to-everything sending terminal has an abnormal behavior, that the vehicle-to-everything sending terminal has an abnormal behavior. In this case, the vehicle-to-everything server may record the abnormal behavior of the vehicle-to-everything sending terminal.

In this embodiment of this application, statistical analysis may further be collected on the abnormal behavior feature, to determine whether the vehicle-to-everything sending terminal has a malicious behavior. For example, the quantity of occurrences of the abnormal behavior feature of the vehicle-to-everything sending terminal in the first time period is extracted, and the total quantity of occurrences of the abnormal behavior feature in the second time period is extracted. The first time period may be a preset unit time. The second time period may be a certificate validity period or half of the certificate validity period of the vehicle-to-everything sending terminal. The abnormal behavior detection algorithm includes the first abnormal behavior threshold and the second abnormal behavior threshold. It may be determined that the vehicle-to-everything sending terminal has an abnormal behavior provided that at least one of the following two conditions is met. The two conditions are: The quantity of occurrences of the abnormal behavior feature in the first time period is greater than the first abnormal behavior threshold, and the total quantity of occurrences of the abnormal behavior feature in the second time period is greater than the second abnormal behavior threshold.

For example, the vehicle-to-everything receiving terminal may execute the following detection algorithms:
1. Abnormal behavior determining through a security check, for example, certificate expiration determining. If a quantity of using an expired certificate by a vehicle in a unit time exceeds a certificate expiration abnormality determining threshold (T_CertExpMax), the behavior is determined as an abnormal behavior.
2. Abnormal behavior determining through a CAM parameter check, for example, determining of geographical position spoofing. If a quantity of occurrences of a geographical position spoofing behavior of a same vehicle in a unit time exceeds a geographical position spoofing abnormality determining threshold (T_GeoDecMax), the behavior is determined as an abnormal behavior.
3. Abnormal behavior determining through a DENM parameter check, for example, determining of isolated event spoofing. If a quantity of occurrences of an isolated position spoofing behavior of a same vehicle in a unit time exceeds an isolated event determining threshold (T_SolEveMax), the behavior is determined as an abnormal behavior.
4. Abnormal behavior determining through a comprehensive check of the CAM and DENM parameters, for example, determining of a type of XX event spoofing. If a quantity of occurrences of an XX event spoofing behavior of a same vehicle in a unit time exceeds an XX time spoofing abnormality determining threshold (T_XXEveMax), the behavior is determined as an abnormal behavior.
5. Abnormal behavior determining through a check based on the sensor of vehicle-to-everything receiving terminal, for example, determining of inconsistency with the sensor of the vehicle-to-everything receiving terminal. If a quantity of behaviors that a received message sent from a same vehicle is inconsistent with detection of the sensor of the vehicle exceeds a sensor determining threshold (T_SenIncMax) in a unit time, the behavior is determined as an abnormal behavior.
6. If a threshold is not exceeded in a unit time, a quantity of abnormalities in a period is accumulated. For each feature, a total quantity of occurrences within the certificate validity period (or half of the validity period) is counted. If the total quantity of occurrences exceeds a total quantity threshold (T_PerMax), the feature is determined as an abnormal behavior.

Further, in some embodiments of this application, after the vehicle-to-everything receiving terminal determines, according to the abnormal behavior detection algorithm in the first abnormal behavior detection policy, that the first vehicle-to-everything message is a malicious message, the vehicle-to-everything abnormal behavior detection method provided in this embodiment of this application further includes the following step.

The vehicle-to-everything receiving terminal adds the vehicle-to-everything sending terminal to a blacklist, where the blacklist is used to intercept avehicle-to-everything message received by the vehicle-to-everything receiving terminal.

If the vehicle-to-everything sending terminal has an abnormal behavior, the vehicle-to-everything receiving terminal may add the certificate of the vehicle-to-everything sending terminal to a local blacklist, to implement an operation of discarding a subsequent message of the vehicle-to-everything sending terminal, because the vehicle-to-everything sending terminal may continue to send a message. In this case, through interception of the blacklist, the subsequent message of the vehicle-to-everything sending terminal may be processed in time, to avoid interference of the abnormal behavior of the vehicle-to-everything sending terminal to the vehicle-to-everything receiving terminal.

503: The vehicle-to-everything receiving terminal sends a report message to the vehicle-to-everything server, where the report message includes the first vehicle-to-everything message.

In this embodiment of this application, when the vehicle-to-everything receiving terminal determines that the first vehicle-to-everything message is an abnormal message, the vehicle-to-everything receiving terminal sends the report message to the vehicle-to-everything server. The report message includes the first vehicle-to-everything message. Further, the report message may include a certificate and an abnormality type of the vehicle-to-everything receiving terminal. The abnormality type means that the first vehicle-to-everything message is an abnormal message or a malicious message.

In some embodiments of this application, step 503 in which the vehicle-to-everything receiving terminal sends the report message to the vehicle-to-everything server includes the following steps.

The vehicle-to-everything receiving terminal caches the first vehicle-to-everything message.

When the cached vehicle-to-everything message meets a preset report condition, the vehicle-to-everything receiving terminal sends the report message to the vehicle-to-everything server.

When the vehicle-to-everything receiving terminal determines that the first vehicle-to-everything message is an abnormal message, the vehicle-to-everything receiving terminal may first cache the first vehicle-to-everything message, and determine, based on the preset report condition, whether the cached vehicle-to-everything message meets the condition. When the report condition is met, the vehicle-to-everything receiving terminal sends the report message to the vehicle-to-everything server, to reduce a frequency of frequently receiving the report message by the vehicle-to-everything server, and reduce processing load of the vehicle-to-everything server.

For example, after the vehicle-to-everything receiving terminal receives a vehicle-to-everything message from a vehicle-to-everything sending terminal, when determining that the vehicle-to-everything message is an abnormal message, the vehicle-to-everything receiving terminal first caches the vehicle-to-everything message. In this manner, the vehicle-to-everything receiving terminal may cache a plurality of vehicle-to-everything messages sent by one vehicle-to-everything sending terminal, or cache a plurality of vehicle-to-everything messages sent by different vehicle-to-everything sending terminals. These vehicle-to-everything messages may be for a same event, or may be for different events. Therefore, the vehicle-to-everything receiving terminal may classify and cache these vehicle-to-everything messages. For example, a plurality of vehicle-to-everything messages are cached and classified, for example, cached and classified according to same-vehicle same-event, same-vehicle different-event, different-vehicle same-event, or different-vehicle different-event. When a cache exceeds a threshold (such as a time threshold and a quantity threshold), the cache is uniformly reported to the vehicle-to-everything server, and the vehicle-to-everything server identifies an abnormal behavior. The same-vehicle same-event refers to a plurality of vehicle-to-everything messages for a same event of a same vehicle-to-everything sending terminal. The same-vehicle different-event refers to a plurality of vehicle-to-everything messages for different events of a same vehicle-to-everything sending terminal. The different-vehicle same-event refers to a plurality of vehicle-to-everything messages for a same event of a plurality of vehicle-to-everything sending terminals. The different-vehicle different-event refers to a plurality of vehicle-to-everything messages without distinguishing a vehicle-to-everything sending terminal and an event type.

504: The vehicle-to-everything server receives the report message sent by the vehicle-to-everything receiving terminal, where the report message includes the first vehicle-to-everything message sent by the vehicle-to-everything sending terminal.

In this embodiment of this application, the vehicle-to-everything receiving terminal sends the report message to the vehicle-to-everything server. The vehicle-to-everything server may receive the report message sent by the vehicle-to-everything receiving terminal, and parse the report message to obtain the first vehicle-to-everything message sent by the vehicle-to-everything sending terminal.

In some embodiments of this application, before step 504 in which the vehicle-to-everything server receives the report message sent by the vehicle-to-everything receiving terminal, the method provided in this embodiment of this application further includes the following step.

The vehicle-to-everything server sends the first abnormal behavior detection policy to the vehicle-to-everything receiving terminal.

The vehicle-to-everything receiving terminal may send a policy obtaining request to the vehicle-to-everything server. For example, the policy obtaining request carries a vehicle ID of the vehicle-to-everything receiving terminal, to request to deliver an abnormal behavior detection policy. After receiving the policy obtaining request, the vehicle-to-everything server obtains, based on an identifier of the vehicle-to-everything receiving terminal, the first abnormal behavior detection policy corresponding to the vehicle-to-everything receiving terminal. For example, the first abnormal behavior detection policy may be a security policy list, and the security policy list includes a policy for determining that a vehicle-to-everything message is an abnormal message or a malicious message. The vehicle-to-everything server sends the first abnormal behavior detection policy. The vehicle-to-everything receiving terminal receives the first abnormal behavior detection policy sent by the vehicle-to-everything server, and stores the first abnormal behavior detection policy. When receiving the first vehicle-to-everything message, the vehicle-to-everything receiving terminal obtains the stored first abnormal behavior detection policy.

In some other embodiments of this application, the vehicle-to-everything server may actively push policy data to the vehicle-to-everything receiving terminal. For example, after a communication connection is established between the vehicle-to-everything server and the vehicle-to-everything receiving terminal, the vehicle-to-everything server may push the first abnormal behavior detection policy. The vehicle-to-everything receiving terminal receives the first abnormal behavior detection policy sent by the vehicle-to-everything server, and stores the first abnormal behavior detection policy. When receiving the first vehicle-to-everything message, the vehicle-to-everything receiving terminal obtains the stored first abnormal behavior detection policy.

505: The vehicle-to-everything server determines, according to a second abnormal behavior detection policy and the report message, whether the vehicle-to-everything receiving terminal has an abnormal behavior.

In this embodiment of this application, the vehicle-to-everything server may pre-store the second abnormal behavior detection policy. The second abnormal behavior detection policy is used to detect whether the vehicle-to-everything receiving terminal has an abnormal behavior. For example, the second abnormal behavior detection policy is used to detect, based on the report message of the vehicle-to-everything receiving terminal, whether the vehicle-to-everything receiving terminal has an abnormal behavior. After the vehicle-to-everything server receives the report message sent by the vehicle-to-everything receiving terminal, the vehicle-to-everything server needs to determine whether a report of the vehicle-to-everything receiving terminal is malicious. The vehicle-to-everything server determines, according to the second abnormal behavior detection policy and the report message, whether the vehicle-to-everything receiving terminal has an abnormal behavior. The second abnormal behavior detection policy may include an abnormal behavior detection algorithm. The abnormal behavior detection algorithm is used to determine whether the vehicle-to-everything receiving terminal has an abnormal behavior. An example is used in a subsequent embodiment to describe the abnormal behavior detection algorithm.

In some embodiments of this application, a vehicle communications system further includes a plurality of certificate authorities. Step 505 in which the vehicle-to-everything server determines, according to the second abnormal behavior detection policy and the report message, whether the vehicle-to-everything receiving terminal has an abnormal behavior includes the following steps.

The vehicle-to-everything server obtains a plurality of certificates of the vehicle-to-everything receiving terminal from a first certificate authority, where the first certificate authority is configured to issue a plurality of certificates to the vehicle-to-everything receiving terminal.

The vehicle-to-everything server determines a total quantity of reports of the vehicle-to-everything receiving terminal based on the plurality of certificates of the vehicle-to-everything receiving terminal.

The vehicle-to-everything server determines, based on the total quantity of reports, whether the vehicle-to-everything receiving terminal has an abnormal behavior.

The vehicle communications system further includes a plurality of certificate authorities. The certificate authority is configured to issue a certificate to the vehicle-to-everything communications terminal. The certificate authority is classified into the following two types: a long-term certificate management type and a short-term certificate management type. For example, the certificate authority may be an enrollment authority (enrollment authority, EA). Alternatively, the certificate authority may be an authorization authority (authorization authority, AA). The enrollment authority is configured to issue a long-term certificate to the vehicle-to-everything communications terminal. The authorization authority is configured to issue a short-term certificate to the vehicle-to-everything communications terminal, and may issue one or more short-term certificates. A plurality of short-term certificates of a same vehicle-to-everything terminal may be associated through a linkage value (LV).

In this embodiment of this application, the report message sent by the vehicle-to-everything receiving terminal may include a certificate of the vehicle-to-everything receiving terminal. The vehicle-to-everything server determines the first certificate authority based on the certificate of the vehicle-to-everything receiving terminal. The first certificate authority is one of the plurality of certificate authorities. Then, the vehicle-to-everything server sends a first certificate query request to the first certificate authority. The first certificate query request includes the certificate of the vehicle-to-everything receiving terminal. The first certificate authority determines a plurality of certificates of the vehicle-to-everything receiving terminal based on one certificate carried in the first certificate query request, and then sends the plurality of certificates of the vehicle-to-everything receiving terminal to the vehicle-to-everything server. After the vehicle-to-everything server receives the plurality of certificates of the vehicle-to-everything receiving terminal, the vehicle-to-everything server determines a total quantity of reports of the vehicle-to-everything receiving terminal based on the plurality of certificates of the vehicle-to-everything receiving terminal. For example, a total quantity of reports initiated by the vehicle-to-everything receiving terminal in a period of time is counted, and it is determined, based on a preset report quantity threshold, whether the total quantity of reports exceeds the threshold. If the total quantity of reports of the vehicle-to-everything receiving terminal exceeds the threshold, it is determined that the vehicle-to-everything receiving terminal has an abnormal behavior. If the threshold is not exceeded, it is determined that the vehicle-to-everything receiving terminal does not have an abnormal behavior. In the foregoing embodiment, a report behavior initiated by the vehicle-to-everything receiving terminal is determined to determine whether the vehicle-to-everything receiving terminal has an abnormal behavior. In actual application, another abnormal behavior detection algorithm may alternatively be used according to the second abnormal behavior detection policy to determine whether the vehicle-to-everything receiving terminal has an abnormal behavior. This is not limited.

506: The vehicle-to-everything server determines, according to a third abnormal behavior detection policy and the first vehicle-to-everything message, whether the vehicle-to-everything sending terminal has an abnormal behavior.

In this embodiment of this application, the vehicle-to-everything server may pre-store the third abnormal behavior detection policy. The third abnormal behavior detection policy is used to detect whether the vehicle-to-everything sending terminal has an abnormal behavior. For example, the third abnormal behavior detection policy is used to detect, based on the first vehicle-to-everything message sent by the vehicle-to-everything sending terminal, whether the vehicle-to-everything sending terminal has an abnormal behavior. After excluding a malicious report of the vehicle-to-everything receiving terminal, the vehicle-to-everything server determines, according to the third abnormal behavior detection policy and the first vehicle-to-everything message, whether the vehicle-to-everything sending terminal has an abnormal behavior. The third abnormal behavior detection policy may include an abnormal behavior detection algorithm. The abnormal behavior detection algorithm is used to determine whether the vehicle-to-everything sending terminal has an abnormal behavior. For example, the third abnormal behavior detection policy may be a corresponding detection policy set for an event carried in the vehicle-to-everything message, a terminal sending the vehicle-to-everything message, or the vehicle-to-everything message. An example is used in the following embodiment to describe the abnormal behavior detection algorithm.

It should be noted that, in FIG. 5, an example in which step 505 is performed before step 506 is used for description. This is not limited. Step 505 and step 506 are not subject to a specific sequence. In some other embodiments of this application, step 506 in which the vehicle-to-everything server determines, according to the third abnormal behavior detection policy and the first vehicle-to-everything message, whether the vehicle-to-everything sending terminal has an abnormal behavior includes the following step.

When the vehicle-to-everything receiving terminal has no abnormal behavior, the vehicle-to-everything server determines, based on the third abnormal behavior detection policy and the first vehicle-to-everything message, whether the vehicle-to-everything sending terminal has an abnormal behavior.

After excluding the malicious report of the vehicle-to-everything receiving terminal, the vehicle-to-everything server determines, according to the third abnormal behavior detection policy and the first vehicle-to-everything message, whether the vehicle-to-everything sending terminal has an abnormal behavior. Step 505 is performed before step 506, so that the vehicle-to-everything server may first exclude the malicious report of the vehicle-to-everything receiving terminal, to avoid interference of an abnormal behavior of the vehicle-to-everything receiving terminal to the vehicle-to-everything sending terminal.

In some embodiments of this application, after step 503 in which the vehicle-to-everything receiving terminal sends the report message to the vehicle-to-everything server, the vehicle-to-everything abnormal behavior detection method provided in this embodiment of this application further includes the following steps.

The vehicle-to-everything receiving terminal receives a report message response sent by the vehicle-to-everything server.

The vehicle-to-everything receiving terminal determines, based on the report message response, whether the vehicle-to-everything sending terminal has an abnormal behavior.

After the vehicle-to-everything server determines whether the vehicle-to-everything sending terminal has an abnormal behavior, the vehicle-to-everything server may further generate a report message response. The report message response may include an arbitration result of the vehicle-to-everything server to the vehicle-to-everything sending terminal. Then, the report message response is sent to the vehicle-to-everything receiving terminal. The vehicle-to-everything receiving terminal receives the report message response sent by the vehicle-to-everything server, and determines, based on to the report message response, whether the vehicle-to-everything sending terminal has an abnormal behavior. For example, the vehicle-to-everything receiving terminal may determine a subsequent message processing manner for the first vehicle-to-everything message based on the arbitration result of the vehicle-to-everything server to the vehicle-to-everything sending terminal. For example, when determining that the vehicle-to-everything sending terminal has an abnormal behavior, the vehicle-to-everything receiving terminal discards the first vehicle-to-everything message without processing. If the vehicle-to-everything sending terminal has no abnormal behavior, the vehicle-to-everything receiving terminal may normally process the first vehicle-to-everything message, for example, give a feedback based on the first vehicle-to-everything message.

Further, in some embodiments of this application, after the vehicle-to-everything receiving terminal determines, based on the report message response, whether the vehicle-to-everything sending terminal has an abnormal behavior, the vehicle-to-everything abnormal behavior detection method provided in this embodiment of this application further includes the following step.

When the vehicle-to-everything sending terminal has an abnormal behavior, the vehicle-to-everything receiving terminal adds the vehicle-to-everything sending terminal to the blacklist, where the blacklist is used to intercept the vehicle-to-everything message received by the vehicle-to-everything receiving terminal.

If the vehicle-to-everything sending terminal has an abnormal behavior, the vehicle-to-everything receiving terminal may add the certificate of the vehicle-to-everything sending terminal to the local blacklist, to implement the operation of discarding the subsequent message of the vehicle-to-everything sending terminal, because the vehicle-to-everything sending terminal may continue to send the message. In this case, through the interception of the blacklist, the subsequent message of the vehicle-to-everything sending terminal may be processed in time, to avoid the interference of the abnormal behavior of the vehicle-to-everything sending terminal to the vehicle-to-everything receiving terminal.

In some embodiments of this application, after step 506 in which the vehicle-to-everything server determines, according to the third abnormal behavior detection policy and the first vehicle-to-everything message, whether the vehicle-to-everything sending terminal has an abnormal behavior, the method provided in this embodiment of this application further includes the following steps.

The vehicle-to-everything server generates the report message response, where the report message response is used to indicate whether the vehicle-to-everything sending terminal has an abnormal behavior.

The vehicle-to-everything server sends the report message response.

After the vehicle-to-everything server determines whether the vehicle-to-everything sending terminal has an abnormal behavior, the vehicle-to-everything server may further generate the report message response. The report message response may include the arbitration result of the vehicle-to-everything server to the vehicle-to-everything sending terminal. Then, the report message response is sent to the vehicle-to-everything receiving terminal. In this way, the vehicle-to-everything receiving terminal receives the report message response sent by the vehicle-to-everything server, and determines, based on to the report message response, whether the vehicle-to-everything sending terminal has an abnormal behavior.

In some embodiments of this application, the vehicle communications system includes a plurality of vehicle-to-everything receiving terminals, and the vehicle communications system further includes a plurality of certificate authorities. Step 506 in which the vehicle-to-everything server determines, according to the third abnormal behavior detection policy and the first vehicle-to-everything message, whether the vehicle-to-everything sending terminal has an abnormal behavior includes the following steps.

The vehicle-to-everything server obtains a plurality of certificates of the vehicle-to-everything sending terminal from a second certificate authority, where the second certificate authority is configured to issue a plurality of certificates to the vehicle-to-everything sending terminal.

The vehicle-to-everything server determines, based on the plurality of certificates of the vehicle-to-everything sending terminal and the first vehicle-to-everything message, a first total quantity of reports of the plurality of vehicle-to-everything receiving terminals, where the first total quantity of reports is a total quantity of reports of the plurality of vehicle-to-everything receiving terminals for the vehicle-to-everything sending terminal or for the first vehicle-to-everything message.

The vehicle-to-everything server determines, based on the first total quantity of times that the vehicle-to-everything sending terminal is reported by the plurality of vehicle-to-everything receiving terminals, whether the vehicle-to-everything sending terminal has an abnormal behavior.

In this embodiment of this application, the first vehicle-to-everything message sent by the vehicle-to-everything sending terminal may include the certificate of the vehicle-to-everything sending terminal, and the vehicle-to-everything server determines the second certificate authority based on the certificate of the vehicle-to-everything sending terminal. Then, the vehicle-to-everything server sends a first certificate query request to the second certificate authority. The second certificate query request includes the certificate of the vehicle-to-everything sending terminal. The second certificate authority determines the plurality of certificates of the vehicle-to-everything sending terminal based on one certificate carried in the second certificate query request, and then sends the plurality of certificates of the vehicle-to-everything sending terminal to the vehicle-to-everything server. The vehicle-to-everything server determines the first total quantity of reports of the plurality of vehicle-to-everything receiving terminals based on the plurality of certificates of the vehicle-to-everything sending terminal and the first vehicle-to-everything message. The first total quantity of reports is the total quantity of reports of the plurality of vehicle-to-everything receiving terminals for the vehicle-to-everything sending terminal or for the first vehicle-to-everything message. For example, when a plurality of vehicle-to-everything receiving terminals report a plurality of vehicle-to-everything messages of the vehicle-to-everything sending terminal, or when a plurality of vehicle-to-everything receiving terminals report a same vehicle-to-everything message for a plurality of times, the vehicle-to-everything server may calculate the first total quantity of reports, and determine, based on a preset report quantity threshold, whether the first total quantity of reports exceeds the threshold. If the first total quantity of reports exceeds the threshold, it is determined that the vehicle-to-everything sending terminal has an abnormal behavior. If the threshold is not exceeded, it is determined that the vehicle-to-everything sending terminal does not have an abnormal behavior. In the foregoing embodiment, the vehicle-to-everything sending terminal is determined to determine whether the vehicle-to-everything sending terminal has an abnormal behavior. In actual application, another abnormal behavior detection algorithm may alternatively be used according to the third abnormal behavior detection policy to determine whether the vehicle-to-everything sending terminal has an abnormal behavior. This is not limited.

In some embodiments of this application, the vehicle communications system includes a plurality of vehicle-to-everything receiving terminals.

Step 506 in which the vehicle-to-everything server determines, according to the third abnormal behavior detection policy and the first vehicle-to-everything message, whether the vehicle-to-everything sending terminal has an abnormal behavior includes the following steps.

The vehicle-to-everything server receives report messages separately sent by the plurality of vehicle-to-everything receiving terminals.

The vehicle-to-everything server detects, according to the third abnormal behavior detection policy, vehicle-to-everything messages separately carried in the plurality of report messages, to obtain a plurality of abnormal behavior features.

The vehicle-to-everything server collects statistical analysis on the plurality of abnormal behavior features to obtain whether the vehicle-to-everything sending terminal has an abnormal behavior.

In addition to determining, based on a quantity of reports, whether the vehicle-to-everything sending terminal has an abnormal behavior, the vehicle-to-everything server may alternatively determine, by using a global feature detection method, whether the vehicle-to-everything sending terminal has an abnormal behavior. For example, the vehicle-to-everything server receives report messages from the plurality of vehicle-to-everything receiving terminals, and the vehicle-to-everything server performs, according to the third abnormal behavior detection policy, abnormal behavior feature extraction on vehicle-to-everything messages separately carried in the plurality of report messages, to obtain a plurality of abnormal behavior features. The vehicle-to-everything server detects the plurality of abnormal behavior features according to the abnormal behavior detection algorithm in the third abnormal behavior detection policy, to obtain whether the vehicle-to-everything sending terminal has an abnormal behavior.

In some embodiments of this application, the abnormal behavior feature includes at least one of the following features: the abnormal permission behavior feature, the abnormal position behavior feature, the abnormal speed behavior feature, or the abnormal event behavior feature.

The abnormal permission behavior feature refers to the feature that the terminal permission is abnormal. The abnormal position behavior feature refers to the feature that the vehicle position of the vehicle-to-everything sending terminal is abnormal. The abnormal speed behavior feature refers to the feature that the running speed of the vehicle-to-everything sending terminal is abnormal. The abnormal event behavior feature refers to the feature that the event content sent by the vehicle-to-everything sending terminal is abnormal. In actual application, a specific feature extraction manner may be set for the abnormal permission behavior feature, the abnormal position behavior feature, the abnormal speed behavior feature, or the abnormal event behavior feature according to an abnormal behavior detection policy.

In some embodiments of this application, the abnormal permission behavior feature includes: The application identifier AID in the certificate of the vehicle-to-everything sending terminal does not include the sending permission corresponding to the type of the first vehicle-to-everything message, and/or the service specific permission SSP in the certificate of the vehicle-to-everything sending terminal does not include the terminal type in the first vehicle-to-everything message.

In this embodiment of this application, the certificate of the vehicle-to-everything sending terminal carries the application identifier. If the application identifier does not include the sending permission corresponding to the type of the first vehicle-to-everything message, it is determined that there is an abnormal behavior feature. The certificate of the vehicle-to-everything sending terminal carries the service specific permission. If the service specific permission does not include the terminal type carried in the first vehicle-to-everything message, it is determined that there is an abnormal behavior feature. For example, the terminal permission for sending the first vehicle-to-everything message does not meet the permission specified in the certificate of the vehicle-to-everything sending terminal. To be specific, the first vehicle-to-everything message carries the sender certificate, and the sender certificate may specify types of messages that can be sent by the sender. If the type of message exceeds the specified range, it may be determined that there is an abnormal behavior feature.

In some embodiments of this application, the abnormal position behavior feature includes:

The position difference between the vehicle position included in the first vehicle-to-everything message and the vehicle position of the vehicle-to-everything receiving terminal is greater than the geographical position spoofing threshold; and/or
when the first vehicle-to-everything message is a message sent by the vehicle-to-everything sending terminal for the first time, the difference between the vehicle position included in the first vehicle-to-everything message and the vehicle position of the vehicle-to-everything receiving terminal is less than the first message position threshold.

The vehicle-to-everything sending terminal and the vehicle-to-everything receiving terminal each may send a periodic report message, where the periodic report message may be a CAM. The periodic report message includes the position of the vehicle-to-everything communications terminal. Therefore, it may be determined whether the position difference between the current position of the vehicle-to-everything sending terminal and the current position of the vehicle-to-everything receiving terminal is greater than the geographical position spoofing threshold. For example, the abnormal position behavior feature includes determining of the geographical position spoofing, and comparing the position difference between the position in the relative position (referencePosition) field in the CAM message of the sender and the position of the receiver with the geographical position spoofing threshold. If the position difference is greater than the geographical position spoofing threshold (T_MaxDis), it is determined, based on the first vehicle-to-everything message, that there is an abnormal position behavior feature.

The abnormal position behavior feature may further include the feature of first message position validity check. The message sent by the vehicle-to-everything sending terminal for the first time means that the vehicle-to-everything sending terminal communicates with the vehicle-to-everything receiving terminal for the first time. For a message sent by a vehicle for a first time, if a distance between a position of the vehicle and the receiver vehicle is less than the specified threshold T_FirMesDis, it is determined that the abnormal position behavior feature is extracted from the first vehicle-to-everything message. For example, it is impossible that the sender vehicle suddenly appears around the receiver vehicle. The running process of the sender vehicle needs to be a process from far to near. If the sender vehicle suddenly appears in the very small range of the area in which the receiver vehicle is located, it may be considered that the sender vehicle forges the position, because the two vehicles cannot physically overlap to enjoy a same position.

In some embodiments of this application, the abnormal speed behavior feature includes:

The speed difference between the vehicle speed corresponding to the event content included in the first vehicle-to-everything message and the vehicle speed reported by the vehicle-to-everything sending terminal is greater than the first speed threshold; and/or
speed differences between the vehicle speed included in the first vehicle-to-everything message and vehicle speeds reported by a plurality of vehicle-to-everything sending terminals located in a same position area are greater than the second speed threshold; and/or
the speed value obtained by dividing the position difference between the first historical position of the vehicle-to-everything sending terminal and the current vehicle position reported by the vehicle-to-everything sending terminal by the time difference is greater than the third speed threshold, where the time difference is the difference between the time stamp corresponding to the first historical position and the time stamp corresponding to the current vehicle position of the vehicle-to-everything sending terminal.

If the speed difference between the vehicle speed corresponding to the event content included in the first vehicle-to-everything message and the vehicle speed reported by the vehicle-to-everything sending terminal is greater than the first speed threshold, it is determined, based on the first vehicle-to-everything message, that there is an abnormal speed behavior feature. The first speed threshold may be set based on a specific scenario. For example, the vehicle-to-everything sending terminal may send a periodic report message, where the periodic report message may be a CAM. The vehicle-to-everything sending terminal may send a trigger report message, where the trigger report message may be a DENM. It may be determined, based on the periodic report message and the trigger report message, whether the abnormal speed behavior feature is met. For example, the periodic report message includes a traffic congestion event, but the trigger report message includes the current vehicle speed of the vehicle-to-everything sending terminal. If the vehicle speed exceeds the first speed threshold, the vehicle speed conflicts with the traffic congestion event. In this case, it is determined, based on the first vehicle-to-everything message, that there is an abnormal speed behavior feature.

If the speed differences between the vehicle speed included in the first vehicle-to-everything message and the vehicle speeds reported by the plurality of vehicle-to-everything sending terminals in the same position area are greater than the second speed threshold, it is determined, based on the first vehicle-to-everything message, that there is an abnormal speed behavior feature. The second speed threshold may be set based on a specific scenario. For example, for the plurality of vehicle-to-everything sending terminals located in the same position area, each vehicle-to-everything sending terminal may report a vehicle speed of the terminal. If a speed difference between the vehicle speed included in the first vehicle-to-everything message and a vehicle speed reported by another terminal in a same position is greater than the second speed threshold, it is determined, based on the first vehicle-to-everything message, that there is an abnormal speed behavior feature.

The vehicle-to-everything sending terminal first reports the historical position and the corresponding time stamp, and then reports the current position and the corresponding time stamp. In this way, the vehicle-to-everything receiving terminal may receive a plurality of positions and corresponding time stamps reported by the vehicle-to-everything sending terminal. It may be determined, based on received periodic report messages and the preset third speed threshold, whether the abnormal speed behavior feature is met. The third speed threshold may be set based on a specific scenario. The vehicle-to-everything sending terminal reports the first historical position and the corresponding time stamp. For example, the first historical position is the last reported vehicle position before the vehicle-to-everything sending terminal reports the current vehicle position. For example, the periodic report message parameter check policy includes the speed validity check method. The position difference between the historical path in the historical path (pathHistory) field of the sender and the position in the current referencePosition field of the sender is compared. If the position difference divided by the time difference is greater than the maximum speed (MaxSpeed), it is determined, based on the first vehicle-to-everything message, that there is an abnormal speed behavior feature.

In some embodiments of this application, the abnormal event behavior feature includes:

The event content included in the first vehicle-to-everything message is different from event content separately included in a plurality of vehicle-to-everything messages received by the vehicle-to-everything receiving terminal from a same position area; and/or
information collected by the vehicle sensor of the vehicle-to-everything receiving terminal does not match the event content included in the first vehicle-to-everything message.

The vehicle-to-everything sending terminal may send a trigger report message, where the trigger report message may be a DENM. For example, the first vehicle-to-everything message may be the trigger report message sent by the vehicle-to-everything sending terminal. In this case, the vehicle-to-everything receiving terminal may receive the trigger report message reported by the vehicle-to-everything sending terminal, and determine, based on the trigger report message, whether the behavior is isolated event spoofing. For example, if being near an event occurrence position (EventPostition) indicated in a received DENM, only a vehicle sends the DENM (including discovering the event or canceling the event), it is determined that the abnormal event behavior feature is extracted from the first vehicle-to-everything message.

In addition, whether the parameter security is abnormal may further be determined based on the information collected by the vehicle sensor of the vehicle-to-everything receiving terminal. The abnormal event behavior feature may include that the information collected by the vehicle sensor of the vehicle-to-everything receiving terminal does not match the event content included in the first vehicle-to-everything message. For example, the vehicle sensor (for example, the global positioning system) of the vehicle-to-everything receiving terminal indicates, in combination with the map software, that the receiver vehicle runs on a straight road, and roads in a front and rear range in which a V2X message can be received are straight. However, if a corner message sent by a nearby sender vehicle is received, it may be considered that a first vehicle-to-everything message sent by the sender vehicle has an abnormal behavior feature.

In some embodiment of this application, that the vehicle-to-everything server collects statistical analysis on the plurality of abnormal behavior features to obtain whether the vehicle-to-everything sending terminal has an abnormal behavior includes the following steps.

The vehicle-to-everything server obtains a quantity of occurrences of the plurality of abnormal behavior features of the vehicle-to-everything sending terminal in a first time period.

The vehicle-to-everything server obtains a total quantity of occurrences of the plurality of abnormal behavior features in a second time period, where the second time period is greater than the first time period.

When the quantity of occurrences of the plurality of abnormal behavior features in the first time period is greater than the first abnormal behavior threshold, and/or the total quantity of occurrences of the plurality of abnormal behavior features in the second time period is greater than the second abnormal behavior threshold, the vehicle-to-everything receiving terminal determines that the vehicle-to-everything sending terminal has an abnormal behavior.

The abnormal behavior detection algorithm may include an abnormal behavior feature extraction manner. For example, the quantity of occurrences of the plurality of abnormal behavior features of the vehicle-to-everything sending terminal in the first time period is extracted, and the total quantity of occurrences of the plurality of abnormal behavior features in the second time period is extracted. The first time period may be a preset unit time. The second time period may be a certificate validity period or half of the certificate validity period of the vehicle-to-everything sending terminal. The abnormal behavior detection algorithm includes the first abnormal behavior threshold and the second abnormal behavior threshold. It may be determined that the vehicle-to-everything sending terminal has an abnormal behavior provided that at least one of the following two conditions is met. The two conditions are: The quantity of occurrences of the plurality of abnormal behavior features in the first time period is greater than the first abnormal behavior threshold, and the total quantity of occurrences of the plurality of abnormal behavior features in the second time period is greater than the second abnormal behavior threshold.

In some embodiments of this application, the vehicle communications system further includes a plurality of certificate authorities and a certificate revocation server. After the vehicle-to-everything server determines a vehicle-to-everything communications terminal having an abnormal behavior, the vehicle-to-everything server may further request the certificate authority to revoke a certificate. The method provided in this embodiment of this application further includes the following steps.

The vehicle-to-everything server sends a first certificate revocation request to a third certificate authority, where the first certificate revocation request includes a certificate of an abnormal vehicle-to-everything terminal, the third certificate authority is configured to request the certificate revocation server to revoke the certificate of the abnormal vehicle-to-everything terminal, and the abnormal vehicle-to-everything terminal is the vehicle-to-everything sending terminal having an abnormal behavior and/or the vehicle-to-everything receiving terminal having an abnormal behavior.

The vehicle-to-everything server receives a response, sent by the third certificate authority, that the certificate of the abnormal vehicle-to-everything terminal is revoked.

The vehicle-to-everything server first determines the third certificate authority that sends the certificate to the abnormal vehicle-to-everything terminal, and then requests the third certificate authority to revoke the certificate of the abnormal vehicle-to-everything terminal. The third certificate authority requests the certificate revocation server to revoke the certificate of the abnormal vehicle-to-everything terminal. The certificate revocation server has a revocation function. After completing revocation, the certificate revocation server notifies the third certificate authority, and the third certificate authority sends a first certificate revocation response. The vehicle-to-everything server determines, based on the certificate revocation response, that the certificate of the abnormal vehicle-to-everything terminal is revoked. This resolves a problem of certificate revocation of the abnormal vehicle-to-everything terminal, and avoids interference caused by the abnormal vehicle-to-everything terminal to another vehicle-to-everything communications terminal.

In some embodiments of this application, the vehicle communications system further includes a plurality of certificate authorities and a certificate revocation server. After the vehicle-to-everything server determines the vehicle-to-everything communications terminal having an abnormal behavior, the vehicle-to-everything server may further request the certificate revocation server to revoke a certificate. The method provided in this embodiment of this application further includes the following steps.

The vehicle-to-everything server sends a second certificate revocation request to a third certificate authority, where the second certificate revocation request includes a certificate of an abnormal vehicle-to-everything terminal, and the abnormal vehicle-to-everything terminal is the vehicle-to-everything sending terminal having an abnormal behavior and/or the vehicle-to-everything receiving terminal having an abnormal behavior.

The vehicle-to-everything server receives a response sent by the third certificate authority after the third certificate authority adds at least one certificate of the abnormal vehicle-to-everything terminal to the blacklist, and sends a third certificate revocation request to the certificate revocation server.

The vehicle-to-everything server receives a response, sent by the certificate revocation server, that the certificate of the abnormal vehicle-to-everything terminal is revoked.

The vehicle-to-everything server may separately communicate with the third certificate authority and the certificate revocation server. The certificate revocation server may be specifically a certificate revocation list (certificate revocation list, CRL) server. In this embodiment, the third certificate authority adds the at least one certificate of the abnormal vehicle-to-everything terminal to the blacklist, and the third certificate authority sends the response after adding the at least one certificate to the blacklist. The vehicle-to-everything server sends the third certificate revocation request to the certificate revocation server. The certificate revocation server revokes the certificate of the abnormal vehicle-to-everything terminal. The vehicle-to-everything server determines, based on a received certificate revocation response, that the certificate of the abnormal vehicle-to-everything terminal is revoked. This resolves a problem of certificate revocation of the abnormal vehicle-to-everything terminal, and avoids interference caused by the abnormal vehicle-to-everything terminal to another vehicle-to-everything communications terminal.

In some embodiments of this application, the vehicle communications system further includes a certificate revocation server, and the method provided in this embodiment of this application further includes the following steps.

The vehicle-to-everything server sends a fourth certificate revocation request to the certificate revocation server, where the fourth certificate revocation request includes a certificate of an abnormal vehicle-to-everything terminal, and the abnormal vehicle-to-everything terminal is the vehicle-to-everything sending terminal having an abnormal behavior and/or the vehicle-to-everything receiving terminal having an abnormal behavior.

The vehicle-to-everything server receives a response, sent by the certificate revocation server, that the certificate of the abnormal vehicle-to-everything terminal is revoked.

The vehicle-to-everything server may establish a communication connection to the certificate revocation server. The vehicle-to-everything server sends the fourth certificate revocation request to the certificate revocation server, to request the certificate revocation server to revoke the certificate of the abnormal vehicle-to-everything terminal. The certificate revocation server has a revocation function. After completing revocation, the certificate revocation server sends a certificate revocation response. The vehicle-to-everything server determines, based on the certificate revocation response, that the certificate of the abnormal vehicle-to-everything terminal is revoked. This resolves a problem of certificate revocation of the abnormal vehicle-to-everything terminal, and avoids interference caused by the abnormal vehicle-to-everything terminal to another vehicle-to-everything communications terminal.

In some embodiments of this application, the plurality of certificate authorities include a plurality of enrollment authorities and a plurality of authorization authorities.

That the vehicle-to-everything server determines, based on the certificate of the abnormal vehicle-to-everything terminal, the third certificate authority that sends the certificate to the abnormal vehicle-to-everything terminal includes the following steps.

The vehicle-to-everything server classifies an abnormal behavior of the abnormal vehicle-to-everything terminal, to obtain an abnormality level.

When the abnormality level is a first abnormality level, the vehicle-to-everything server separately determines the third certificate authority from the plurality of enrollment authorities and the plurality of authorization authorities.

Alternatively, when the abnormality level is a second abnormality level, the vehicle-to-everything server determines the third certificate authority from the plurality of authorization authorities.

The vehicle-to-everything server may classify the abnormal behavior according to a local policy. For example, abnormal behaviors are classified into at least two levels based on a collision level and a hazard level: the first abnormality level and the second abnormality level. The first abnormality level is higher than the second abnormality level. A policy for classifying the abnormal behavior depends on an application scenario. When the abnormal behavior of the abnormal vehicle-to-everything terminal corresponds to the first abnormality level, both a long-term certificate and a short-term certificate of the abnormal vehicle-to-everything terminal need to be revoked. When the abnormal behavior of the abnormal vehicle-to-everything terminal corresponds to the second abnormality level, only the short-term certificate needs to be revoked. In this way, an abnormal behavior of the vehicle-to-everything communications terminal may be classified and processed.

Further, in some embodiments of this application, after the vehicle-to-everything server determines the third certificate authority, the method provided in this embodiment of this application further includes the following steps.

The vehicle-to-everything server generates revocation reason information based on the abnormal behavior of the vehicle-to-everything sending terminal.

The vehicle-to-everything server sends the revocation reason information and the abnormality level to the third certificate authority.

The vehicle-to-everything server generates the revocation reason information based on the abnormal behavior of the vehicle-to-everything sending terminal. The revocation reason information includes a reason why the certificate of the vehicle-to-everything sending terminal is revoked. The vehicle-to-everything server sends the revocation reason information and the abnormality level to the third certificate authority. In this way, the third certificate authority may obtain a revocation reason and an abnormality level of the vehicle-to-everything sending terminal, to manage the certificate of the vehicle-to-everything sending terminal.

It can be learned from the example in the foregoing embodiment that, in this embodiment of this application, the vehicle-to-everything receiving terminal determines, according to the first abnormal behavior detection policy, that the first vehicle-to-everything message is an abnormal message, and then the vehicle-to-everything receiving terminal sends the report message to the vehicle-to-everything server. The report message includes the first vehicle-to-everything message. The vehicle-to-everything server receives the report message sent by the vehicle-to-everything receiving terminal. The vehicle-to-everything server determines, according to the second abnormal behavior detection policy and the report message, whether the vehicle-to-everything receiving terminal has an abnormal behavior. The vehicle-to-everything server determines, according to the third abnormal behavior detection policy and the first vehicle-to-everything message, whether the vehicle-to-everything sending terminal has an abnormal behavior. Therefore, the vehicle-to-everything server may separately detect abnormal behaviors of the vehicle-to-everything receiving terminal and the vehicle-to-everything sending terminal, to avoid interference of the abnormal behavior to the vehicle-to-everything communications terminal, ensure security of a vehicle-to-everything network and autonomous driving, avoid interference to autonomous driving of a valid vehicle, avoid computing resources consumption of the valid vehicle, and avoid traffic chaos that is caused by an attacker and that endangers security of a driver and a passenger.

To better understand and implement the foregoing solutions in the embodiments of this application, the following uses a corresponding application scenario as an example for specific description.

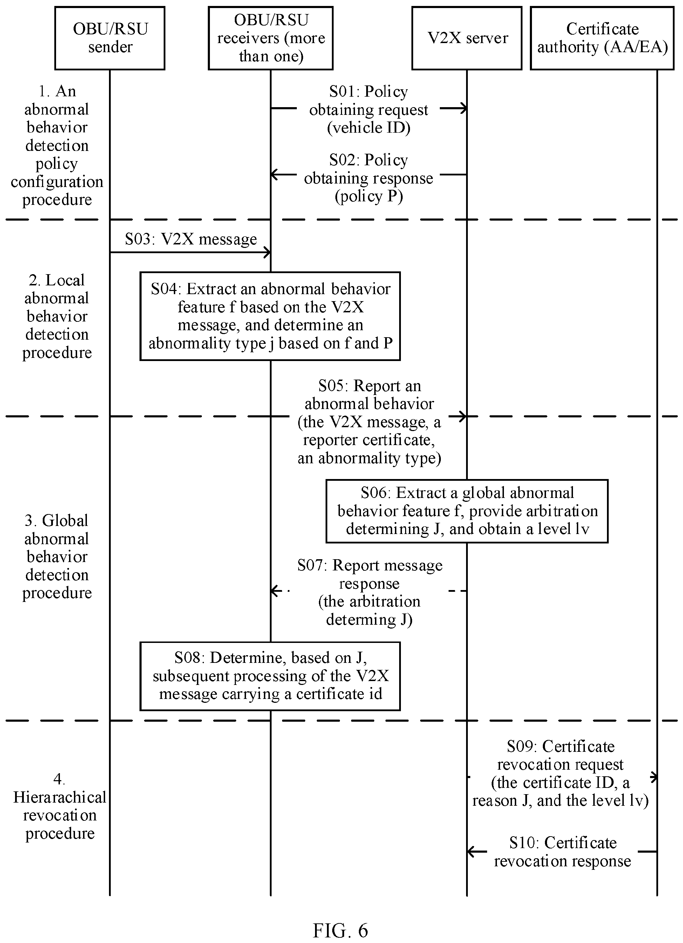

As shown in FIG. 6, an embodiment of this application provides a schematic flowchart of interaction between a sender vehicle, a receiver vehicle, a V2X server, and a certificate authority in a vehicle-to-everything abnormal behavior detection method. The sender vehicle may be an OBU or an RSU. The receiver vehicle may be an OBU or an RSU, and there may be a plurality of receiver vehicles. The certificate authority may be an AA or an EA.

In this embodiment of this application, a sender (a vehicle or a roadside station) that sends an abnormal V2X message may be detected locally and on a cloud. A local receiver (a vehicle or a roadside station) extracts, according to an abnormal behavior detection policy configured by a cloud V2X server, an abnormal behavior feature of a received message, and then determines, according to the abnormal behavior detection policy, that the V2X message is an abnormal message. Then, the receiver may report the abnormal message to the V2X server. The V2X server separately determines the reporter and the reported party to exclude a malicious report, finally provides a malicious arbitration result of the reported party, and returns the malicious arbitration result to the reporter for the reporter to perform a subsequent operation. At the same time, the V2X server initiates a classified certificate revocation operation to the certificate authority.

An abnormal behavior detection policy configuration procedure provided in this embodiment of this application may include the following steps:
S01: A vehicle end sends a policy obtaining request carrying a vehicle ID to the V2X server, to request to deliver a V2X abnormal behavior detection policy, where the abnormal behavior detection policy may include an abnormal behavior feature extraction manner and an abnormal behavior detection algorithm.
S02: The V2X server returns a policy obtaining response, where the policy obtaining response includes a policy P configured by the V2X server, and the policy P includes an available security policy list.

A local abnormal behavior detection procedure provided in this embodiment of this application may include the following steps:
S03: The vehicle end receives a V2X message sent from an external device, where the V2X message may be a periodic message or an event-triggered message.
S04: The vehicle end detects the received V2X message, and determines whether there is an abnormal behavior feature f; if yes, the abnormal behavior feature is extracted, and then local determining is performed according to the policy P corresponding to the abnormal behavior feature, to determine an abnormality type j, where the abnormality type may include, for example, a malformed packet, an abnormal message, a malicious message, and the malformed packet may be a system error that occurs in a wireless message transmission process and that is caused by binary content loss or signal interference.
S05: The vehicle end sends a report message to the V2X server based on an abnormal behavior detection result, where the message carries a related V2X message, a reporter certificate, and the abnormality type.

A global abnormal behavior detection procedure provided in this embodiment of this application mainly includes the following steps:
S06: The V2X server first determines, based on the received report message, whether the report message of the reporter is a malicious report, then comprehensively determines the V2X message of the reported party, extracts a global abnormal behavior feature f, provides arbitration determining J based on the abnormality type, and classify an abnormality level to obtain a level lv.
S07: The V2X server returns a report message response including the arbitration determining J to the vehicle end, for example, in a broadcast manner.
S08: The vehicle end determines, based on the arbitration determining J, a subsequent message processing manner for the V2X message carrying a certificate id.

A hierarchical revocation procedure provided in this embodiment of this application mainly includes the following steps:
S09: The V2X server submits, to the certificate authority, vehicle certificate information that is determined to be malicious, to request the certificate authority to perform revocation, where the request carries a to-be-revoked certificate id, a revocation reason J, and a revocation level lv.
S10: The certificate authority performs a certificate revocation operation according to a local policy, performs processing according to different abnormality levels, and then returns a revocation result to the V2X server.

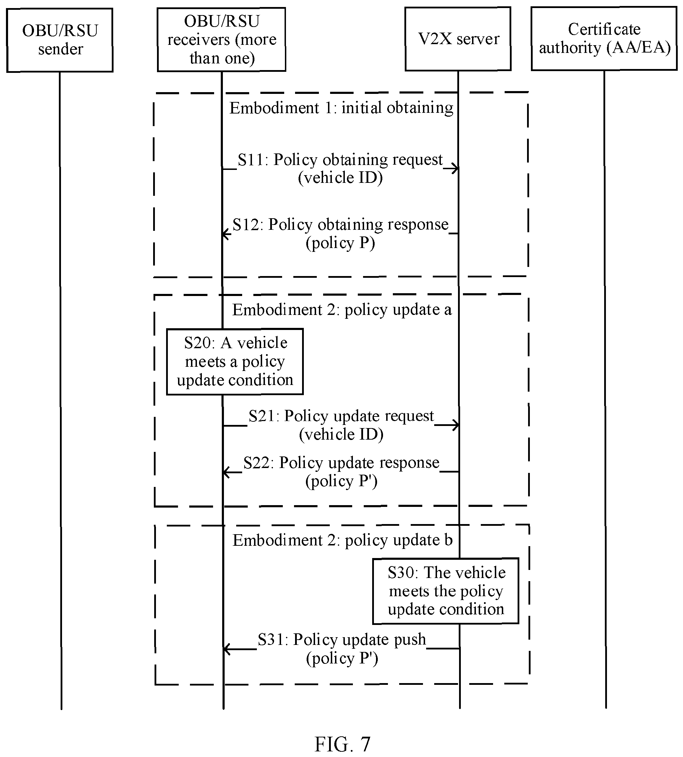

FIG. 7 is a schematic flowchart of configuring and updating an abnormal behavior detection policy according to an embodiment of this application. The following procedure is mainly included.

### Embodiment 1: initial obtaining

S11: A vehicle (for example, an OBU) or a roadside station RSU sends a policy obtaining request carrying a vehicle ID to a V2X server, to request to deliver an abnormal behavior detection policy, where the policy includes an abnormal behavior feature extraction manner and an abnormal behavior detection algorithm.

For example, the policy obtaining request may be a registration request message. In this case, the V2X server is an IoT platform of an automobile enterprise. For another example, the policy obtaining request may be a link establishment request message between the vehicle and an MA server. In this case, the V2X server is the MA server.

S12: The V2X server returns a policy obtaining response, where the policy obtaining response includes a policy P configured by the V2X server, and the policy P includes an available security policy list.

The security policy list includes a plurality of security policy rule control parameters of different abnormal behavior features, as shown in Table 1.

| Example of a detection threshold list | |
|---|---|
| Detection threshold | Description |
| T_DeltaTime | Time difference threshold for replay attack determination |
| T_MaxDis | Geographical position spoofing threshold |
| T_FirMesDis | First message position threshold |
| T_TrafficUpSpeed | Vehicle speed threshold corresponding to traffic congestion |
| T_AccidentSpeed | Vehicle speed threshold corresponding to a traffic accident |
| T_AdhesionSpeed | Vehicle speed threshold corresponding to ground adhesion |
| T_WeatherSpeed | Vehicle speed threshold corresponding to the weather |
| T_Queue Speed | Vehicle speed threshold corresponding to a queue |
| T_CurveSpeed | Vehicle speed threshold for turning |
| T_CertExpMax | Malicious determining threshold of certificate expiration |
| T_SignFailMax | Malicious determining threshold of signature verification failure |
| T_SspFailMax | Malicious determining threshold of permission verification failure |
| T_GenCamMax | Malicious determining threshold of a quantity of cam messages |
| T_ReplayMax | Malicious determining threshold of a replay attack |
| T_GenEmeMin | Malicious determining threshold of a quantity of special vehicle messages |
| T_GeoDecMax | Malicious determining threshold of geographical position spoofing |
| T_SpdDecMax | Malicious determining threshold of speed spoofing |
| T_XXEveMax | Malicious determining threshold of XX time spoofing |

### Embodiment 2: policy update

The abnormal behavior detection policy is not a statically fixed value. Therefore, an original initial configuration interface may also be used for subsequent policy update. Two specific update methods are as follows:

Policy update a:
S20: The vehicle meets a policy update condition.
S21: The vehicle end sends a policy update request to the V2X server, where the request carries the vehicle ID.
S22: The V2X server sends a policy obtaining response to the vehicle end.

When the vehicle meets a specific condition, for example, a periodic condition, an area condition, or an event condition, the policy update request may be triggered. A response message may carry only a policy subset P' that needs to be updated or a whole set P.

Policy update b:
S30: The vehicle meets a policy update condition.
S31: The V2X server pushes policy update, where a push message includes a policy P'.

When a vehicle enterprise platform determines, based on another condition, that a local policy of the vehicle needs to be updated, or when an MA determines, according to the local policy (a periodic condition or an event condition), that the policy needs to be updated, the updated policy P' may be proactively pushed to the vehicle. The message may be a unicast or broadcast message.

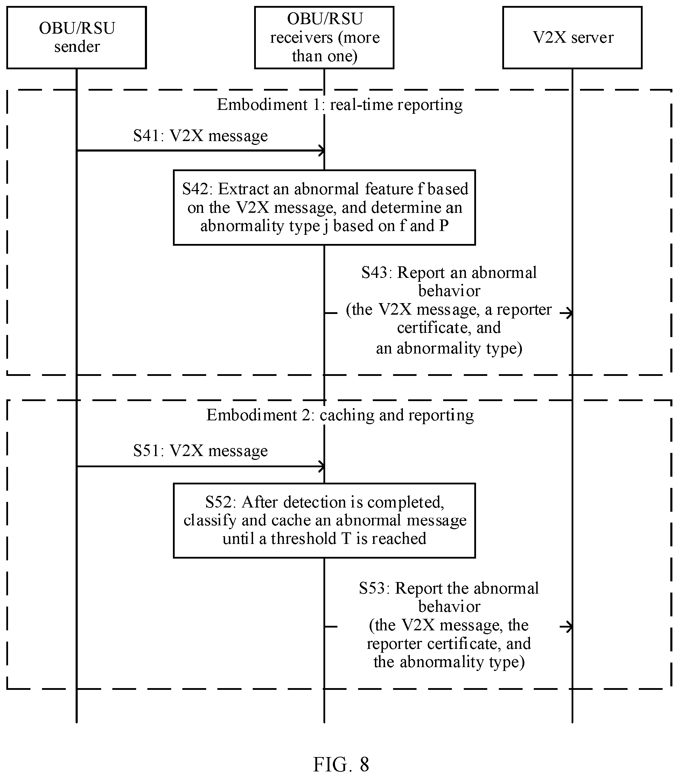

FIG. 8 is a schematic flowchart of local abnormal behavior detection according to an embodiment of this application. The following procedure is mainly included.

### Embodiment 1: real-time reporting

S41: A sender vehicle sends a V2X message to a receiver vehicle.

S42: The receiver vehicle extracts an abnormal feature f based on the V2X message, and determines an abnormality type j based on f and P.

S43: The receiver vehicle reports an abnormal behavior to a V2X server, where a report message includes the V2X message, a reporter certificate, and the abnormality type.

When the vehicle end receives a V2X message (periodic or triggered) from an external device, the vehicle end detects the received V2X message to determine whether there is an abnormal behavior feature specific to V2X. If yes, the abnormal behavior feature is extracted. Then, local determining is performed according to the policy P and a rule of the policy, to determine the abnormality type, for example, an abnormal message or a malicious message. The vehicle end sends a report message to the V2X server based on an abnormal behavior detection result, where the message carries a related V2X message, a reporter certificate, and the abnormality type.

### Embodiment 2: caching and reporting

S51: A sender vehicle sends a V2X message to a receiver vehicle.

S52: After completing detection, the receiver vehicle classifies and caches the abnormal message until a threshold T is reached.

S53: The receiver vehicle reports an abnormal behavior to a V2X server, where a report message includes the V2X message, a reporter certificate, and an abnormality type.

In Embodiment 1, data of various abnormality types is reported to a cloud in real time for processing. Therefore, extra performance load may be brought to the cloud and a network. In Embodiment 2, the abnormal message may be cached and classified (according to same-vehicle same-event, same-vehicle different-event, different-vehicle same-event, or different-vehicle different-event). When a cache exceeds a threshold (a time threshold or a quantity threshold), the cache is uniformly reported to the V2X server on the cloud for arbitration.

Next, an abnormal behavior detection policy in this embodiment of this application is described in detail with an example. In actual application, a similar policy may be determined according to the following specific policy. The following example is not intended to limit this embodiment of this application.

For example, the abnormal behavior detection policy may include at least one of the following policies: a security check policy, a CAM parameter check policy, a DENM parameter check policy, a comprehensive check policy for CAM and DENM parameters, a check policy based on a sensor of a vehicle-to-everything receiving terminal, and the like.

The security check policy is first described as follows:
0. A certificate validity period check for the vehicle-to-everything receiving terminal: Whether a certificate of the vehicle-to-everything receiving terminal is within a validity period is checked based on start time and end time (time_start and end) and current time. If the certificate expires, an AA anonymous certificate application process is initiated. If the application fails, the message is discarded.
1. A certificate blacklist check for a peer: A local blacklist database is queried. If a peer certificate is in the blacklist, the message is discarded.
2. A certificate validity period check for the peer: Whether the peer certificate is within a validity period is checked based on a time_start_and_end field in the certificate and current time.
3. A message signature check: A public key of an authorization certificate is used to check whether a message signature is successful.
4. A message permission check: Whether a message (including an AID and an SSP) is in an authorization certificate list is checked.
5. Replay attack detection: A difference between a time stamp carried in the message and a time stamp calculated by the vehicle-to-everything receiving terminal is compared. If the difference is beyond an initial setting range T_DeltaTime, the message is considered as a replay attack.

Next, the CAM parameter check policy is described as follows:
1. Geographical position spoofing: A difference between a position in a referencePosition field in a CAM message of a sender and a position of a receiver is compared. If the difference is greater than T_MaxDis, the behavior is determined as the geographical position spoofing.
2. A speed validity check method: A historical path of a pathHistory field of the sender is compared with a current position in the referencePosition field of the sender to obtain a difference. If the position difference divided by a time difference is greater than MaxSpeed, the behavior is determined as speed spoofing.
3. A first message position validity check: When a message from a vehicle is received for a first time, if a distance between a position of the vehicle and the receiver vehicle is less than a threshold T_FirMesDis, the message is discarded.

Next, the DENM parameter check policy is described as follows:
1. Isolated event spoofing: If being near an event occurrence position (EventPostition) indicated in a received DENM message, only a vehicle sends the following DENM messages (including discovering an event or canceling the event), the behavior is determined as isolated event spoofing:
   1) Traffic condition (traffic condition);
   2) Accident (accident);
   3) Roadworks (roadworks);
   4) Rescue and recovery (rescue and recovery);
   5) Road adhesion affected by adverse weather (adverse weather condition - adhesion);
   6) Hazardous location and complex road surface (hazardous location - surface condition);
   7) Hazardous location - obstacle (hazardous location - obstacle on the road);
   8) Hazardous location - animal on the road (a herd, a small animal, a large animal);
   9) Human presence on the road (a child, a cyclist, a motorcyclist);
   10) Adverse weather condition - extreme weather condition;
   11) Adverse weather condition - visibility;
   12) Adverse weather condition - precipitation;
   13) Stationary vehicle (stationary vehicle).
2. relevanceDistance: An impact scope matches an event type. Otherwise, the report is abnormal. For example, if a maximum impact scope of a traffic congestion event at an intersection is about 10 km but an impact scope of the event reported by a vehicle M is 20 km, the report is considered as an abnormal report.
3. validity Duration: an event duration. An event report exceeding a validity duration is a replay attack.

Next, the comprehensive check policy for the CAM and DENM parameters is described as follows:
1. For the following DENM messages, whether a CAM message of a corresponding vehicle (such as a road construction vehicle, an emergency vehicle, or an ambulance) is received is determined, and if the CAM message is not received, the DENM message is considered as an abnormal message:
   1) Roadworks;
   2) Rescue and recovery;
   3) Slow vehicle (slow vehicle);
   4) Emergency vehicle approaching (emergency vehicleapproaching).
2. Traffic condition (traffic congestion, including an increase, a slow increase, and a decrease).
   For example, the vehicle M reports a DENM message indicating that traffic congestion increases on a road section. A speed field in a CAM message sent by any vehicle on the congested road section is checked. If a speed is higher than a threshold T_TrafficUpSpeed, traffic congestion information reported by the vehicle M is considered to be abnormal.
3. Accident (traffic accidents: a multi-vehicle accident, a major accident, an accident in which a truck is involved, an accident in which a bus is involved, an accident in which dangerous goods are involved, an accident on an opposite lane, an unsecured accident, an accident in which e-call assistance is required).

When the vehicle M reports an accident and the DENM message indicates that the accident is not in an opposite direction:
A speed field in a CAM message of any vehicle whose driving direction is the same as that of the EventPostion is checked. If a speed is higher than a threshold T_AccidentSpeed, a message that is about the accident and that is reported by the vehicle M is considered as an abnormal message.

When the vehicle M reports an accident and the DENM message indicates that the accident is on an opposite lane:
A speed field in a CAM message of a vehicle on the accident lane is checked. If a vehicle speed is higher than the T_AccidentSpeed, a message that is about the accident and that is reported by the vehicle M is considered as an abnormal message.

4. Adverse weathercondition - adhesion (The bad weather affects adhesion of a road surface: heavy frost, fuel, mud, snow, ice, black ice, oil, gravel, salt, and short-time black ice).

When reporting a DENM message about adhesion of a road surface, the vehicle M checks a speed field in a CAM message of any vehicle in the road section. If a speed is greater than a threshold T _AdhesionSpeed, the message that is about the adhesion of the road surface and that is reported by the vehicle M is considered to be abnormal.

5. Hazardous location - surface condition (dangerous areas: stone slippage, earthquake damage, sewer collapse, road subsidence, snow heap, storm damage, blasting pipe, volcanic eruption, and ice falling).

The vehicle M reports that a road section is a dangerous road section. For example, the road section cannot be passed through in a short period of time because of a subsidence. A CAM message of any vehicle on the road section is checked. If a driving direction does not change or a speed field does not decrease, a message that is about the dangerous road section and that is reported by the vehicle M is considered as an abnormal message.

6. Hazardous location (hazardous location) and obstacle on the road (obstacle on the road), such as a vehicle part, a large object, a fallen tree on the road, and a damaged vehicle.

The vehicle M reports that there is an obstacle on a road section. A CAM message of any vehicle on the road section is checked. If a driving position field of a vehicle crosses the obstacle, a road barrier message reported by the vehicle M is considered to be abnormal.

7. Hazardous location - animal on the road (hazardous location - animal on the road).

8. Human presence on the road (human presence on the road).

When the vehicle M reports that a herd or person passes by on a road, a speed field in a CAM message of any vehicle that faces a same direction as the animal or person is checked. If a speed does not decrease, the message that is about the herd or people and that is reported by the vehicle M is considered to be abnormal.

9. Wrong way driving (an incorrect lane or direction).

When the vehicle M reports a message about incorrect running, a speed field in a CAM message of the vehicle is checked. If a vehicle speed does not decrease, the message that is about the incorrect running and that is reported by the vehicle M is considered to be abnormal.

11. Adverse weathercondition - extremeweather condition (extreme weather: strong wind, hail, hurricane, thunderstorm, snowstorm, and tornado).

12. Adverse weathercondition - visibility (reasons for visibility reduction include fog, smoke, heavy snow, heavy rain, heavy hail, low sunlight, sandstorm, and insect disaster).

13. Adverse weathercondition - precipitation (heavy rain, heavy snow, and soft hail).

For 11, 12, and 13, the vehicle M reports the event, and a speed field in a CAM message of any vehicle in an attachment is checked. If a speed is greater than a threshold T_WeatherSpeed, a message about a weather event reported by the vehicle M is determined as an abnormal message.

14. Dangerous end ofQueue (a vehicle in scenarios such as a tunnel, a bend, a hillside, or a team tail).

When the vehicle M reports a queue event, the speed field in the CAM message of the vehicle is checked. If the speed is greater than a threshold T_QueueSpeed, a message about the queue event reported by the vehicle M is considered as an abnormal message.

16. Vehicle breakdown (an electricity problem, a fuel problem, an engine problem, a gearbox problem, a cooling problem, a brake problem, a steering wheel problem, and a tire problem).

17. Dangerous situation (dangerous situation), abrupt braking, pre-collision system startup, electronic stabilizer, ABS, ABE, brake warning, collision warning, or the like.

Except a brake fault scenario, when the vehicle M reports a vehicle fault event and an emergency brake event, the speed field in the CAM message of the vehicle M is checked. If the vehicle moves at a constant speed or accelerates within a unit time, the reported message is considered to be abnormal.

18. Hazardous locationindication - dangerouscurve (a dangerous left-turn curve, a dangerous right-turn curve, and a dangerous turning curve in any direction)

When a vehicle reports a turning event, a speed field in a CAM message of the vehicle is checked. If a value of the speed field is greater than a threshold T_CurveSpeed, the message is an abnormal message.

If a turning direction of the vehicle is inconsistent with a vehicle direction in the CAM message, the message is an abnormal message.

19. Collision risk (a vertical collision, a horizontal collision, a cross collision, and a collision in which a passer-by may be touched).

A vehicle reports a collision event, and a corresponding speed and a horizontal or vertical acceleration field in a CAM message of the vehicle are checked. If there is no decrease, the reported event is abnormal.

Finally, the check policy based on the sensor of the vehicle-to-everything terminal is described as follows:
For the following events, a vehicle may determine a message in combination with sensor information of the vehicle or map information. If the message is inconsistent with perception of a sensor of the vehicle, the message is considered as an abnormal message:
1. Traffic condition;
2. Accident;
3. Adverse weathercondition - adhesion;
4. Hazardous location - surface condition;
5. Hazardous location - obstacle on the road;
6. Hazardous location - animal on the road;
7. Human presence on the road;
9. Adverse weathercondition - extremeweather condition;
10. Adverse weather condition - low visibility (adverse weathercondition - visibility);
11. Adverse weather condition - heavy rain and snow (adverse weathercondition -Precipitation);
12. Hazardous locationindication - dangerouscurve;
   With reference to a map, if a turning road section is determined, but the sender vehicle reports a straight-through road section, the report is abnormal.
13. Signal violation (parking, a traffic light, and a turning violation).

Whether there is a corresponding local reporting type needs to be determined based on a specific eventPosition, such as a parking sign and a traffic light. If no, the report may be determined to be abnormal. For example, if the vehicle M reports that a vehicle N runs a red light at a location at which no traffic light is set, the report of the vehicle M is considered to be abnormal.

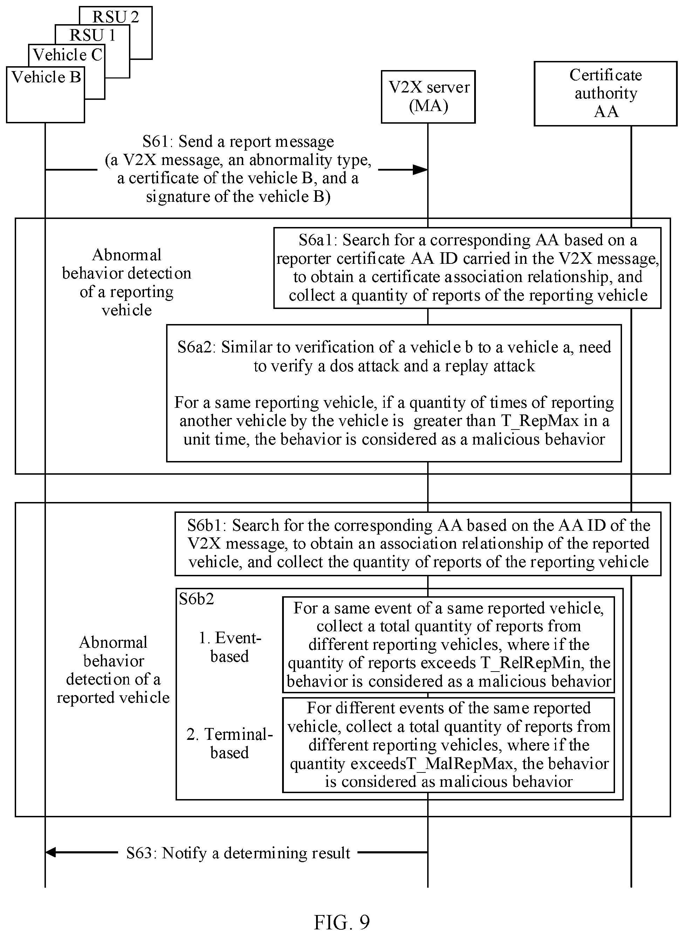

FIG. 9 is a schematic flowchart of global abnormal behavior detection according to an embodiment of this application. A plurality of receiver vehicles are included, for example, a vehicle B, a vehicle C, an RSU 1, and an RSU 2. A V2X server may be an MA server. A certificate authority may be an AA server. The following procedure is mainly included.

S61: The plurality of receiver vehicles each send a report message to the V2X server, where the report message includes a V2X message, an abnormality type, a certificate of the vehicle B, and a signature of the vehicle B.

An abnormal behavior detection procedure of a reporting vehicle includes the following steps.

S6a1: A corresponding AA is searched for based on a reporter certificate AA ID carried in the V2X message, to obtain a certificate association relationship, and collect a quantity of reports of the reporting vehicle.

S6a2: Similar to verification of a vehicle b to a vehicle a, a denial of service (denial of service, dos) attack and a replay attack need to be verified.

For a same reporting vehicle, if a quantity of times of reporting another vehicle by the vehicle is greater than T_RepMax in a unit time, the behavior is considered as a malicious behavior.

An abnormal behavior detection procedure of a reported vehicle includes the following steps.

S6b1: The corresponding AA is searched for based on the AA ID of the V2X message, to obtain an association relationship of the reported vehicle, and collect the quantity of reports of the reporting vehicle.

The following types are included in S6b2.

### 1. Event-based.

For a same event of a same reported vehicle, a total quantity of reports from different reporting vehicles is collected. If the quantity of reports exceeds T_RelRepMin, the behavior is considered as a malicious behavior.

### 2. Terminal-based.

For different events of the same reported vehicle, a total quantity of reports from different reporting vehicles is collected. If the quantity exceeds T _MalRepMax, the behavior is considered as malicious behavior.

S63: A determining result is notified.

In the foregoing example, a vehicle end sends a report message to the V2X server based on an abnormal behavior detection result. The message carries a related V2X message, a reporter certificate, and the abnormality type. The V2X server (MA) performs global determining based on the received report message. For example, a report message of a reporter is first determined to determine whether the report message is malicious. First, a corresponding certificate authority is found based on a certificate authority ID in the reporter certificate, to obtain an association relationship between a plurality of certificates of the reporter, so as to collect a total quantity of reports. If the total quantity of reports of the reporter exceeds T_RepMax, the report message is considered to be malicious. Then, a V2X message of the reported party is comprehensively determined to provide arbitration determining. For another example, the V2X server initiates a request to the AA based on a certificate of a reported message, to obtain a certificate association relationship of the reported party, so as to collect a total quantity of reports. Reports from a plurality of reporting parties are summarized, and then the reported party is classified and processed. For example, a classification is based on a plurality of reports for a same event of a same vehicle, a plurality of reports for different events of a same vehicle, or a plurality of reports for a same event. If a threshold corresponding to the policy is exceeded, the behavior is considered as a malicious behavior.

Finally, the V2X server returns a report message response to the vehicle end. The report message response includes an arbitration result. For example, the report message response is sent in a unicast or broadcast manner. The vehicle end determines a subsequent message processing manner for the V2X message based on the arbitration result, for example, discarding the V2X message or normally processing.

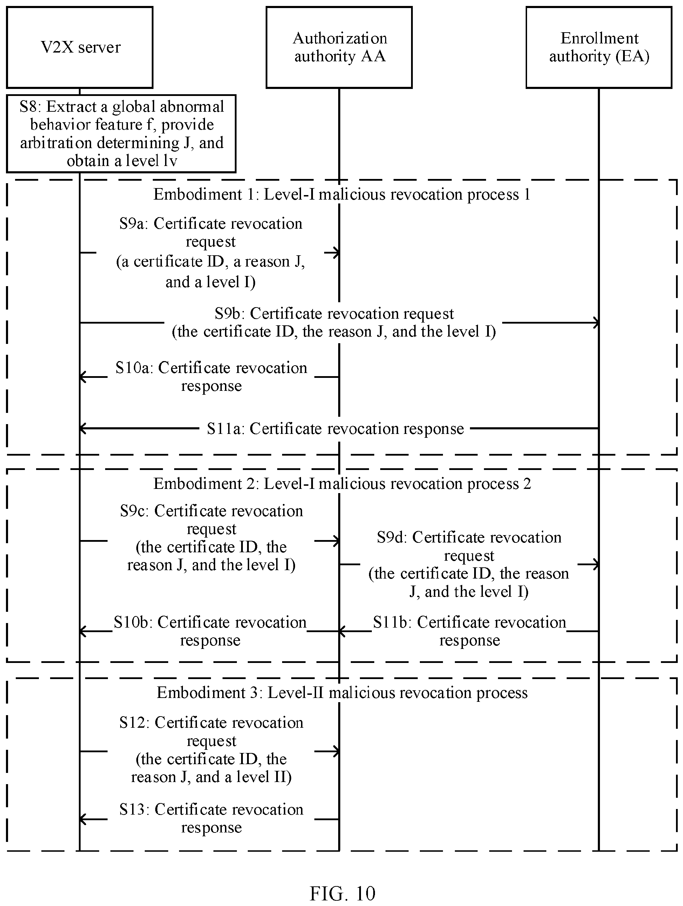

FIG. 10 is a schematic flowchart of hierarchical revocation according to an embodiment of this application. The following procedure is mainly included:

S8: A V2X server sends extraction of a global abnormal behavior feature f, arbitration determining J, and a level lv.

### Embodiment 1: Level-I malicious revocation process 1

S9a: The V2X server sends a certificate revocation request to an AA, where the request includes a certificate ID, a reason J, and a level I.

S9b: The V2X server sends the certificate revocation request to an EA, where the request includes the certificate ID, the reason J, and the level I.

S10a: The AA sends a certificate revocation response to the V2X server.

S11a: The EA sends a certificate revocation response to the V2X server.

After performing global abnormal behavior detection, the V2X server may classify an abnormal behavior according to a local policy (for example, a collision level and a hazard level), for example, into two levels: level-I and level-II. The level-I indicates a more severe malicious behavior. The V2X server separately sends the certificate revocation requests to the AA and EA. The certificate revocation request carries an ID of a to-be-invoked certificate, a revocation reason J, and a malicious level lv=1. The AA/EA initiates a revocation operation to a CRL server. After the operation is completed, a revocation response is returned to the V2X server. Optionally, the revocation operation initiated by the EA to the CRL server is first sent to the AA, and then the AA forwards the revocation operation to the CRL server. Optionally, the AA and the EA do not initiate revocation requests to the CRL server, but add a vehicle corresponding to the ID only to blacklists inside the AA and the EA, and return revocation results to the V2X server. Then, the V2X server initiates a revocation operation to the CRL server.

### Embodiment 2: Level-I malicious revocation process 2

S9c: The V2X server sends a certificate revocation request to the AA, where the request includes the certificate id, the reason J, and the level I.

S9d: The AA sends the certificate revocation request to the EA, where the request includes the certificate ID, the reason J, and the level I.

S10b: The AA sends a certificate revocation response to the V2X server.

S11b: The EA sends a certificate revocation response to the AA.

A difference between Embodiment 2 and Embodiment 1 lies in that the V2X server sends a level-I certificate revocation request to the AA. The level-I certificate revocation request carries the ID of the to-be-revoked certificate, the revocation reason J, and the malicious level lv=1. Then, the AA forwards the request to the EA. After the AA/EA completes processing, the AA makes a response uniformly.

### Embodiment 3: Level-II malicious revocation process

S12: The V2X server sends a certificate revocation request to the AA, where the request includes the certificate ID, the reason J, and a level II.

S13: The AA sends a certificate revocation response to the V2X server.

A difference between Embodiment 3 and Embodiment 1 and Embodiment 2 lies in that the AA does not send or forward the request to the EA, and the AA may revoke the certificate.

It can be learned from description of the foregoing example that, in this embodiment of this application, an abnormal behavior detection procedure and a parameter transferred by an interface are provided, a V2X server on a cloud configures an abnormal behavior detection policy P for the vehicle end, and the vehicle end performs abnormal behavior detection on a received V2X message according to P, and determines an abnormal behavior feature f and an abnormality type j that are of the V2X message. The V2X server on the cloud makes a comprehensive decision based on an abnormality type j reported by a plurality of reporting parties and the V2X message of the reported party, to provide an arbitration result J. The V2X server on the cloud may also classify vehicles with abnormal behaviors and perform corresponding certificate revocation processes based on different levels. The vehicle end receives the arbitration result J that is from the cloud and that is sent in a unicast or broadcast manner and performs subsequent message processing based on the result. The embodiments of this application provides a vehicle-to-everything abnormal behavior detection method, to ensure security of a V2X network and autonomous driving, avoid interference to autonomous driving of a legal vehicle, avoid computing resources consumption of the legal vehicle, and avoid traffic chaos that is caused by an attacker and that endangers security of a driver and a passenger.

It should be noted that, for brief description, the foregoing method embodiments are represented as a series of actions. However, a person skilled in the art should appreciate that this application is not limited to the described order of the actions, because according to this application, some steps may be performed in another order or simultaneously. A person skilled in the art should further appreciate that the embodiments described in this specification all belong to preferred embodiments, and the actions and modules are not necessarily required for this application.

To better implement the foregoing solutions in the embodiments of this application, the following further provides related apparatuses for implementing the foregoing solutions.

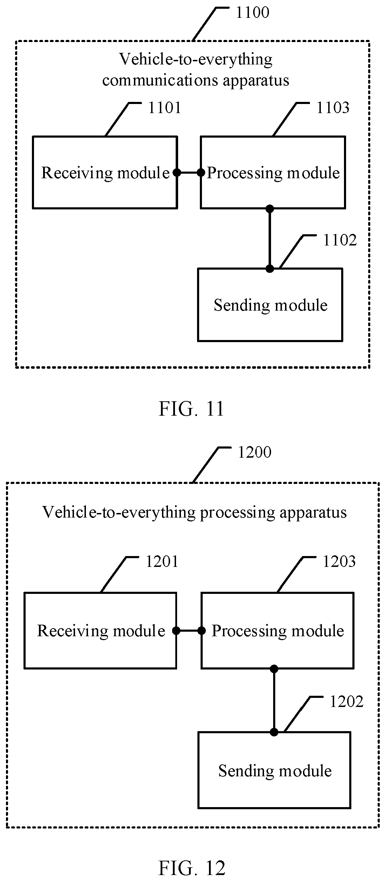

FIG. 11 is a schematic diagram of a composition structure of a vehicle-to-everything communications apparatus according to an embodiment of this application. The vehicle-to-everything communications apparatus may be a hardware composition structure of a vehicle-to-everything communications terminal, or a software apparatus deployed in the vehicle-to-everything communications terminal. The vehicle-to-everything communications apparatus includes a receiving module 1101, a sending module 1102, and a processing module 1103.

The processing module 1103 is configured to receive, through the receiving module 1101, a first vehicle-to-everything message sent by a vehicle-to-everything sending terminal.

The processing module 1103 is configured to determine, according to a first abnormal behavior detection policy, that the first vehicle-to-everything message is an abnormal message.

The processing module 1103 is configured to send a report message to a vehicle-to-everything server through the sending module 1102. The report message includes the first vehicle-to-everything message.

In some embodiments of this application, the processing module 1103 is configured to detect the first vehicle-to-everything message according to the first abnormal behavior detection policy, to obtain an abnormal behavior feature, and determine, based on the abnormal behavior feature, that the first vehicle-to-everything message is an abnormal message.

In some embodiments of this application, the abnormal behavior feature includes at least one of the following features: an abnormal permission behavior feature, an abnormal position behavior feature, an abnormal speed behavior feature, or an abnormal event behavior feature.

In some embodiments of this application, the abnormal permission behavior feature includes: An application identifier AID in a certificate of the vehicle-to-everything sending terminal does not include a sending permission corresponding to a type of the first vehicle-to-everything message, and/or a service specific permission SSP in the certificate of the vehicle-to-everything sending terminal does not include a terminal type in the first vehicle-to-everything message.

In some embodiments of this application, the abnormal position behavior feature includes:
a position difference between a vehicle position included in the first vehicle-to-everything message and a vehicle position of a vehicle-to-everything receiving terminal is greater than a geographical position spoofing threshold; and/or
when the first vehicle-to-everything message is a message sent by the vehicle-to-everything sending terminal for a first time, the difference between the vehicle position included in the first vehicle-to-everything message and the vehicle position of the vehicle-to-everything receiving terminal is less than a first message position threshold.

In some embodiments of this application, the abnormal speed behavior feature includes:
a speed difference between a vehicle speed corresponding to event content included in the first vehicle-to-everything message and a vehicle speed reported by the vehicle-to-everything sending terminal is greater than a first speed threshold; and/or
speed differences between a vehicle speed included in the first vehicle-to-everything message and vehicle speeds reported by a plurality of vehicle-to-everything sending terminals located in a same position area are greater than a second speed threshold; and/or
a speed value obtained by dividing a position difference between a first historical position of the vehicle-to-everything sending terminal and a current vehicle position reported by the vehicle-to-everything sending terminal by a time difference is greater than a third speed threshold, where the time difference is a difference between a time stamp corresponding to the first historical position and a time stamp corresponding to the current vehicle position of the vehicle-to-everything sending terminal.

In some embodiments of this application, the abnormal event behavior feature includes:
the event content included in the first vehicle-to-everything message is different from event content separately included in a plurality of vehicle-to-everything messages received by the vehicle-to-everything receiving terminal from a same position area; and/or
information collected by a vehicle sensor of the vehicle-to-everything receiving terminal does not match the event content included in the first vehicle-to-everything message.

In some embodiments of this application, the processing module 1103 is further configured to: after determining, based on the abnormal behavior feature, that the first vehicle-to-everything message is an abnormal message, obtain a quantity of occurrences of the abnormal behavior feature of the vehicle-to-everything sending terminal in a first time period, and obtain a total quantity of occurrences of the abnormal behavior feature in a second time period. The second time period is greater than the first time period. When the quantity of occurrences of the abnormal behavior feature in the first time period is greater than a first abnormal behavior threshold, and/or the total quantity of occurrences of the abnormal behavior feature in the second time period is greater than a second abnormal behavior threshold, the processing module 1103 determines that the vehicle-to-everything sending terminal has an abnormal behavior.

In some embodiments of this application, the processing module 1103 is further configured to add the vehicle-to-everything sending terminal to a blacklist after determining that the vehicle-to-everything sending terminal has an abnormal behavior. The blacklist is used to intercept a vehicle-to-everything message received by the vehicle-to-everything receiving terminal.

In some embodiments of this application, the processing module 1103 is further configured to: before receiving, through the receiving module 1101, the first vehicle-to-everything message sent by the vehicle-to-everything sending terminal, obtain the first abnormal behavior detection policy sent by the vehicle-to-everything server.

In some embodiments of this application, the processing module 1103 is further configured to: after sending the report message to the vehicle-to-everything server through the sending module 1102, receive, through the receiving module 1101, a report message response sent by the vehicle-to-everything server, and determine, based on the report message response, whether the vehicle-to-everything sending terminal has an abnormal behavior.

In some embodiments of this application, the processing module 1103 is further configured to: after determining, based on the report message response, whether the vehicle-to-everything sending terminal has an abnormal behavior, add the vehicle-to-everything sending terminal to the blacklist when the vehicle-to-everything sending terminal has an abnormal behavior. The blacklist is used to intercept the vehicle-to-everything message received by the vehicle-to-everything receiving terminal.

In some embodiments of this application, the processing module 1103 is further configured to perform a vehicle-to-everything certificate processing method performed by the foregoing vehicle-to-everything communications terminal.

FIG. 12 is a schematic diagram of a composition structure of a vehicle-to-everything processing apparatus according to an embodiment of this application. The vehicle-to-everything processing apparatus may be a hardware composition structure of a vehicle-to-everything server, or a software apparatus deployed in the vehicle-to-everything server. The vehicle-to-everything processing apparatus includes a receiving module 1201, a sending module 1202, and a processing module 1203.

The processing module 1203 is configured to receive, through the receiving module 1201, a report message sent by a vehicle-to-everything receiving terminal. The report message includes a first vehicle-to-everything message sent by a vehicle-to-everything sending terminal.

The processing module 1203 is configured to determine, according to a second abnormal behavior detection policy and the report message, whether the vehicle-to-everything receiving terminal has an abnormal behavior.

The processing module 1203 is configured to determine, according to a third abnormal behavior detection policy and the first vehicle-to-everything message, whether the vehicle-to-everything sending terminal has an abnormal behavior.

In some embodiments of this application, a vehicle communications system further includes a plurality of certificate authorities, and the report message includes a certificate of the vehicle-to-everything receiving terminal.

The processing module 1203 is configured to: obtain a plurality of certificates of the vehicle-to-everything receiving terminal from a first certificate authority, where the first certificate authority is configured to issue a plurality of certificates to the vehicle-to-everything receiving terminal; determine, based on the plurality of certificates of the vehicle-to-everything receiving terminal, a total quantity of reports of the vehicle-to-everything receiving terminal; and determine, based on the total quantity of reports, whether the vehicle-to-everything receiving terminal has an abnormal behavior.

In some embodiments of this application, the vehicle communications system includes a plurality of vehicle-to-everything receiving terminals, and the vehicle communications system further includes a plurality of certificate authorities.

The processing module 1203 is configured to: obtain a plurality of certificates of the vehicle-to-everything sending terminal from a second certificate authority, where the second certificate authority is configured to issue a plurality of certificates to the vehicle-to-everything sending terminal; determine, based on the plurality of certificates of the vehicle-to-everything sending terminal and the first vehicle-to-everything message, a first total quantity of reports of the plurality of vehicle-to-everything receiving terminals, where the first total quantity of reports is a total quantity of reports of the plurality of vehicle-to-everything receiving terminals for the vehicle-to-everything sending terminal or for the first vehicle-to-everything message; and determine, based on the first total quantity of reports of the plurality of vehicle-to-everything receiving terminals, whether the vehicle-to-everything sending terminal has an abnormal behavior.

In some embodiments of this application, the vehicle communications system includes a plurality of vehicle-to-everything receiving terminals.

The processing module 1203 is configured to: receive, through the receiving module 1201, report messages separately sent by the plurality of vehicle-to-everything receiving terminals; detect, according to the third abnormal behavior detection policy, vehicle-to-everything messages separately carried in the plurality of report messages, to obtain a plurality of abnormal behavior features; and collect statistical analysis on the plurality of abnormal behavior features to obtain whether the vehicle-to-everything sending terminal has an abnormal behavior.

In some embodiments of this application, the abnormal behavior feature includes at least one of the following features: an abnormal permission behavior feature, an abnormal position behavior feature, an abnormal speed behavior feature, or an abnormal event behavior feature.

In some embodiments of this application, the abnormal permission behavior feature includes:
an application identifier AID in a certificate of the vehicle-to-everything sending terminal does not include a sending permission corresponding to a type of the first vehicle-to-everything message, and/or a service specific permission SSP in the certificate of the vehicle-to-everything sending terminal does not include a terminal type in the first vehicle-to-everything message.

In some embodiments of this application, the abnormal position behavior feature includes:
a position difference between a vehicle position included in the first vehicle-to-everything message and a vehicle position of the vehicle-to-everything receiving terminal is greater than a geographical position spoofing threshold; and/or
when the first vehicle-to-everything message is a message sent by the vehicle-to-everything sending terminal for a first time, the difference between the vehicle position included in the first vehicle-to-everything message and the vehicle position of the vehicle-to-everything receiving terminal is less than a first message position threshold.

In some embodiments of this application, the abnormal speed behavior feature includes:
a speed difference between a vehicle speed corresponding to event content included in the first vehicle-to-everything message and a vehicle speed reported by the vehicle-to-everything sending terminal is greater than a first speed threshold; and/or
speed differences between a vehicle speed included in the first vehicle-to-everything message and vehicle speeds reported by a plurality of vehicle-to-everything sending terminals located in a same position area are greater than a second speed threshold; and/or
a speed value obtained by dividing a position difference between a first historical position of the vehicle-to-everything sending terminal and a current vehicle position reported by the vehicle-to-everything sending terminal by a time difference is greater than a third speed threshold, where the time difference is a difference between a time stamp corresponding to the first historical position and a time stamp corresponding to the current vehicle position of the vehicle-to-everything sending terminal.

In some embodiments of this application, the abnormal event behavior feature includes:
the event content included in the first vehicle-to-everything message is different from event content separately included in a plurality of vehicle-to-everything messages received by the vehicle-to-everything receiving terminal from a same position area; and/or
information collected by a vehicle sensor of the vehicle-to-everything receiving terminal does not match the event content included in the first vehicle-to-everything message.

In some embodiments of this application, the processing module 1203 is configured to: obtain a quantity of occurrences of the plurality of abnormal behavior features of the vehicle-to-everything sending terminal in a first time period, and obtain a total quantity of occurrences of the plurality of abnormal behavior features in a second time period. The second time period is greater than the first time period. When the quantity of occurrences of the plurality of abnormal behavior features in the first time period is greater than a first abnormal behavior threshold, and/or the total quantity of occurrences of the plurality of abnormal behavior features in the second time period is greater than a second abnormal behavior threshold, the processing module 1203 determines that the vehicle-to-everything sending terminal has an abnormal behavior.

In some embodiments of this application, the vehicle communications system further includes a plurality of certificate authorities and a certificate revocation server. The processing module 1203 is further configured to send, through the sending module 1202, a first certificate revocation request to a third certificate authority. The first certificate revocation request includes a certificate of an abnormal vehicle-to-everything terminal. The third certificate authority is configured to request the certificate revocation server to revoke the certificate of the abnormal vehicle-to-everything terminal. The abnormal vehicle-to-everything terminal is the vehicle-to-everything sending terminal having an abnormal behavior and/or the vehicle-to-everything receiving terminal having an abnormal behavior. The processing module 1203 receives, through the receiving module 1201, a response, sent by the third certificate authority, that the certificate of the abnormal vehicle-to-everything terminal is revoked.

In some embodiments of this application, the vehicle communications system further includes a plurality of certificate authorities and a certificate revocation server. The processing module 1203 is further configured to send, through the sending module 1202, a second certificate revocation request to a third certificate authority. The second certificate revocation request includes a certificate of an abnormal vehicle-to-everything terminal. The abnormal vehicle-to-everything terminal is the vehicle-to-everything sending terminal having an abnormal behavior and/or the vehicle-to-everything receiving terminal having an abnormal behavior. The processing module 1203 receives, through the receiving module 1201, a response sent by the third certificate authority after the third certificate authority adds at least one certificate of the abnormal vehicle-to-everything terminal to a blacklist, sends a third certificate revocation request to the certificate revocation server, and receives, through the receiving module 1201, a response, sent by the certificate revocation server, that the certificate of the abnormal vehicle-to-everything terminal is revoked.

In some embodiments of this application, the vehicle communications system further includes a certificate revocation server. The processing module 1203 is further configured to send, through the sending module 1202, a fourth certificate revocation request to the certificate revocation server. The fourth certificate revocation request includes a certificate of an abnormal vehicle-to-everything terminal. The abnormal vehicle-to-everything terminal is the vehicle-to-everything sending terminal having an abnormal behavior and/or the vehicle-to-everything receiving terminal having an abnormal behavior. The processing module 1203 receives, through the receiving module 1201, a response, sent by the certificate revocation server, that the certificate of the abnormal vehicle-to-everything terminal is revoked.

In some embodiments of this application, the plurality of certificate authorities includes a plurality of enrollment authorities and a plurality of authorization authorities.

The processing module 1203 is configured to: classify an abnormal behavior of the abnormal vehicle-to-everything terminal to obtain an abnormality level; when the abnormality level is a first abnormality level, separately determine the third certificate authority from the plurality of enrollment authorities and the plurality of authorization authorities; or when the abnormality level is a second abnormality level, determine the third certificate authority from the plurality of authorization authorities.

In some embodiments of this application, the processing module 1203 is further configured to: after determining the third certificate authority, generate revocation reason information based on the abnormal behavior of the abnormal vehicle-to-everything terminal, and send the revocation reason information and the abnormality level to the third certificate authority through the sending module 1202.

In some embodiments of this application, the processing module 1203 is further configured to: after determining, according to the third abnormal behavior detection policy and the first vehicle-to-everything message, whether the vehicle-to-everything sending terminal has an abnormal behavior, generate a report message response, where the report message response is used to indicate whether the vehicle-to-everything sending terminal has an abnormal behavior; and send the report message response to the vehicle-to-everything receiving terminal through the sending module 1202.

In some embodiments of this application, the processing module 1203 is further configured to: before receiving, through the receiving module 1201, the report message sent by the vehicle-to-everything receiving terminal, send the first abnormal behavior detection policy to the vehicle-to-everything receiving terminal through the sending module 1202.

In some embodiments of this application, the processing module 1203 is further configured to: when the vehicle-to-everything receiving terminal has no abnormal behavior, determine, according to the third abnormal behavior detection policy and the first vehicle-to-everything message, whether the vehicle-to-everything sending terminal has an abnormal behavior.

In some embodiment of this application, the processing module 1203 is further configured to perform the vehicle-to-everything abnormal behavior detection method performed by the foregoing vehicle-to-everything server.

It should be noted that content such as information exchange between the modules/units of the apparatus and the execution processes thereof is based on the same idea as the method embodiments of this application, and produces the same technical effects as the method embodiments of this application. For the specific content, refer to the foregoing description in the method embodiments of this application. Details are not described herein again.

An embodiment of this application further provides a computer storage medium. The computer storage medium stores a program. The program executes some or all of the steps described in the method embodiments.

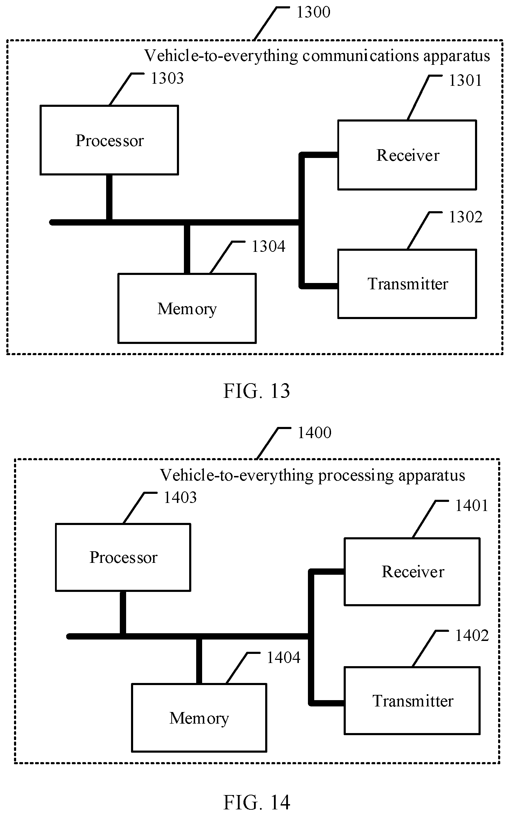

The following describes another vehicle-to-everything communications apparatus provided in an embodiment of this application. Refer to FIG. 13. A vehicle-to-everything communications apparatus 1300 includes:
a receiver 1301, a transmitter 1302, a processor 1303, and a memory 1304 (there may be one or more processors 1303 in the vehicle-to-everything communications apparatus 1300, and one processor is used as an example in FIG. 13). In some embodiments of this application, the receiver 1301, the transmitter 1302, the processor 1303, and the memory 1304 may be connected through a bus or in another manner. An example in which the bus is used for connection is described in FIG. 13.

The memory 1304 may include a read-only memory and a random access memory, and provide an instruction and data to the processor 1303. A part of the memory 1304 may further include a non-volatile random access memory (non-volatile random access memory, NVRAM). The memory 1304 stores an operating system and an operation instruction, an executable module or a data structure, a subnet thereof, or an extended set thereof. The operation instruction may include various operation instructions to implement various operations. The operating system may include various system programs, to implement various basic services and process hardware-based tasks.

The processor 1303 controls an operation of the vehicle-to-everything communications apparatus, and the processor 1303 may also be referred to as a central processing unit (central processing unit, CPU). In specific application, components of the vehicle-to-everything communications apparatus are coupled together through a bus system. In addition to a data bus, the bus system may further include a power bus, a control bus, a status signal bus, and the like. However, for clear description, various types of buses in the figure are marked as the bus system.

The method disclosed in the foregoing embodiment of this application may be applied to the processor 1303 or may be implemented by the processor 1303. The processor 1303 may be an integrated circuit chip and has a signal processing capability. In an implementation process, steps in the foregoing method may be implemented through a hardware integrated logical circuit in the processor 1303, or an instruction in a form of software. The processor 1303 may be a general-purpose processor, a digital signal processor (digital signal processor, DSP), an application specific integrated circuit (application specific integrated circuit, ASIC), a field-programmable gate array (field-programmable gate array, FPGA) or another programmable logical device, a discrete gate or transistor logic device, or a discrete hardware component. The methods, steps, and logical block diagrams that are disclosed in the embodiments of this application may be implemented or performed. The general-purpose processor may be a microprocessor, or the processor may be any conventional processor or the like. The steps of the method disclosed with reference to the embodiments of this application may be directly executed and completed by a hardware decoding processor, or may be executed and completed by a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory 1304, and the processor 1303 reads information in the memory 1304 and completes the steps in the method in combination with hardware of the processor.

The receiver 1301 may be configured to: receive input digit or character information, and generate signal input related to a related setting and function control of the vehicle-to-everything communications apparatus. The transmitter 1302 may include a display device such as a display screen. The transmitter 1302 may be configured to output the digit or character information through an external interface.

In this embodiment of this application, the processor 1303 is further configured to perform the vehicle-to-everything abnormal behavior detection method performed by the foregoing vehicle-to-everything receiving terminal.

The following describes another vehicle-to-everything processing apparatus provided in an embodiment of this application. Refer to FIG. 14. A vehicle-to-everything processing apparatus 1400 includes:
a receiver 1401, a transmitter 1402, a processor 1403, and a memory 1404 (there may be one or more processors 1403 in the vehicle-to-everything processing apparatus 1400, and one processor is used as an example in FIG. 14). In some embodiments of this application, the receiver 1401, the transmitter 1402, the processor 1403, and the memory 1404 may be connected through a bus or in another manner. An example in which the bus is used for connection is described in FIG. 14.

The memory 1404 may include a read-only memory and a random access memory, and provide an instruction and data to the processor 1403. A part of the memory 1404 may further include an NVRAM. The memory 1404 stores an operating system and an operation instruction, an executable module or a data structure, a subnet thereof, or an extended set thereof. The operation instruction may include various operation instructions to implement various operations. The operating system may include various system programs, to implement various basic services and process hardware-based tasks.

The processor 1403 controls an operation of the vehicle-to-everything processing apparatus, and the processor 1403 may also be referred to as a CPU. In specific application, components of the vehicle-to-everything processing apparatus are coupled together through a bus system. In addition to a data bus, the bus system may further include a power bus, a control bus, a status signal bus, and the like. However, for clear description, various types of buses in the figure are marked as the bus system.

The method disclosed in the foregoing embodiment of this application may be applied to the processor 1403 or may be implemented by the processor 1403. The processor 1403 may be an integrated circuit chip and has a signal processing capability. In an implementation process, steps in the foregoing methods can be implemented through a hardware integrated logical circuit in the processor 1403, or according to instructions in a form of software. The foregoing processor 1403 may be a general-purpose processor, a DSP, an ASIC, an FPGA or another programmable logical device, a discrete gate or transistor logic device, or a discrete hardware component. The methods, steps, and logical block diagrams that are disclosed in the embodiments of this application may be implemented or performed. The general-purpose processor may be a microprocessor, or the processor may be any conventional processor or the like. The steps of the method disclosed with reference to the embodiments of this application may be directly executed and completed by a hardware decoding processor, or may be executed and completed by a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory 1404, and a processor 1403 reads information in the memory 1404 and completes the steps in the method in combination with hardware of the processor.

In this embodiment of this application, the processor 1403 is further configured to perform the vehicle-to-everything abnormal behavior detection method performed by the foregoing vehicle-to-everything server.

In another possible design, when the apparatus is a chip, the chip includes a processing unit and a communications unit. The processing unit may be, for example, a processor, and the communications unit may be, for example, an input/output interface, a pin, or a circuit. The processing unit may execute a computer-executable instruction stored in a storage unit, so that a chip in the apparatus is enabled to perform the signal transmission method according to any one of the possible implementations of the first aspect. Optionally, the storage unit may be a storage unit in the chip, such as a register or a buffer, or the storage unit may be a storage unit in the apparatus but outside the chip, such as a read-only memory (read-only memory, ROM), another type of static storage device capable of storing static information and instructions, or a random access memory (random access memory, RAM).

The processor mentioned anywhere above may be a general-purpose central processing unit, a microprocessor, an ASIC, or one or more integrated circuits for controlling program execution of the method in the first aspect.

In addition, it should be noted that the described apparatus embodiment is merely an example. The units described as separate parts may or may not be physically separate, and parts displayed as units may or may not be physical units, may be located in one position, or may be distributed on a plurality of network units. Some or all the modules may be selected according to an actual need to achieve the objectives of the solutions of the embodiments. In addition, in the accompanying drawings of the apparatus embodiments provided in this application, connection relationships between modules indicate that the modules have communication connections with each other, which may be specifically implemented as one or more communications buses or signal cables.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any function that can be performed by a computer program can be easily implemented by corresponding hardware. Moreover, a specific hardware structure used to achieve a same function may be of various forms, for example, in a form of an analog circuit, a digital circuit, a dedicated circuit, or the like. However, as for this application, software program implementation is a better implementation in most cases. Based on such an understanding, the technical solutions of this application essentially or the part contributing to the prior art may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a server, or a network device) to perform the methods described in the embodiments of this application.

All or some of the foregoing embodiments may be implemented through software, hardware, firmware, or any combination thereof. When the software is used to implement the embodiments, all or some of the embodiments may be implemented in a form of a computer program product.

The computer program product includes one or more computer instructions. When the computer program instructions are loaded and executed on the computer, the procedure or functions according to the embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (SSD)), or the like.

## Claims

1. A vehicle-to-everything abnormal behavior detection method, wherein the method comprises:
receiving (504), by a vehicle-to-everything server, a report message sent by a vehicle-to-everything receiving terminal, wherein the report message comprises a first vehicle-to-everything message sent by a vehicle-to-everything sending terminal;
determining (505), by the vehicle-to-everything server according to a second abnormal behavior detection policy and the report message, whether the vehicle-to-everything receiving terminal has an abnormal behavior; and
determining (506), by the vehicle-to-everything server according to a third abnormal behavior detection policy and the first vehicle-to-everything message, whether the vehicle-to-everything sending terminal has an abnormal behavior.

2. The method according to claim 1, wherein the vehicle communications system further comprises a plurality of certificate authorities, and the report message comprises a certificate of the vehicle-to-everything receiving terminal; and
the determining, by the vehicle-to-everything server according to a second abnormal behavior detection policy and the report message, whether the vehicle-to-everything receiving terminal has an abnormal behavior comprises:
obtaining, by the vehicle-to-everything server, a plurality of certificates of the vehicle-to-everything receiving terminal from a first certificate authority, wherein the first certificate authority is configured to issue a plurality of certificates to the vehicle-to-everything receiving terminal;
determining, by the vehicle-to-everything server, a total quantity of reports of the vehicle-to-everything receiving terminal based on the plurality of certificates of the vehicle-to-everything receiving terminal; and
determining, by the vehicle-to-everything server based on the total quantity of reports, whether the vehicle-to-everything receiving terminal has an abnormal behavior.

3. The method according to claim 1 or 2, wherein the vehicle communications system comprises a plurality of vehicle-to-everything receiving terminals, and the vehicle communications system further comprises a plurality of certificate authorities; and
the determining, by the vehicle-to-everything server according to a third abnormal behavior detection policy and the first vehicle-to-everything message, whether the vehicle-to-everything sending terminal has an abnormal behavior comprises:
obtaining, by the vehicle-to-everything server, a plurality of certificates of the vehicle-to-everything sending terminal from a second certificate authority, wherein the second certificate authority is configured to issue a plurality of certificates to the vehicle-to-everything sending terminal;
determining, by the vehicle-to-everything server based on the plurality of certificates of the vehicle-to-everything sending terminal and the first vehicle-to-everything message, a first total quantity of reports of the plurality of vehicle-to-everything receiving terminals, wherein the first total quantity of reports is a total quantity of reports of the plurality of vehicle-to-everything receiving terminals for the vehicle-to-everything sending terminal or for the first vehicle-to-everything message; and
determining, by the vehicle-to-everything server based on the first total quantity of reports of the plurality of vehicle-to-everything receiving terminals, whether the vehicle-to-everything sending terminal has an abnormal behavior.

4. The method according to claim 1 or 2, wherein the vehicle communications system comprises a plurality of vehicle-to-everything receiving terminals; and
the determining, by the vehicle-to-everything server according to a third abnormal behavior detection policy and the first vehicle-to-everything message, whether the vehicle-to-everything sending terminal has an abnormal behavior comprises:
receiving, by the vehicle-to-everything server, report messages separately sent by the plurality of vehicle-to-everything receiving terminals;
detecting, by the vehicle-to-everything server according to the third abnormal behavior detection policy, vehicle-to-everything messages separately carried in the plurality of report messages, to obtain a plurality of abnormal behavior features; and
performing, by the vehicle-to-everything server, statistical analysis on the plurality of abnormal behavior features to obtain whether the vehicle-to-everything sending terminal has an abnormal behavior.

5. The method according to claim 4, wherein the abnormal behavior feature comprises at least one of the following features: an abnormal permission behavior feature, an abnormal position behavior feature, an abnormal speed behavior feature, or an abnormal event behavior feature.

6. The method according to any one of claims 1 to 5, wherein the vehicle communications system further comprises a certificate revocation server, and the method further comprises:
sending, by the vehicle-to-everything server, a fourth certificate revocation request to the certificate revocation server, wherein the fourth certificate revocation request comprises a certificate of an abnormal vehicle-to-everything terminal, and the abnormal vehicle-to-everything terminal is the vehicle-to-everything sending terminal having an abnormal behavior and/or the vehicle-to-everything receiving terminal having an abnormal behavior;
receiving, by the vehicle-to-everything server, a response, sent by the certificate revocation server, that the certificate of the abnormal vehicle-to-everything terminal is revoked.

7. The method according to any one of claims 1 to 6, wherein after the determining, by the vehicle-to-everything server according to a third abnormal behavior detection policy and the first vehicle-to-everything message, whether the vehicle-to-everything sending terminal has an abnormal behavior, the method further comprises:
generating, by the vehicle-to-everything server, a report message response, wherein the report message response is used to indicate whether the vehicle-to-everything sending terminal has an abnormal behavior; and
sending, by the vehicle-to-everything server, the report message response to the vehicle-to-everything receiving terminal.

8. The method according to any one of claims 1 to 7, wherein the determining, by the vehicle-to-everything server according to a third abnormal behavior detection policy and the first vehicle-to-everything message, whether the vehicle-to-everything sending terminal has an abnormal behavior comprises:
when the vehicle-to-everything receiving terminal has no abnormal behavior, determining, by the vehicle-to-everything server according to the third abnormal behavior detection policy and the first vehicle-to-everything message, whether the vehicle-to-everything sending terminal has an abnormal behavior.

9. A vehicle-to-everything processing server (1400), wherein the vehicle-to-everything processing server comprises a processor (1403) and a memory (1404), and the processor (1403) and the memory (1404) communicate with each other;
the memory (1404) is configured to store an instruction; and
the processor (1403) is configured to execute the instruction in the memory (1404), to perform the method according to any one of claims 1 to 8.

## Patentansprüche

1. Verfahren zur Erkennung von abnormalem Vehicle-to-Everything-Verhalten, wobei das Verfahren Folgendes umfasst:
Empfangen (504), durch einen Vehicle-to-Everything-Server, einer Berichtsnachricht, die von einem Vehicle-to-Everything-Empfangsendgerät gesendet wird, wobei die Berichtsnachricht eine erste Vehicle-to-Everything-Nachricht umfasst, die von einem Vehicle-to-Everything-Sendeendgerät gesendet wird;
Bestimmen (505), durch den Vehicle-to-Everything-Server gemäß einer zweiten Richtlinie zur Erkennung von abnormalem Verhalten und der Berichtsnachricht, ob das Vehicle-to-Everything-Empfangsendgerät ein abnormales Verhalten aufweist; und
Bestimmen (506), durch den Vehicle-to-Everything-Server gemäß einer dritten Richtlinie zur Erkennung von abnormalem Verhalten und der ersten Vehicle-to-Everything-Nachricht, ob das Vehicle-to-Everything-Sendeendgerät ein abnormales Verhalten aufweist.

2. Verfahren nach Anspruch 1, wobei das Fahrzeugkommunikationssystem ferner eine Vielzahl von Zertifizierungsstellen umfasst und die Berichtsnachricht ein Zertifikat des Vehicle-to-Everything-Empfangsendgeräts umfasst; und
das Bestimmen, durch den Vehicle-to-Everything-Server gemäß einer zweiten Richtlinie zur Erkennung von abnormalem Verhalten und der Berichtsnachricht, ob das Vehicle-to-Everything-Empfangsendgerät ein abnormales Verhalten aufweist, Folgendes umfasst:
Erlangen, durch den Vehicle-to-Everything-Server, einer Vielzahl von Zertifikaten des Vehicle-to-Everything-Empfangsendgeräts von einer ersten Zertifizierungsstelle, wobei die erste Zertifizierungsstelle dazu konfiguriert ist, eine Vielzahl von Zertifikaten an das Vehicle-to-Everything-Empfangsendgerät auszustellen;
Bestimmen, durch den Vehicle-to-Everything-Server, einer Gesamtmenge von Berichten des Vehicle-to-Everything-Empfangsendgeräts basierend auf der Vielzahl von Zertifikaten des Vehicle-to-Everything-Empfangsendgeräts; und
Bestimmen, durch den Vehicle-to-Everything-Server basierend auf der Gesamtmenge von Berichten, ob das Vehicle-to-Everything-Empfangsendgerät ein abnormales Verhalten aufweist.

3. Verfahren nach Anspruch 1 oder 2, wobei das Fahrzeugkommunikationssystem eine Vielzahl von Vehicle-to-Everything-Empfangsendgeräten umfasst und das Fahrzeugkommunikationssystem ferner eine Vielzahl von Zertifizierungsstellen umfasst; und
das Bestimmen, durch den Vehicle-to-Everything-Server gemäß einer dritten Richtlinie zur Erkennung von abnormalem Verhalten und der ersten Vehicle-to-Everything-Nachricht, ob das Vehicle-to-Everything-Sendeendgerät ein abnormales Verhalten aufweist, Folgendes umfasst:
Erlangen, durch den Vehicle-to-Everything-Server, einer Vielzahl von Zertifikaten des Vehicle-to-Everything-Sendeendgeräts von einer zweiten Zertifizierungsstelle, wobei die zweite Zertifizierungsstelle dazu konfiguriert ist, eine Vielzahl von Zertifikaten an das Vehicle-to-Everything-Sendeendgerät auszustellen;
Bestimmen, durch den Vehicle-to-Everything-Server basierend auf der Vielzahl von Zertifikaten des Vehicle-to-Everything-Sendeendgeräts und der ersten Vehicle-to-Everything-Nachricht, einer ersten Gesamtmenge von Berichten der Vielzahl von Vehicle-to-Everything-Empfangsendgeräten, wobei die erste Gesamtmenge von Berichten eine Gesamtmenge von Berichten der Vielzahl von Vehicle-to-Everything-Empfangsendgeräten für das Vehicle-to-Everything-Sendeendgerät oder für die erste Vehicle-to-Everything-Nachricht ist; und
Bestimmen, durch den Vehicle-to-Everything-Server basierend auf der ersten Gesamtmenge von Berichten der Vielzahl von Vehicle-to-Everything-Empfangsendgeräten, ob das Vehicle-to-Everything-Sendeendgerät ein abnormales Verhalten aufweist.

4. Verfahren nach Anspruch 1 oder 2, wobei das Fahrzeugkommunikationssystem eine Vielzahl von Vehicle-to-Everything-Empfangsendgeräten umfasst; und
das Bestimmen, durch den Vehicle-to-Everything-Server gemäß einer dritten Richtlinie zur Erkennung von abnormalem Verhalten und der ersten Vehicle-to-Everything-Nachricht, ob das Vehicle-to-Everything-Sendeendgerät ein abnormales Verhalten aufweist, Folgendes umfasst:
Empfangen, durch den Vehicle-to-Everything-Server, von Berichtsnachrichten, die separat durch die Vielzahl von Vehicle-to-Everything-Empfangsendgeräten gesendet werden;
Erkennen, durch den Vehicle-to-Everything-Server gemäß der dritten Richtlinie zur Erkennung von abnormalem Verhalten, von Vehicle-to-Everything-Nachrichten, die separat in der Vielzahl von Berichtsnachrichten getragen werden, um eine Vielzahl von abnormalen Verhaltensmerkmalen zu erlangen; und
Durchführen, durch den Vehicle-to-Everything-Server, einer statistischen Analyse der Vielzahl von abnormalen Verhaltensmerkmalen, um zu erlangen, ob das Vehicle-to-Everything-Sendeendgerät ein abnormales Verhalten aufweist.

5. Verfahren nach Anspruch 4, wobei das abnormale Verhaltensmerkmal mindestens eines der folgenden Merkmale umfasst: ein abnormales Erlaubnisverhaltensmerkmal, ein abnormales Positionsverhaltensmerkmal, ein abnormales Geschwindigkeitsverhaltensmerkmal oder ein abnormales Ereignisverhaltensmerkmal.

6. Verfahren nach einem der Ansprüche 1 bis 5, wobei das Fahrzeugkommunikationssystem ferner einen Zertifikatswiderrufsserver umfasst und das Verfahren ferner Folgendes umfasst:
Senden, durch den Vehicle-to-Everything-Server, einer vierten Zertifikatswiderrufsanforderung an den Zertifikatswiderrufsserver, wobei die vierte Zertifikatswiderrufsanforderung ein Zertifikat eines abnormalen Vehicle-to-Everything-Endgeräts umfasst und das abnormale Vehicle-to-Everything-Endgerät das Vehicle-to-Everything-Sendeendgerät, das ein abnormales Verhalten aufweist, und/oder das Vehicle-to-Everything-Empfangsendgerät, das ein abnormales Verhalten aufweist, ist;
Empfangen, durch den Vehicle-to-Everything-Server, einer Antwort, die von dem Zertifikatswiderrufsserver gesendet wird,
dass das Zertifikat des abnormalen Vehicle-to-Everything-Endgeräts widerrufen wurde.

7. Verfahren nach einem der Ansprüche 1 bis 6, wobei das Verfahren, nach dem Bestimmen, durch den Vehicle-to-Everything-Server gemäß einer dritten Richtlinie zur Erkennung von abnormalem Verhalten und der ersten Vehicle-to-Everything-Nachricht, ob das Vehicle-to-Everything-Sendeendgerät ein abnormales Verhalten aufweist, ferner Folgendes umfasst:
Erzeugen, durch den Vehicle-to-Everything-Server, einer Berichtsnachrichtsantwort, wobei die Berichtsnachrichtsantwort verwendet wird, um anzuzeigen, ob das Vehicle-to-Everything-Sendeendgerät ein abnormales Verhalten aufweist; und
Senden, durch den Vehicle-to-Everything-Server, der Berichtsnachrichtsantwort an das Vehicle-to-Everything-Empfangsendgerät.

8. Verfahren nach einem der Ansprüche 1 bis 7, wobei das Bestimmen, durch den Vehicle-to-Everything-Server gemäß einer dritten Richtlinie zur Erkennung von abnormalem Verhalten und der ersten Vehicle-to-Everything-Nachricht, ob das Vehicle-to-Everything-Sendeendgerät ein abnormales Verhalten aufweist, Folgendes umfasst:
wenn das Vehicle-to-Everything-Empfangsendgerät kein abnormales Verhalten aufweist, Bestimmen, durch den Vehicle-to-Everything-Server gemäß der dritten Richtlinie zur Erkennung von abnormalem Verhalten und der ersten Vehicle-to-Everything-Nachricht, ob das Vehicle-to-Everything-Sendeendgerät ein abnormales Verhalten aufweist.

9. Vehicle-to-Everything-Verarbeitungsserver (1400), wobei der Vehicle-to-Everything-Verarbeitungsserver einen Prozessor (1403) und einen Speicher (1404) umfasst und der Prozessor (1403) und der Speicher (1404) miteinander kommunizieren;
der Speicher (1404) dazu konfiguriert ist, eine Anweisung zu speichern; und
der Prozessor (1403) dazu konfiguriert ist, die Anweisung in dem Speicher (1404) auszuführen, um das Verfahren nach einem der Ansprüche 1 bis 8 durchzuführen.

## Revendications

1. Procédé de détection de comportement anormal de véhicule à tout, le procédé comprenant :
la réception (504), par un serveur de véhicule à tout, d'un message de rapport envoyé par un terminal de réception de véhicule à tout, dans lequel le message de rapport comprend un premier message de véhicule à tout envoyé par un terminal d'envoi de véhicule à tout ;
le fait de déterminer (505), par le serveur de véhicule à tout selon une deuxième politique de détection de comportement anormal et le message de rapport, si le terminal de réception de véhicule à tout a un comportement anormal ; et
le fait de déterminer (506), par le serveur de véhicule à tout selon une troisième politique de détection de comportement anormal et le premier message de véhicule à tout, si le terminal d'envoi de véhicule à tout a un comportement anormal.

2. Procédé selon la revendication 1, dans lequel le système de communication de véhicule comprend également une pluralité d'autorités de certification, et le message de rapport comprend un certificat du terminal de réception de véhicule à tout ; et le fait de déterminer, par le serveur de véhicule à tout selon une deuxième politique de détection de comportement anormal et le message de rapport, si le terminal de réception de véhicule à tout a un comportement anormal comprend :
l'obtention, par le serveur de véhicule à tout, d'une pluralité de certificats du terminal de réception de véhicule à tout auprès d'une première autorité de certification, dans lequel la première autorité de certification est configurée pour délivrer une pluralité de certificats au terminal de réception de véhicule à tout ;
la détermination, par le serveur de véhicule à tout, d'une quantité totale de rapports du terminal de réception de véhicule à tout sur la base de la pluralité de certificats du terminal de réception de véhicule à tout ; et
le fait de déterminer, par le serveur de véhicule à tout sur la base de la quantité totale de rapports, si le terminal de réception de véhicule à tout a un comportement anormal.

3. Procédé selon la revendication 1 ou 2, dans lequel le système de communication de véhicule comprend une pluralité de terminaux de réception de véhicule à tout, et le système de communication de véhicule comprend également une pluralité d'autorités de certification ; et
le fait de déterminer, par le serveur de véhicule à tout selon une troisième politique de détection de comportement anormal et le premier message de véhicule à tout, si le terminal d'envoi de véhicule à tout a un comportement anormal comprend :
l'obtention, par le serveur de véhicule à tout, d'une pluralité de certificats du terminal d'envoi de véhicule à tout auprès d'une seconde autorité de certification, dans lequel la seconde autorité de certification est configurée pour délivrer une pluralité de certificats au terminal d'envoi de véhicule à tout ;
la détermination, par le serveur de véhicule à tout sur la base de la pluralité de certificats du terminal d'envoi de véhicule à tout et du premier message de véhicule à tout, d'une première quantité totale de rapports de la pluralité de terminaux de réception de véhicule à tout, dans lequel la première quantité totale de rapports est une quantité totale de rapports de la pluralité de terminaux de réception de véhicule à tout pour le terminal d'envoi de véhicule à tout ou pour le premier message de véhicule à tout ; et
le fait de déterminer, par le serveur de véhicule à tout sur la base de la première quantité totale de rapports de la pluralité de terminaux de réception de véhicule à tout, si le terminal d'envoi de véhicule à tout a un comportement anormal.

4. Procédé selon la revendication 1 ou 2, dans lequel le système de communication de véhicule comprend une pluralité de terminaux de réception de véhicule à tout ; et
le fait de déterminer, par le serveur de véhicule à tout selon une troisième politique de détection de comportement anormal et le premier message de véhicule à tout, si le terminal d'envoi de véhicule à tout a un comportement anormal comprend :
la réception, par le serveur de véhicule à tout, de messages de rapport envoyés séparément par la pluralité de terminaux de réception de véhicule à tout ;
la détection, par le serveur de véhicule à tout selon la troisième politique de détection de comportement anormal, de messages de véhicule à tout transportés séparément dans la pluralité de messages de rapport, pour obtenir une pluralité de caractéristiques de comportement anormal ; et
la réalisation, par le serveur de véhicule à tout, d'une analyse statistique sur la pluralité de caractéristiques de comportement anormal pour obtenir si le terminal d'envoi de véhicule à tout a un comportement anormal.

5. Procédé selon la revendication 4, dans lequel la caractéristique de comportement anormal comprend au moins l'une des caractéristiques suivantes : une caractéristique de comportement d'autorisation anormale, une caractéristique de comportement de position anormale, une caractéristique de comportement de vitesse anormale ou une caractéristique de comportement d'événement anormal.

6. Procédé selon l'une quelconque des revendications 1 à 5, dans lequel le système de communication de véhicule comprend également un serveur de révocation de certificat, et le procédé comprend également :
l'envoi, par le serveur de véhicule à tout, d'une quatrième demande de révocation de certificat au serveur de révocation de certificat, dans lequel la quatrième demande de révocation de certificat comprend un certificat d'un terminal de véhicule à tout anormal, et le terminal de véhicule à tout anormal est le terminal d'envoi de véhicule à tout ayant un comportement anormal et/ou le terminal de réception de véhicule à tout ayant un comportement anormal ;
la réception, par le serveur de véhicule à tout, d'une réponse, envoyée par le serveur de révocation de certificat, indiquant que le certificat du terminal de véhicule à tout anormal est révoqué.

7. Procédé selon l'une quelconque des revendications 1 à 6, dans lequel après le fait de déterminer, par le serveur de véhicule à tout selon une troisième politique de détection de comportement anormal et le premier message de véhicule à tout, si le terminal d'envoi de véhicule à tout a un comportement anormal, le procédé comprend également :
la génération, par le serveur de véhicule à tout, d'une réponse de message de rapport, dans lequel la réponse de message de rapport est utilisée pour indiquer si le terminal d'envoi de véhicule à tout a un comportement anormal ; et
l'envoi, par le serveur de véhicule à tout, de la réponse de message de rapport au terminal de réception de véhicule à tout.

8. Procédé selon l'une quelconque des revendications 1 à 7, dans lequel le fait de déterminer, par le serveur de véhicule à tout selon une troisième politique de détection de comportement anormal et le premier message de véhicule à tout, si le terminal d'envoi de véhicule à tout a un comportement anormal comprend :
lorsque le terminal de réception de véhicule à tout n'a pas de comportement anormal, le fait de déterminer, par le serveur de véhicule à tout selon la troisième politique de détection de comportement anormal et le premier message de véhicule à tout, si le terminal d'envoi de véhicule à tout a un comportement anormal.

9. Serveur de traitement de véhicule à tout (1400), dans lequel le serveur de traitement de véhicule à tout comprend un processeur (1403) et une mémoire (1404), et le processeur (1403) et la mémoire (1404) communiquent entre eux ;
la mémoire (1404) est configurée pour stocker une instruction ; et
le processeur (1403) est configuré pour exécuter l'instruction dans la mémoire (1404), pour réaliser le procédé selon l'une quelconque des revendications 1 à 8.
